(19) **Europäisches Patentamt**
**European Patent Office**
**Office européen des brevets**

(11) **EP 4 694 469 A1**

(12) **EUROPEAN PATENT APPLICATION**
published in accordance with Art. 153(4) EPC

(43) Date of publication:
**11.02.2026 Bulletin 2026/07**

(21) Application number: **24800264.4**

(22) Date of filing: **03.05.2024**

(51) International Patent Classification (IPC):
**H04W 72/12** (2023.01)   **H04W 72/23** (2023.01)
**H04L 5/00** (2006.01)   **H04W 8/24** (2009.01)

(52) Cooperative Patent Classification (CPC):
**H04L 5/00; H04W 8/24; H04W 72/12; H04W 72/23**

(86) International application number:
**PCT/KR2024/006011**

(87) International publication number:
**WO 2024/228583 (07.11.2024 Gazette 2024/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.05.2023 KR 20230058346**

(71) Applicant: **Samsung Electronics Co., Ltd.
Suwon-si, Gyeonggi-do 16677 (KR)**

(72) Inventors:
• **JANG, Youngrok**
  **Suwon-si, Gyeonggi-do 16677 (KR)**
• **JI, Hyoungju**
  **Suwon-si, Gyeonggi-do 16677 (KR)**
• **KIM, Younsun**
  **Suwon-si, Gyeonggi-do 16677 (KR)**

(74) Representative: **HGF**
**HGF Limited
4th Floor, 1 City Square
Leeds LS1 2AL (GB)**

(54) **MULTIPLE ACCESS TECHNOLOGY COEXISTENCE METHOD AND DEVICE IN COMMUNICATION SYSTEM**

(57)     The present disclosure relates to a 5G or 6G communication system for supporting higher data transmission rates. A method performed by means of a terminal in a communication system, according to one embodiment of the disclosure, comprises the steps of: receiving, from a first node, information related to the first node; transmitting, to a second node, the information related to the first node; and receiving scheduling information from the second node, wherein the scheduling information received from the second node is based on the information related to the first node, the information related to the first node includes information about a signal from the first node, and a time-frequency resource scheduled by means of the scheduling information received from the second node is scheduled so as not to overlap with a time-frequency resource for the signal from the first node.

FIG. 1

**Description**

**[Technical Field]**

The disclosure relates to terminal and base station operations in a communication system. More particularly, the disclosure relates to a multiple access technology coexistence method in a communication system and a device capable of performing the same.

**[Background Art]**

A 5G mobile communication technology defines wide frequency bands to allow a fast transmission rate and a new service and can be implemented not only in a frequency band equal to or lower than 6 gigahertz (GHz) ('Sub 6GHz') such as 3.5 GHz but also in an ultra-high frequency band ('Above 6GHz') called a millimeter wave (mmWave) such as 28 GHz and 39 GHz. Further, in the case of a 6G mobile communication technology called a system after 5G communication (beyond 5G), implementation in a terahertz band (for example, a band from 95 GHz to 3 terahertz (THz)) is considered to achieve a transmission rate 50 times faster than the 5G mobile communication technology and ultra-low latency 10 times shorter than the 5G mobile communication technology.

At the beginning of 5G mobile communication technology, for the purposes of supporting an ultra-wideband service (enhanced mobile broadband:eMBB) and services for ultra-reliable low-latency communications (URLLC) and massive machine-type communications (mMTC) and meeting performance requirements, the standardization has been progressed for beamforming for mitigating propagation path loss and increasing a propagation arrival distance in an ultra-high frequency band, massive multiple-input multiple-output (massive MIMO), supporting of various numerologies for efficiently using ultra-high frequency resources (operation of a plurality of subcarrier spacings and the like), the dynamic operation of slot formats, initial access technology for supporting multibeam transmission and a broadband, the definition and operation of a bandwidth part (BWP), a new channel coding method such as a low density parity check (LDPC) code for large-capacity data transmission and a Polar code for high-reliable transmission of control information, L2 preprocessing, network slicing that provides a dedicated network specialized for a specific service, and the like.

Currently, the discussion on the improvement of initial 5G mobile communication technology and performance enhancement thereof is being conducted in consideration of services that the 5G mobile communication technology intended to support, and the physical layer standardization is being progressed for vehicle-to-everything (V2X) for helping an autonomous vehicle in driving determination, based on its own location and state information that the vehicle transmits, so as to increase convenience of the user, new radio unlicensed (NR-U) that aims at a system operation meeting requirements according to various regulations in an unlicensed band, NR UE low power consumption technology (UE power saving), a non-terrestrial network (NTN) corresponding to direct communication between the UE and a satellite for securing the coverage in an area in which communication with a terrestrial network is not possible, location measurement (positioning), and the like.

Further, the standardization is also being progressed for wireless interface architecture/protocol fields for technology such as an intelligent factory (industrial Internet of things (IIoT)) for supporting a new service through a link and convergence with other industrials, an integrated access and backhaul (IAB) that provides a node for expanding a network service area by integratively supporting a wireless backhaul link and an access link, mobility enhancement technology including conditional handover and dual active protocol stack (DAPS) handover, and 2-step random access (2-step RACH for NR) that simplifies a random access procedure, and the standardization of system architecture/service fields is also in progress for 5G baseline architecture (for example, service-based architecture or service-based interface) for grafting network function virtualization (NFV) on software-defined networking (SDN) technology, mobile edge computing (MEC) that receives a service, based on the UE location, and the like.

When the 5G mobile communication system is commercialized, connected devices which are growing explosively will be connected to a communication network, and accordingly, it is expected to enhance functions and performance of the 5G mobile communication system and need an integrated operation of the connected devices. To this end, new research is scheduled to be conducted on extended reality (XR) for efficiently supporting augmented reality (AR), virtual reality (VR), mixed reality (MR), and the like, improvement of the performance and reduction in complexity for 5G using artificial intelligence (AI) and machine learning (ML), supporting of an AI service, supporting of a metaverse service, drone communication, and the like.

Further, the development of the 5G mobile communication system may be the foundation of the development of not only multi-antenna transmission technology such as a new waveform for guaranteeing the coverage in a terahertz band of the 6G mobile communication technology, full dimensional MIMO (FD-MIMO), an array antenna, and a large scale antenna, high-dimensional spatial multiplexing technology using a metamaterial-based lens and antenna and orbital angular momentum (OAM) to improve the coverage of signals in the terahertz band, and reconfigurable intelligent surface (RIS) technology but also full duplex technology for improving frequency efficiency of the 6G mobile communication technology and upgrading a system network, AI-based communication technology that realizes system optimization by using satellites and artificial intelligence (AI) from the design stage and internalizing an end-to-end AI supporting function, and next-generation distribution computing technology that realizes a complex service beyond the limit of UE calculation capability by using ultra high performance communication and computing resources.

[Disclosure of Invention]

[Technical Problem]

Disclosed embodiments provide a device and a method capable of effectively providing a service in a mobile communication system.

The technical problems to be solved in the disclosure are not be limited to the above mentioned technical problems, and other technical problems which are not mentioned may be clearly understood, through the following descriptions, by those skilled in the art of the disclosure.

[Solution to Problem]

A method performed by a terminal in a communication system according to an embodiment of the disclosure includes receiving information related to a first node from the first node, transmitting the information related to the first node to a second node, and receiving scheduling information from the second node, the scheduling information received from the second node being based on the information related to the first node, the information related to the first node includes information on a signal by the first node, and time-frequency resources scheduled by the scheduling information received from the second node are scheduled not to overlap time-frequency resources for the signal by the first node.

According to an embodiment of the disclosure, the method includes receiving information related to the second node from the second node, transmitting the information related to the second node to the first node, and receiving configuration information for a reference signal for channel state information from the first node, the information related to the second node includes information on a signal by the second node, and time-frequency resources for the reference signal configured by the configuration information are based on time-frequency resources for the signal by the second node.

According to an embodiment of the disclosure, time-frequency resources in the time-frequency resources for the reference signal which overlap the time-frequency resources for the signal by the second node are used for channel state information considering interference related to the second node, and time-frequency resources in the time-frequency resources for the reference signal which do not overlap the time-frequency resources for the signal by the second node are used for channel state information which does not consider interference related to the second node.

According to an embodiment of the disclosure, the method includes receiving scheduling information from the first node, the scheduling information received from the first node being based on the information related to the second node, and time-frequency resources scheduled by the scheduling information received from the first node are scheduled not to overlap the time-frequency resources for the signal by the second node.

According to an embodiment of the disclosure, the first node is based on a licensed band, and the second node is based on an unlicensed band, the signal by the first node includes one or more of a periodic signal, a broadcast signal, and a semi-persistent signal by the first node, the signal by the second node includes one or more of a periodic signal, a broadcast signal, and a semi-persistent signal by the second node, the information related to the first node further includes one or more pieces of information on a bandwidth of the first node configured in the licensed band, identifier information of the first node, information related to a waveform of the first node, information on subcarrier spacing (SCS) of the first node, information on a bandwidth part of the first node configured in the licensed band, information on a transmission and reception point (TRP) of the first node, information related to discontinuous transmission (DTX) of the first node, information related to discontinuous transmission (DRX) of the first node, or information related to duplex of the first node, and the information related to the second node further includes one or more pieces of information on a bandwidth of the second node configured in the unlicensed band, identifier information of the second node, information related to a waveform of the second node, information on SCS of the second node, information on a bandwidth part of the second node configured in the unlicensed band, information on a TRP of the second node, information related to DTX of the second node, information related to DRX of the second node, or information related to duplex of the second node.

According to an embodiment of the disclosure, the method includes, when the UE reports a UE capability indicating that simultaneous reception based on a plurality of beams is possible, receiving a signal from the first node, based on a first beam among the plurality of beams and receiving a signal from the second node, based on a second beam among the plurality of beams while the signal is received based on the first beam, and the UE capability is reported to one or more of the first node or the second node.

A terminal in a communication system according to an embodiment of the disclosure includes a transceiver and a processor connected to the transceiver, wherein the processor is configured to receive information related to a first node from the first node, transmit the information related to the first node to a second node, and receive scheduling information from the second node, the scheduling information received from the second node being based on the information related to the first node, the information related to the first node includes information on a signal by the first node, and time-frequency resources scheduled by the scheduling information received from the second node are scheduled not to overlap time-frequency resources for the signal by the first node.

According to an embodiment of the disclosure, the processor is configured to receive information related to the second node from the second node, transmit the information related to the second node to the first node, and receive configuration information for a reference signal for channel state information from the first node, wherein the information related to the second node includes information on a signal by the second node, and time-frequency resources for the reference signal configured by the configuration information are based on time-frequency resources for the signal by the second node.

According to an embodiment of the disclosure, time-frequency resources in the time-frequency resources for the reference signal which overlap the time-frequency resources for the signal by the second node are used for channel state information considering interference related to the second node, and time-frequency resources in the time-frequency resources for the reference signal which do not overlap the time-frequency resources for the signal by the second node are used for channel state information which does not consider interference related to the second node.

According to an embodiment of the disclosure, the processor is configured to receive scheduling information from the first node, the scheduling information received from the first node being based on the information related to the second node, and time-frequency resources scheduled by the scheduling information received from the first node are scheduled not to overlap the time-frequency resources for the signal by the second node.

According to an embodiment of the disclosure, the first node is based on a licensed band, and the second node is based on an unlicensed band, the signal by the first node includes one or more of a periodic signal, a broadcast signal, and a semi-persistent signal by the first node, the signal by the second node includes one or more of a periodic signal, a broadcast signal, and a semi-persistent signal by the second node, the information related to the first node further includes one or more pieces of information on a bandwidth of the first node configured in the licensed band, identifier information of the first node, information related to a waveform of the first node, information on subcarrier spacing (SCS) of the first node, information on a bandwidth part of the first node configured in the licensed band, information on a transmission and reception point (TRP) of the first node, information related to discontinuous transmission (DTX) of the first node, information related to discontinuous transmission (DRX) of the first node, or information related to duplex of the first node, and the information related to the second node further includes one or more pieces of information on a bandwidth of the second node configured in the unlicensed band, identifier information of the second node, information related to a waveform of the second node, information on SCS of the second node, information on a bandwidth part of the second node configured in the unlicensed band, information on a TRP of the second node, information related to DTX of the second node, information related to DRX of the second node, or information related to duplex of the second node.

According to an embodiment of the disclosure, the processor is configured to, when the UE reports a UE capability indicating that simultaneous reception based on a plurality of beams is possible, receive a signal from the first node, based on a first beam among the plurality of beams and receive a signal from the second node, based on a second beam among the plurality of beams while the signal is received based on the first beam, and the UE capability is reported to one or more of the first node or the second node.

A method performed by a first node in a communication system according to an embodiment of the disclosure includes acquiring information related to the first node, the information related to the first node including information on a signal by the first node, and transmitting the information related to the first node to a terminal, the information related to the first node is associated with scheduling information of a second node, and time-frequency resources scheduled by the scheduling information of the second node do not overlap time-frequency resources for the signal by the first node.

According to an embodiment of the disclosure, the method includes receiving information related to the second node from the terminal, acquiring configuration information for a reference signal for channel state information, based on the information related to the second node, and transmitting the configuration information to the terminal.

According to an embodiment of the disclosure, time-frequency resources in the time-frequency resources for the reference signal which overlap the time-frequency resources for the signal by the second node are configured for channel state information considering interference related to the second node, and time-frequency resources in the time-frequency resources for the reference signal which do not overlap the time-frequency resources for the signal by the second node are configured for channel state information which does not consider interference related to the second node.

According to an embodiment of the disclosure, the method includes transmitting scheduling information to the terminal, the scheduling information transmitted by the first node being based on the information related to the second node, and time-frequency resources scheduled by the scheduling information transmitted by the first node are scheduled not to overlap the time-frequency resources for the signal by the second node.

A first node in a communication system according to an embodiment of the disclosure includes a transceiver and a processor connected to the transceiver, and the processor is configured to acquire information related to the first node, the information related to the first node including information on a signal by the first node and transmit the information related to the first node to a terminal, the information related to the first node is associated with scheduling information of a second node, and time-frequency resources scheduled by the scheduling information of the second node do not overlap time-frequency resources for the signal by the first node.

According to an embodiment of the disclosure, the processor is configured to receive information related to the second node from the terminal, acquire configuration information for a reference signal for channel state information, based on the information related to the second node, and transmit the configuration information to the terminal.

The various embodiments of the disclosure are merely some of exemplary embodiments of the disclosure, and several embodiments in which technical features of various embodiments of the disclosure are reflected may be derived and understood by those skilled in the art, based on the detailed description described below.

## [Advantageous Effects of Invention]

Disclosed embodiments provide a device and a method capable of effectively providing a service in a mobile communication system.

The effects that can be realized by the disclosure are not limited to the above-described effects, and other effects that have not been mentioned may be clearly understood by those skilled in the art from the following description.

## [Brief Description of Drawings]

FIG. 1 is a diagram illustrating a basic structure of time-frequency domains in a wireless communication system according to an embodiment of the disclosure.

FIG. 2 is a diagram illustrating a frame, subframes, and a slot structure in the wireless communication system according to an embodiment of the disclosure.

FIG. 3 is a diagram illustrating an example of the bandwidth part configuration in the wireless communication system according to an embodiment of the disclosure.

FIG. 4 is a diagram illustrating an example of a DRX operation in the wireless communication system according to an embodiment of the disclosure.

FIG. 5 is a diagram illustrating a wireless protocol structure of a BS and a UE in a situation of single cell, carrier aggregation, and dual connectivity in the wireless communication system according to an embodiment of the disclosure.

FIG. 6 is a diagram illustrating a method by which the BS and the UE transmit and receive data in consideration of a downlink data channel and rate matching resources in the wireless communication system according to an embodiment of the disclosure.

FIG. 7 is a diagram illustrating an example of an uplink-downlink (UL/DL) configuration in the wireless communication system according to an embodiment of the disclosure.

FIG. 8 is a diagram illustrating an example of BS beam allocation according to a transmission configuration indication (TCI) state configuration in the wireless communication system according to an embodiment of the disclosure;

FIG. 9 is a diagram illustrating a beam application time that can be considered when a unified TCI scheme is used in the wireless communication system according to an embodiment of the disclosure.

FIG. 10 is a diagram illustrating another MAC-CE format for activating and indicating a joint TCI state or a separate DL or UL TCI state in the wireless communication system according to an embodiment of the disclosure.

FIG. 11 is a diagram illustrating an example of an aperiodic CSI report method.

FIG. 12 is a diagram illustrating an example of a control resource set configuration of a downlink control channel in the wireless communication system according to an embodiment of the disclosure.

FIG. 13 is a diagram illustrating a structure of a downlink control channel in the wireless communication system according to an embodiment of the disclosure.

FIG. 14 is a diagram illustrating an antenna port configuration and a resource allocation example for cooperative communication in the wireless communication system according to an embodiment of the disclosure.

FIG. 15 is a diagram illustrating an example for a configuration of downlink control information (DCI) for cooperative communication in the wireless communication system according to an embodiment of the disclosure.

FIG. 16 is a diagram illustrating an example of the coexistence of multiple radio access technologies in the wireless communication system according to an embodiment of the disclosure.

FIG. 17 is a diagram illustrating an example of a UE operation for coexistence of multiple radio access technologies in the wireless communication system according to an embodiment of the disclosure.

FIG. 18 is a diagram illustrating an example of a BS operation for coexistence of multiple radio access technologies in the wireless communication system according to an embodiment of the disclosure.

FIG. 19 is a diagram illustrating a structure of the UE in the wireless communication system according to an embodiment of the disclosure.

FIG. 20 is a diagram illustrating a structure of the BS in the wireless communication system according to an embodiment of the disclosure.

**[Mode for the Invention]**

Hereinafter, embodiments of the disclosure are described in detail with reference to the accompanying drawings.

In describing embodiments of the disclosure, a description of the technical content that is well known in the technical field, to which the disclosure pertains, and are not directly related to the disclosure will be omitted. This is to make the subject of the disclosure more clear without ambiguity thereof by omitting an unnecessary description.

For a similar reason, some components are exaggerated, omitted, or schematically illustrated in the accompanying drawings. Further, the size of each component does not totally reflect the actual size. In each figure, the same reference numeral is assigned to the same or corresponding component.

Advantages and features of the disclosure and methods of achieving the same will become clear with reference to the accompanying drawings and embodiments described below in detail. However, the disclosure is not limited to the following embodiments and may be implemented in various different forms, and the embodiments are provided to make the configuration of the disclosure perfect and completely inform those skilled in the art of the scope of the disclosure and the disclosure is only defined by the scope of the claims. Throughout the specification, the same reference numeral indicates the same component. Further, in describing the disclosure, if it is determined that a detailed description of the related function or configuration unnecessarily makes the subject of the disclosure unclear, the detailed description is omitted. Furthermore, the following terms are defined in consideration of the functions in the disclosure, which may vary depending on the intention or practice of a user, an operator, or the like. Therefore, the definitions of the terms should be made based on the contents throughout the specification.

Hereinafter, a base station is the entity that allocates resources to a terminal, and may be at least one of a gNode B, an eNode B, a Node B, a base station (BS), a radio access unit, a BS controller, or a node on a network. The terminal may include a user equipment (UE), a mobile station (MS), a cellular phone, a smart phone, a computer, or a multimedia system capable of performing a communication function. In the disclosure, a downlink (DL) refers to a wireless transmission path through which the BS transmits a signal to the UE, and an uplink (UL) refers to a wireless transmission path through which the UE transmits a signal to the BS. Hereinafter, an LTE or LTE-A system may be described as an example, but embodiments of the disclosure may be applied to other communication systems having the similar technical background or channel form. For example, 5G mobile communication technology (5G, new radio, or NR) developed after LTE-A may be included therein, and the 5G below may be the concept including the conventional LTE and LTE-A, and similar other services. The disclosure can be applied to other communication systems through some modifications without departing from the scope of the disclosure, based on determination by those skilled in the art.

It may be understood that each block in figures corresponding to processing flowcharts and combinations of the figures corresponding to the flowcharts can be implemented by computer program instructions. Since these computer program instructions can be installed in a processor for a general-purpose computer, special-purpose computer, or other programmable data processing apparatus, the instructions which are executed via the processor of the computer or other programmable data processing apparatus generate a means for performing the functions specified in the flowchart block(s). Since these computer program instructions can also be stored in a computer-available or computer-readable memory that can direct a computer or other programmable data processing apparatuses in order to perform functions in a particular manner, the instructions stored in the computer-available or computer-readable memory can generate manufactured items including a instruction means which performs the functions specified in the flowchart block(s). Since the computer program instructions can be installed in a computer or other programmable data processing apparatuses, a series of operational steps may be performed in the computer or other programmable data processing apparatuses to generate a process performed by the computer, and thus the instructions which execute the computer or other programmable data processing apparatuses can provide steps for performing the functions specified in the flowchart block(s).

Further, each block may represent a module, a segment, or a portion of code, which includes one or more executable instructions for performing the specified logical function(s). In addition, in some alternative implementations, it should be noted that the functions mentioned in the blocks can occur out of the order. For example, two blocks shown in succession can, in fact, be executed substantially concurrently, or the blocks can sometimes be executed in the reverse order, depending upon the function involved.

The term "unit (or ~er)" used in the embodiments refers to a software or hardware component such as a field-programmable gate array (FPGA) or an application-specific integrated circuit (ASIC), and the "unit (or ~er)" may play any role. However, the "unit (or ~er)" is not limited to software or hardware. The "unit (or ~er)" may be constructed in an addressable storage medium or constructed to reproduce one or more processors. Accordingly, for example, the "unit (or ~er)" includes software components, object-oriented software components, components such as class components and task components, processes, functions, attributes, procedures, subroutines, segments of program code, drivers, firmware, microcode, a circuit, data, a database, data structures, tables, arrays, and parameters. Functions provided within the components and the "units (or ~ers)" may be combined into a fewer number of components and "units (or ~ers)" or more divided into additional components and "units (or ~ers)". In addition, the components and the "units (or ~ers)" may be implemented to reproduce one or more CPUs within a device or a secure multimedia card. In embodiments, the "units (or ~ers)" may include one or more processors.

A wireless communication system has developed into a broadband wireless communication system that provides a high-speed and high-quality packet data service according to communication standards such as high-speed packet access (HSPA), long-term evolution (LTE) or evolved universal terrestrial radio access (E-UTRA), LTE-advanced (LTE-A), and LTE-Pro of 3GPP, high rate packet data (HRPD) or ultra mobile broadband (UMB) of 3GPP2, and 802.16e of IEEE beyond the initially provided voice-based service.

An LTE system, which is a representative example of the broadband wireless communication system, employs an orthogonal frequency division multiplexing (OFDM) scheme in the downlink (DL), and employs a single carrier frequency division multiple access (SC-FDMA) scheme in the uplink (UL). The uplink is a radio link through which a user equipment (UE or mobile station (MS)) transmits data or a control signal to a base station (an eNode B or a base station (BS)), and the downlink is a radio link through which the BS transmits data or a control signal to the UE. In the multiple access schemes as described above, time-frequency resources for carrying data or control information are allocated and operated in a manner to prevent overlapping of the time-frequency resources, that is, to establish the orthogonality, generally for each user, so as to identify data or control information of each user.

A future communication system after LTE, that is, a 5G communication system should be able to freely reflect various requirements of a user, a service provider, and the like, and thus it is required to support a service which satisfies the various requirements at the same time. Services which are considered for the 5G communication system are enhanced mobile broadband (eMBB), massive machine-type communication (mMTC), ultra-reliable low-latency communication (URLLC), and the like.

The eMBB aims to provide a data transmission rate which is more improved than the data transmission rate supported by the conventional LTE, LTE-A, or LTE-Pro. For example, in the 5G communication system, the eMBB should provide a peak data rate of 20 Gbps in the downlink and a peak data rate of 10 Gbps in the uplink from the viewpoint of one BS. Further, the 5G communication system should provide not only the peak data rate but also an increased user-perceived data rate. In order to satisfy such requirements, improvement of various transmission and reception technologies, including a further improved multi-input multi-output (MIMO) transmission technology, is needed. Further, while signals are transmitted in transmission bandwidths from a bandwidth of 2 GHz to a maximum bandwidth of 20 MHz used in LTE, the 5G communication system uses a frequency bandwidth wider than 20 MHz in frequency bands of 3 to 6 GHz or higher than or equal to 6 GHz, whereby the data transmission rate required by the 5G communication system can be satisfied.

Also, in order to support an application service such as the Internet of Things (IoT), mMTC is considered in the 5G communication system. The mMTC is required to support access by massive numbers of UEs within a cell, improve coverage of the UE, increase a battery lifetime, and reduce the costs of the UE in order to efficiently provide IoT. IoT is attached to several sensors and various devices to provide a communication function, and thus should support a large number of UEs (for example, 1,000,000 UEs/km$^2$) within the cell. Since the UE supporting the mMTC is highly likely to be located in a shaded area, such as a basement of a building, which a cell cannot cover due to service characteristics, the mMTC may require wider coverage than other services provided in the 5G communication system. The UE supporting the mMTC needs to be produced at low cost and it is difficult to frequently exchange a battery thereof, and thus a very long battery lifetime, for example, 10 to 15 years, is required.

Last, the URLLC is a cellular-based wireless communication service used for a particular (mission-critical) purpose. For example, services used for remote control of robots or machinery, industrial automation, unmanned aerial vehicles, remote health care, emergency alerts, and the like may be considered. Accordingly, communication provided by the URLLC should provide very low latency and very high reliability. For example, services supporting the URLLC should satisfy a radio access delay time (air interface latency) shorter than 0.5 milliseconds and also have a requirement of a packet error rate equal to or smaller than $10^{-5}$. Accordingly, for services supporting the URLLC, the 5G system should provide a transmit time interval (TTI) smaller than that of other systems and also has design requirements of allocating wide resources in a frequency band in order to guarantee reliability of a communication link.

Three services of 5G, that is, eMBB, URLLC, and mMTC, may be multiplexed and transmitted in one system. At this time, in order to satisfy different requirements of respective services, different transmission and reception schemes and transmission and reception parameters may be used between the services. Of course, 5G is not limited to the above-described three services.

Hereinafter, a/b may be understood as at least one of a or b.

[NR time-frequency resources]

Hereinafter, a frame structure of the 5G system is described in more detail with reference to the drawings.

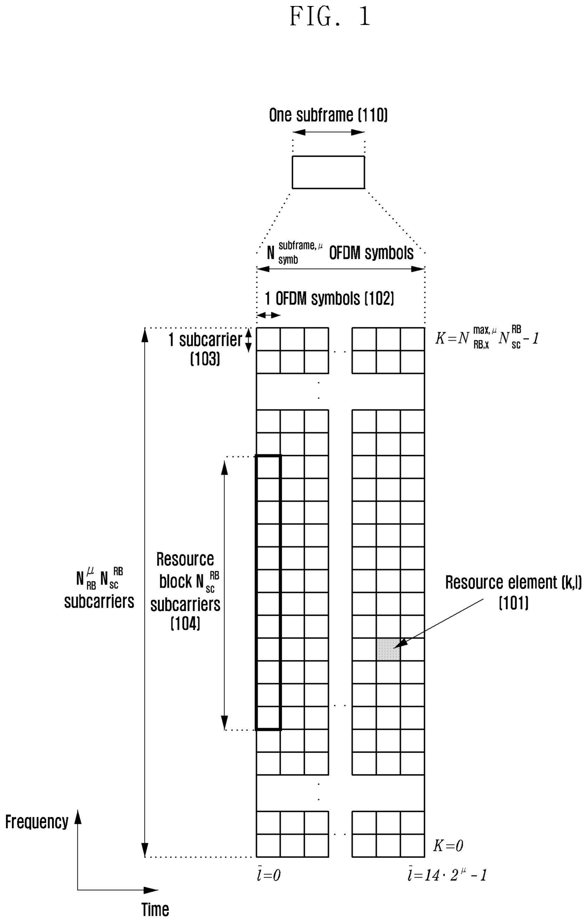

FIG. 1 illustrates a basic structure of a time-frequency domain that is a radio resource area in which data or control channels are transmitted in the 5G system.

In FIG. 1, the horizontal axis indicates a time domain and the vertical axis indicates a frequency domain. A basic unit of resources in the time and frequency domain is a resource element (RE) 101 and may be defined as 1 orthogonal frequency division multiplexing (OFDM) symbol 102 in the time axis and 1 subcarrier 103 in the frequency axis. In the frequency domain, $N_{SC}^{RB}$ (for example, 12) consecutive REs may constitute one resource block (RB) 104. In the time axis, one subframe 110 may include a plurality of OFDM symbols 102. For example, the length of 1 subframe may be 1 ms.

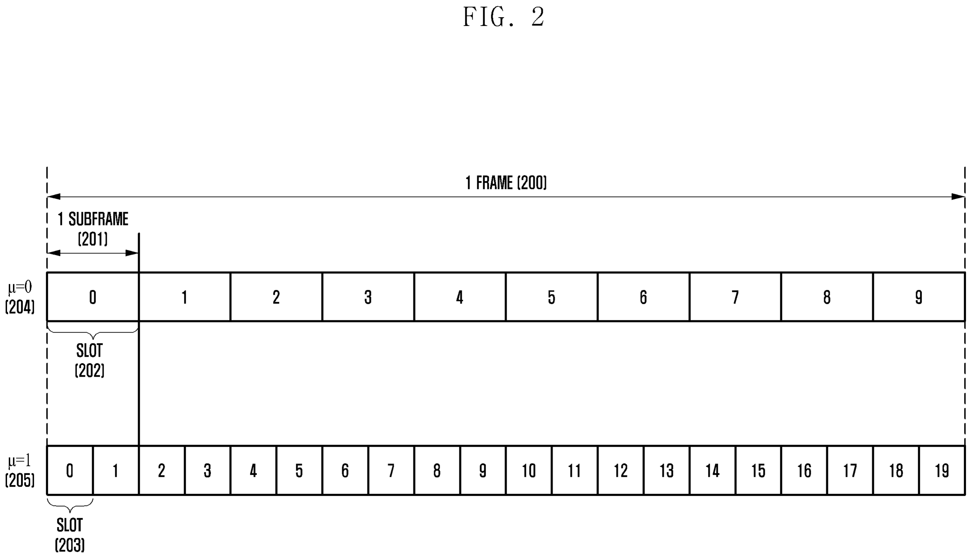

FIG. 2 is a diagram illustrating a frame, subframes, and a slot structure in a wireless communication system according to an embodiment of the disclosure.

In FIG. 2, examples of the structure of a frame 200, a subframe 201, and of a slot 202 are illustrated. 1 frame 200 may be defined as 10 ms. 1 subframe 201 may be defined as 1 ms and, accordingly, 1 frame 200 may be constituted by a total of 10 subframes 201. 1 slot 202 or 203 may be defined as 14 OFDM symbols (that is, the number of symbols per slot is $N_{symb}^{slot} = 14$). 1 subframe 201 may be constituted by one or a plurality of slots 202 and 203, and the numbers of slots 202 and 203 per subframe 201 may vary depending on configuration values $\mu$ 204 and 205 for subcarrier spacing. In the example of FIG. 2, the case 204 of the subcarrier spacing configuration value $\mu=0$ and the case 205 of $\mu=1$ are illustrated. In the case 204 of $\mu=0$, 1 subframe 201 may be constituted by 1 slot 202, and in the case 205 of $\mu=1$, 1 subframe 201 may be constituted by 2 slots 203. That is, the number $N_{slot}^{subframe\,\mu}$ of slots per subframe may vary depending on the configuration value $\mu$ for subcarrier spacing and, accordingly, the number $N_{slot}^{frame\,\mu}$ of slots per frame may be different. $N_{slot}^{subframe\,\mu}$ and $N_{slot}^{frame\,\mu}$ according to each subcarrier spacing configuration $\mu$ may be defined as shown in [Table 1] below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, a bandwidth part (BWP) configuration in the 5G communication system will be described in detail with reference to the drawings.

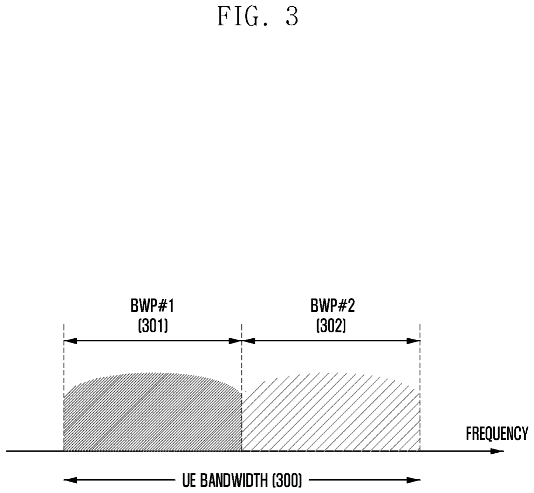

FIG. 3 is a diagram illustrating an example of the bandwidth part configuration in the wireless communication system according to an embodiment of the disclosure.

FIG. 3 shows an example in which a UE bandwidth 300 is configured as two bandwidth parts, that is, bandwidth part #1 (BWP #1) 301 and bandwidth part #2 (BWP #2) 302. The BS may configure one or a plurality of bandwidth parts in the UE and configure information in [Table 2] below for each bandwidth part.

[Table 2]

```
BWP ::=                         SEQUENCE {

    bwp-Id                      BWP-Id,

     (bandwidth part identifier)

    locationAndBandwidth        INTEGER (1..65536),

    (bandwidth part location)

    subcarrierSpacing           ENUMERATED {n0, n1, n2, n3, n4, n5},

    (subcarrier spacing)

    cyclicPrefix                ENUMERATED { extended }

    (cyclic prefix)

    }
```

Of course, the disclosure is not limited to the above example, and various parameters related to the bandwidth part as well as the configuration information may be configured in the UE. The information may be transferred to the UE by the BS through higher-layer signaling, for example, radio resource control (RRC) signaling. At least one bandwidth part among the configured on or plurality of bandwidth parts may be activated. Information indicating whether to activate the configured bandwidth parts may be semi-statically transferred to the UE from the BS through RRC signaling, or may be dynamically transferred through DCI.

According to some embodiments, the UE before the RRC connection may receive a configuration of an initial bandwidth part (initial BWP) for initial access from the BS through a master information block (MIB). More specifically, the UE may receive configuration information for a control resource set (CORESET) and a search space in which a PDCCH for receiving system information (corresponding to remaining system information (RMSI) or system information block 1 (SIB1)) required for initial access can be transmitted through the MIB during an initial access step. The control resource set and the search space configured by the MIB may be considered as identifier (identity (ID)) 0. The BS may inform the UE of configuration information such as frequency allocation information for control resource set #0, time allocation information, and numerology, through the MIB. Further, the BS may inform the UE of configuration information for a monitoring period and a monitoring occasion for control resource set #0, that is, configuration information for search space #0 through the MIB. The UE may consider a frequency domain configured as control resource set #0 acquired from the MIB as an initial bandwidth part for initial access. At this time, the ID of the initial bandwidth part may be considered as 0.

The configuration for the bandwidth parts supported by the 5G may be used for various purposes.

According to some embodiments, the case where the bandwidth supported by the UE is smaller than the system bandwidth may be supported through the bandwidth part configuration. For example, the BS configures the frequency location (configuration information 2) of the bandwidth part in the UE, so that the UE may transmit and receive data at a specific frequency location within the system bandwidth.

Further, according to some embodiments, the BS may configure a plurality of bandwidth parts in the UE in order to support different numerologies. For example, in order to support the UE to perform data transmission and reception using both subcarrier spacing of 15 kHz and subcarrier spacing of 30 kHz, two bandwidth parts may be configured as subcarrier spacing of 15 kHz and subcarrier spacing of 30 kHz, respectively. Different bandwidth parts may be frequency division multiplexed (FDM), and when data is transmitted and received at specific subcarrier spacing, the bandwidth part configured at the corresponding subcarrier spacing may be activated.

Further, according to some embodiments, the BS may configure bandwidth parts having different sizes of bandwidths in the UE in order to reduce power consumption of the UE. For example, when the UE supports a very large bandwidth, for example, a bandwidth of 100 MHz but always transmits and receives data through the corresponding bandwidth, very high power consumption may be generated. Particularly, monitoring an unnecessary downlink control channel through a large bandwidth of 100 MHz in the state where there is no traffic is very inefficient from the viewpoint of power consumption. The BS may configure a bandwidth part of a relatively small bandwidth, for example, a bandwidth part of 20 MHz in the UE to reduce power consumption of the UE. The UE may perform a monitoring operation in the bandwidth part of 20 MHz in the state where there is no traffic, and if data is generated, may transmit and receive data through the BWP of 100 MHz according to an instruction from the BS.

In a method of configuring the bandwidth part, UEs before the RRC connection may receive configuration information for an initial bandwidth part (initial BWP) through the MIB during an initial access step. More specifically, the UE may receive a configuration of a control resource set (CORESET) for a downlink control channel in which DCI for scheduling a system information block (SIB) can be transmitted from the MIB of a physical broadcast channel (PBCH). A bandwidth of the control resource set configured by the MIB may be considered as an initial bandwidth part, and the UE may receive a physical downlink shared channel (PDSCH), in which the SIB is transmitted, through the configured initial bandwidth part. The initial bandwidth part may be used not only for receiving the SIB but also for other system information (OSI), paging, or random access.

[Bandwidth part (BWP) change]

When one or more BWPs are configured in the UE, the BS may indicate a change (or switching or transition) in the bandwidth part to the UE through a bandwidth part indicator field within the DCI. For example, in FIG. 3, when the currently activated bandwidth part of the UE is bandwidth part #1 301, the BS may indicate bandwidth part #2 302 to the UE through the bandwidth part indicator within DCI, and the UE may make a bandwidth part change to bandwidth part #2 302 indicated by the bandwidth part indicator within the received DCI.

As described above, since the DCI-based bandwidth part change may be indicated by the DCI for scheduling the PDSCH or the PUSCH, the UE should be able to receive or transmit the PDSCH or the PUSCH scheduled by the corresponding DCI in the changed bandwidth part without any difficulty if the UE receives a bandwidth part change request. To this end, requirements for a delay time ($T_{BWP}$) required when the bandwidth part is changed is defined in the standard, and may be defined as shown in, for example, [Table 3] below.

[Table 3]

| $\mu$ | NR Slot length (ms) | BWP switch delay $T_{BWP}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability.<br>Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2 according to UE capability. The UE may report a supportable bandwidth part delay time type to the BS.

When the UE receives DCI including a bandwidth part change indicator in slot n according to the requirements for the bandwidth part change delay time, the UE may complete the change to a new bandwidth part indicated by the bandwidth part change indicator at a time point that is not later than slot $n+T_{BWP}$ and transmit and receive a data channel scheduled by the corresponding DCI in the changed new bandwidth part. When the BS desires to schedule a data channel in the new bandwidth part, the BS may determine time domain resource allocation for the data channel in consideration of the bandwidth part change delay time $T_{BWP}$ of the UE. That is, when scheduling the data channel in the new BWP, the BS may schedule the corresponding data channel after the bandwidth part change delay time in a method of determining time domain resource allocation for the data channel. Accordingly, the UE may not expect that the DCI indicating the bandwidth part change indicates a slot offset (K0 or K2) value smaller than the bandwidth part change delay time $T_{BWP}$.

If the UE receives DCI (for example, DCI format 1_1 or 0_1) indicating the bandwidth part change, the UE may perform no transmission or reception during a time interval from a third symbol of a slot for receiving the PDCCH including the corresponding DCI to a start point of the slot indicated by the slot offset (K0 or K2) value indicated by a time domain resource allocation indicator field within the corresponding DCI. For example, when the UE receives DCI indicating the bandwidth part change in slot n and a slot offset value indicated by the corresponding DCI is K, the UE may perform no transmission or reception from the third symbol of slot n to a symbol before slot n+K (that is, the last symbol of slot n+K-1).

[DRX]

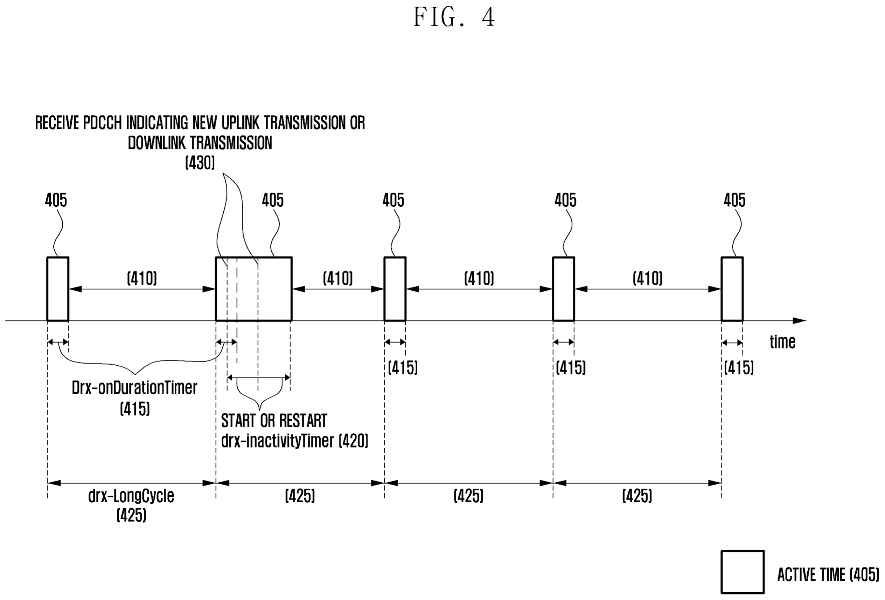

FIG. 4 is a diagram illustrating discontinuous reception (DRX).

Discontinuous reception (DRX) is an operation in which the UE using a service discontinuously receives data in an RRC-connected state in which a radio link is established between the BS and the UE. When DRX is applied, the UE may turn on a receiver at a specific time point and monitor a control channel, and when there is no data received for a predetermined period, turn off the receiver to reduce power consumption of the UE. The DRX operation may be controlled by a MAC layer entity, based on various parameters and timers.

Referring to FIG. 4, an active time 405 is a time during which the UE wakes up every DRX cycle and monitors a PDCCH. The active time 405 may be defined as follows.

- drx-onDurationTimer or drx-InactivityTimer or drx-RetransmissionTimerDL or drx-RetransmissionTimerUL or ra-ContentionResolutionTimer is running; or
- a Scheduling Request is sent on PUCCH and is pending; or
- a PDCCH indicating a new transmission addressed to the C-RNTI of the MAC entity has not been received after successful reception of a Random Access Response for the Random Access Preamble not selected by the MAC entity among the contention-based Random Access Preamble [103] drx-onDurationTimer, drx-InactivityTimer, drx-RetransmissionTimerDL, drx - RetransmissionTimerUL, ra-ContentionResolutionTimer, and the like are timers of which values are configured by the BS, and have functions of configuring the UE to monitor a PDCCH in the state where a predetermined condition is satisfied.

The drx-onDurationTimer 415 is a parameter for configuring a minimum time during which the UE is awake in a DRX cycle. The drx-InactivityTimer 420 may be a parameter for configuring a time during which the UE is additionally awake when a PDCCH indicating new uplink transmission or downlink transmission is received as indicated by reference numeral 430. The drx-RetransmissionTimerDL is a parameter for configuring a maximum time during which the UE is awake in order to receive downlink retransmission in a downlink HARQ procedure. The drx-RetransmissionTimerUL may be a parameter for configuring a maximum time during which the UE is awake in order to receive an uplink retransmission grant in an uplink HARQ procedure. The drx-onDurationTimer, the drx-InactivityTimer, the drx-RetransmissionTimerDL, and the drx-RetransmissionTimerUL may be configured as, for example, a time, the number of subframes, the number of slots, and the like. The ra-ContentionResolutionTimer is a parameter for monitoring a PDCCH in a random access procedure.

An inactive time 410 is a time configured to monitor no PDCCH or a time configure to receive no PDCCH during the DRX operation, and the remaining time except for the active time 405 in the entire time during which the DRX operation is performed may be the inactive time 410. When monitoring no PDCCH during the active time 405, the UE may enter a sleep or inactive state to reduce power consumption.

The DRX cycle refers to a cycle on which the UE wakes up and monitors a PDCCH. That is, the DRX cycle is a time interval or an occurrence cycle of on duration from monitoring of the PDCCH to monitoring of the next PDCCH by the UE. The DRX cycle has two types such as a short DRX cycle and a long DRX cycle. The short DRX cycle may be optionally applied.

The long DRX cycle 425 is a longer cycle between the two DRX cycles configured in the UE. The UE starts the drx-onDurationTimer 415 again at a time point at which the long DRX cycle 425 passes after a start point (for example, a start symbol) of the drx-onDurationTimer 415 while the long DRX cycle operates. In the operation of the long DRX cycle 425, the UE may start the drx-onDurationTimer 415 in a slot after drx-SlotOffset in a subframe that satisfies [Equation 1] below. Here, the drx-SlotOffset is a delay before the drx-onDurationTimer 415 starts. The drx-SlotOffset may be configured as, for example, a time, the number of slots, or the like.

$$[(SFN \times 10) + subframe\ number]\ modulo\ (drx\text{-}LongCycle) = drx\text{-}StartOffset \qquad [Equation\ 1]$$

At this time, the drx-LongCycleStartOffset and drx-StartOffset may be used to define a subframe for starting the Long DRX cycle 425. The drx-LongCycleStartOffset may be configured as, for example, a time, the number of subframes, the number of slots, or the like.

[Related to CA/DC]

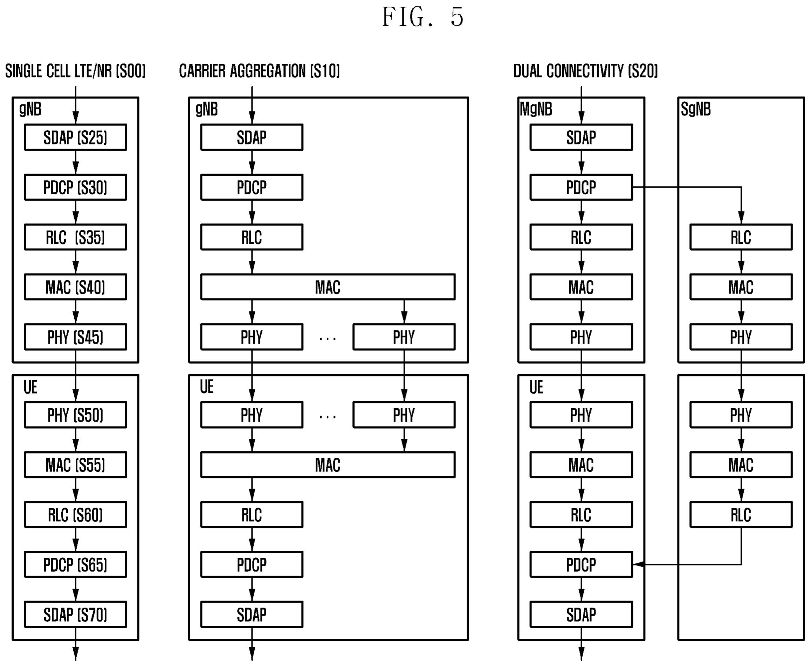

FIG. 5 is a diagram illustrating a wireless protocol structure of the BS and the UE in a situation of single cell, carrier aggregation, and dual connectivity according to an embodiment of the disclosure.

Referring to FIG. 5, in a wireless protocol of the next-generation mobile communication system, the UE and the NR BS are constituted by NR service data adaptation protocols (SDAPs) S25 and S70, NR packet data convergence protocols (PDCPs) S30 and S65, NR radio link controls (RLCs) S35 and S60, and NR medium access controls (MACs) S40 and S55, respectively.

Main functions of the NR SDAPs S25 and S70 may include some of the following functions.

- User data transfer function (transfer of user plane data)
- Function of mapping QoS flow and a data bearer for uplink and downlink (mapping between a QoS flow and a DRB for both DL and UL)
- Function of marking a QoS flow ID for uplink and downlink (marking QoS flow ID in both DL and UL packets)
- Function of mapping reflective QoS flow to a data bearer for uplink SDAP PDUs (reflective QoS flow to DRB mapping for the UL SDAP PDUs)

With respect to the SDAP layer entity, the UE may receive a configuration as to whether to use a header of the SDAP layer entity or whether to use a function of the SDAP layer entity for each PDCP layer entity, each bearer, or each logical channel through an RRC message. If the SDAP header is configured, a NAS QoS reflective configuration 1-bit indicator (NAS reflective QoS) and an AS QoS reflective configuration 1 bit-indicator (AS reflective QoS) of the SDAP header may indicate that the UE updates or reconfigures mapping information of QoS flow and a data bearer in uplink and downlink. The SDAP header may include QoS flow ID information indicating the QoS. The QoS information may be used as a data processing priority, scheduling information, or the like for supporting a smooth service.

Main functions of the NR PDCPs S30 and S65 may include some of the following functions.

- Header compression and decompression function (Header compression and decompression:ROHC only)
- User data transfer function (Transfer of user data)
- Sequential delivery function (In-sequence delivery of upper layer PDUs)
- Non-sequential delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Ciphering and deciphering function (Ciphering and deciphering)
- Timer-based SDU removal function (Timer-based SDU discard in uplink)

The reordering function of the NR PDCP entity is a function of sequentially reordering PDCP PDUs received from a lower layer, based on a PDCP sequence number (SN), and may include a function of sequentially delivering the reordered data to a higher layer. Alternatively, the reordering function of the NR PDCP entity may include a function of directly delivering data regardless of the sequence, a function of reordering and recording the lost PDCP PDUs, a function of reporting statuses of the lost PDCP PDUs to a transmitting side, and a function of making a request for retransmitting the lost PDCP PDUs.

Main functions of the NR RLCs S35 and S60 may include some of the following functions.

- Data transfer function (Transfer of upper layer PDUs)
- Sequential delivery function (In-sequence delivery of upper layer PDUs)
- Non-sequential delivery function (Out-of-sequence delivery of upper layer PDUs)
- ARQ function (Error correction through ARQ)
- Concatenation, segmentation, and reassembly function (Concatenation, segmentation, and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU removal function (RLC SDU discard)
- RLC re-establishment function (RLC re-establishment)

The sequential delivery function (in-sequence delivery) of the NR RLC entity is a function of sequentially delivering RLC SDUs received from a lower layer to a higher layer. When one original RLC SDU is divided into a plurality of RLC SDUs and then received, the sequential delivery function (In-sequence delivery) of the NR RLC entity may include a function of reassembling and delivering the RLC SDUs, a function of reordering the received RLC PDUs, based on an RLC sequence number (SN) or a PDCP sequence number (SN), a function of reordering and recording the lost RLC PDUs, a function of reporting statuses of the lost RLC PDUs to a transmitting side, and a function of making a request for retransmitting the lost RLC PDUs. When there are lost RLC SDUs, the sequential delivery function (In-sequence delivery) of the NR RLC entity may include a function of sequentially delivering only RLC SDUs preceding the lost RLC SDUs to the higher layer or a function of, if a predetermined timer expires even though there are lost RLC SDUs, sequentially delivering all RLC SDUs received before the timer starts to the higher layer. Alternatively, the sequential delivery function (in-sequence delivery) of the NR RLC entity may include a function of, if a predetermined timer expires even though there are lost RLC SDUs, sequentially delivering all RLC SDUs received up to now to the higher layer. Further, the NR RLC entity may process the RLC PDUs sequentially in a reception order thereof (according to an arrival order regardless of a serial number or a sequence number) and may deliver the RLC PDUs to the PDCP entity regardless of the sequence thereof (out-of-sequence delivery). In the case of segments, the NR RLC entity may receive segments which are stored in the buffer or will be received in the future, reconfigure the segments to be one complete RLC PDU, process the RLC PDU, and then deliver the same to the PDCP entity. The NR RLC layer may not include a concatenation function, and the function may be performed by the NR MAC layer, or may be replaced with a multiplexing function of the NR MAC layer.

The non-sequential function (Out-of-sequence delivery) of the NR RLC entity is a function of delivering RLC SDUs received from a lower layer directly to a higher layer regardless of the sequence thereof, and may include, when one original RLC SDU is divided into a plurality of RLC SDUs and then received, a function of reassembling and delivering the RLC SDUs and a function of storing RLC SNs or PDCP SNs of the received RLC PDUs, ordering the RLC PDUs, and recording lost RLC PDUs.

The NR MACs S40 and S55 may be connected to a plurality of NR RLC layer entities configured in one UE and main functions of the NR MAC may include some of the following functions.

- Mapping function (Mapping between logical channels and transport channels)
- Multiplexing and demultiplexing function (Multiplexing/demultiplexing of MAC SDUs)
- Scheduling information report function (Scheduling information reporting)
- HARQ function (Error correction through HARQ)
- Function of controlling priority between logical channels (Priority handling between logical channels of one UE)
- Function of controlling priority between UEs (Priority handling between UEs by means of dynamic scheduling)
- MBMS service identification function (MBMS service identification)
- Transport format selection function (Transport format selection)
- Padding function (Padding)

The NR PHY layers S45 and S50 may perform an operation for channel-coding and modulating higher-layer data to make OFDM symbols and transmitting the OFDM symbols through a radio channel or demodulating and channel-decoding the OFDM symbols received through the radio channel and delivering the demodulated and channel-decoded OFDM symbols to the higher layer.

A detailed structure of the wireless protocol structure may be variously changed according to a carrier (or cell) operation scheme. For example, when the BS transmits data to the UE, based on a single carrier (or cell), the BS and the UE use a protocol structure having a single structure for each layer as indicated by reference numeral S00. On the other hand, when the BS transmits data to the UE, based on carrier aggregation (CA) using multiple carriers in a single TRP, the BS and the UE have a single structure up to the RLC but use a protocol structure of multiplexing the PHY layer through the MAC layer as indicated by reference numeral S10. In another example, when the BS transmits data to the UE, based on dual connectivity (DC) using multiple carriers in multiple TRPs, the BS and the UE has a single structure up to the RLC but use a protocol structure of multiplexing the PHY layer through the MAC layer as indicated by reference numeral S20.

[Related to rate matching/puncturing]

Hereinafter, a rate matching operation and a puncturing operation are described in detail.

When time and frequency resources A to transmit a random symbol sequence A overlap random time and frequency resources B, the rate matching or puncturing operation may be considered as a transmission and reception operation of a channel A considering resources C in the area in which the resources A and the resources B overlap. A detailed operation may follow the content below.

### Rate Matching operation

- The BS may map and transmit the channel A only for the remaining resource areas except for the resources C corresponding to the area that overlaps the resources B in the entire resources A to transmit the symbol sequence A to the UE. For example, when the symbol sequence A is constituted by {symbol #1, symbol #2, symbol #3, symbol #4), the resources A are {resource #1, resource #2, resource #3, resource #4}, and the resources B are {resource #3, resource #5}, the BS may sequentially map the symbol sequence A to the remaining resources {resource #1, resource #2, resource #4} except for {resource #3} corresponding to the resources C in the resources A and transmit the same. As a result, the BS may map the symbol sequence {symbol #1, symbol #2, symbol #3} to {resource #1, resource #2, resource #4}, respectively, and transmit the same.

The UE may determine the resources A and the resources B from scheduling information for the symbol sequence A from the BS and accordingly determine the resources C corresponding to the area in which the resources A and the resources B overlap. The UE may receive the symbol sequence A, based on the assumption that the symbol sequence A is mapped to and transmitted in the remaining areas except for the resources C in the entire resources A. For example, when the symbol sequence A is constituted by {symbol #1, symbol #2, symbol #3, symbol #4}, the resources A are {resource #1, resource #2, resource #3, resource #4}, and the resources B are {resource #3, resource #5}, the UE may receive the symbol sequence A, based on the assumption that the symbol sequence A is sequentially mapped to the remaining resources {resource #1, resource #2, resource #4} except for {resource #3} corresponding to the resources C in the resources A. As a result, the UE may perform a series of reception operations thereafter, based on the assumption that the symbol sequence {symbol #1, symbol #2, symbol #3} are mapped to {resource #1, resource #2, resource #4}, respectively, and transmitted.

### Puncturing operation

When there are resources C corresponding to an area in which the entire resources A to transmit the symbol sequence A to the UE overlap the resources B, the BS may map the symbol sequence A to all the resources A, but may not perform transmission in a resource area corresponding to the resources C and may perform transmission only in the remaining resource areas except for the resources C in the resources A. For example, when the symbol sequence A is constituted by {symbol #1, symbol #2, symbol #3, symbol #4}, the resources A are {resource #1, resource #2, resource #3, resource #4}, and the resources B are {resource #3, resource #5}, the BS may map the symbol sequence A {symbol #1, symbol #2, symbol #3, symbol #4} to the resources A {resource #1, resource #2, resource #3, resource #4}, respectively, transmit only the symbol sequence {symbol #1, symbol #2, symbol #4} corresponding to the remaining resources {resource #1, resource #2, resource #4} except for {resource #3} corresponding to the resources C in the resources A, and not transmit {symbol #3} mapped to {resource #3} corresponding to the resources C. As a result, the BS may map the symbol sequence {symbol #1, symbol #2, symbol #4} to {resource #1, resource #2, resource #4}, respectively, and transmit the same.

The UE may determine the resources A and the resources B from scheduling information for the symbol sequence A from the BS and accordingly determine the resources C corresponding to the area in which the resources A and the resources B overlap. The UE may receive the symbol sequence A, based on the assumption that the symbol sequence A is mapped to the entire resources A but transmitted in the remaining areas except for the resources C in the resource area A. For example, when the symbol sequence A is constituted by {symbol #1, symbol #2, symbol #3, symbol #4}, the resources A are {resource #1, resource #2, resource #3, resource #4}, and the resources B are {resource #3, resource #5}, the UE may assume that the symbol sequence A {symbol #1, symbol #2, symbol #3, symbol #4} are mapped to the resources A {resource #1, resource #2, resource #3, resource #4}, respectively, but {symbol #3} mapped to {resource #3} corresponding to the resources C is not transmitted, and may perform reception, based on the assumption that the symbol sequence {symbol #1, symbol #2, symbol #4} corresponding to the remaining resources {resource #1, resource #2, resource #4} except for {resource #3} corresponding to the resources C in the resources A is mapped and transmitted. As a result, the UE may perform a series of reception operations thereafter, based on the assumption that the symbol sequence {symbol #1, symbol #2, symbol #4} is mapped to {resource #1, resource #2, resource #4}, respectively, and transmitted.

Hereinafter, a method of configuring rate matching resources is described for rate matching of the 5G communication system. Rate matching means that the size of a signal is controlled in consideration of an amount of resources for transmitting the signal. For example, rate matching of a data channel may mean mapping data channels to specific time and frequency resource domains without transmission, so as to control the size of data according thereto.

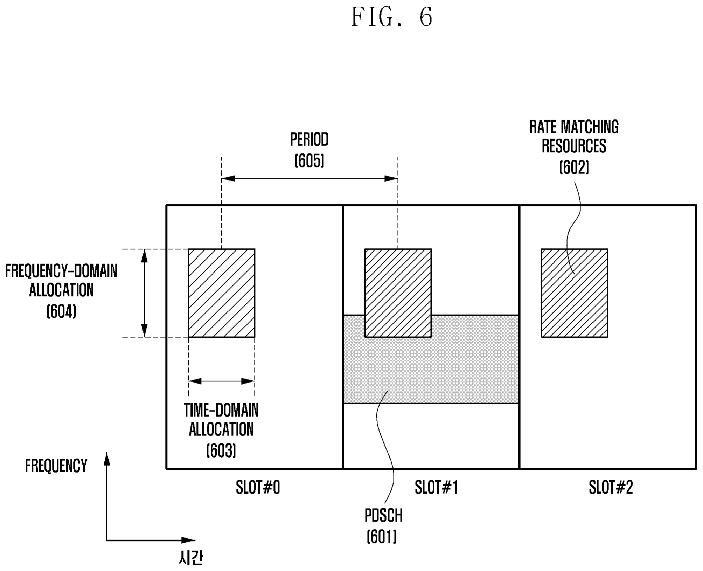

FIG. 6 is a diagram illustrating a method by which the BS and the UE transmit and receive data in consideration of downlink data channels and rate matching resources.

In FIG. 6, a downlink data channel (PDSCH) 601 and rate matching resources 602 are illustrated. The BS may configure one or a plurality of rate matching resources 602 in the UE through higher-layer signaling (for example, RRC signaling). Configuration information of the rate matching resources 602 may include time axis resource allocation information 603, frequency axis resource allocation information 604, and period information 605. Hereinafter, a bitmap corresponding to the frequency axis resource allocation information 604 is named a "first bitmap", a bitmap corresponding to the time axis resource allocation information 603 is named a "second bitmap", and a bitmap corresponding to the period information 605 is named a "third bitmap". When all or some of the time and frequency resources of the scheduled data channel 601 overlap the configured rate matching resources 602, the BS may rate-match and transmit the data channel 601 in the part of the rate matching resources 602, and the UE may perform reception and decoding, based on the assumption that the data channel 601 is rate-matched in the part of the rate matching resources 602.

Through an additional configuration, the BS may dynamically notify the UE of whether to rate-match the data channel in the configured rate matching resource part through DCI (corresponding to a "rate matching indicator" in the above-described DCI format). Specifically, the BS may select some of the configured rate matching resources and group the same as a rate matching resource group and indicate whether to rate-match the data channel for each rate matching resource group to the UE through DCI by using a bitmap method. For example, when 4 rate matching resources, RMR#1, RMR#2, RMR#3, and RMR#4 are configured, the BS may configure rate matching groups RMG#1= { RMR#1, RMR#2} and RMG#2={RMR#3, RMR#4}, and indicate to the UE whether to perform rate matching in each of RMG#1 and RMG#2 by using 2 bits within a DCI field. For example, "1" may be indicated when the rate matching is needed, and "0" may be indicated when the rate matching is not needed.

In 5G, granularity at an "RB symbol level" and an "RE level" is supported as a method of configuring the rate matching resources in the UE. More specifically, the following configuration method may be followed.

### RB symbol level

For each bandwidth part, the UE may receive a configuration of a maximum of 4 RateMatchPatterns through higher-layer signaling, and one RateMatchPattern may include the following content.

- As reserved resources within a bandwidth part, resources in which time and frequency resource domains of the corresponding reserved resources are configured may be included in a combination of a bitmap at an RB level and a bitmap at a symbol level in the frequency axis. The reserved resources may span over one or two slots. A time domain pattern (periodicityAndPattern) in which the time and frequency domains including a pair of bitmaps at the RB level and the symbol level are repeated may be additionally configured.
- Time and frequency domain resource areas configured as a control resource set within the bandwidth part and a resource area corresponding to a time domain pattern configured by the configuration of a search space in which the corresponding resource area is repeated may be included.

### RE level

The UE may receive a configuration of the following content through higher-layer signaling.

- As configuration information (lte-CRS-ToMatchAround) for REs corresponding to a LTE cell-specific reference signal or common reference signal (CRS) pattern, which may include the number of LTE CSR ports (nrofCRS-Ports), values of LTE-CRS-vshift(s) (v-shift), information on a center subcarrier location (carrierFreqDL) of an LTE carrier from a frequency point that is a reference (for example, reference point A), information on a bandwidth size of an LTE carrier (carrierBandwidthDL), subframe configuration information (mbsfn-SubframConfigList) corresponding to a multicast-broadcast single-frequency network (MBSFN), and the like. The UE may determine the location of the CRS within the NR slot corresponding to the LTE subframe, based on the above-described information.
- Configuration information for a resource set corresponding to one or a plurality of zero power (ZP) CSI-RSs within the bandwidth part may be included.

[Related to LTE CRS rate match]

Subsequently, a rate match process for the LTE CRS is described in detail. For the coexistence of long-term evolution (LTE) and new RAT (NR) (LTE-NR coexistence), a function of configuring a pattern of a cell-specific reference signal (CRS) of LTE in an NR UE is provided in NR. More specifically, the CRS pattern may be provided by RRC signaling including at least one parameter within a ServingCellConfig information element (IE) or a ServingCellConfigCommon IE. The parameters may be, for example, lte-CRS-ToMatchAround, lte-CRS-PatternListl-r16, lte-CRS-PatternList2-r16, crs-RateMatch-PerCORESETPoolIndex-r16, and the like.

In Rel-15 NR, a function of configuring one CRS pattern per serving cell is provided through the parameter lte-CRS-ToMatchAround. In Rel-16 NR, the function is expanded to configure a plurality of CRS patterns per serving cell. More specifically, one CRS pattern per LTE carrier may be configured in a single-transmission and reception point (TRP) configuration UE, and two CRS patterns per LTE carrier may be configured in a multi-TRP configuration UE. For example, a maximum of 3 CRS patterns per serving cell may be configured in the single-TRP configuration UE through the parameter lte-CRS-PatternListl-r16. In another example, the CRS may be configured for each TRP in the multi-TRP configuration UE. That is, a CRS pattern for TRP1 may be configured through the parameter lte-CRS-PatternListl-r16, and a CRS pattern for TRP2 may be configured through the parameter lte-CRS-PatternList2-r16. Meanwhile, when the two TRPs are configured as described above, whether to apply all of the CRS patterns of TRP1 and TRP2 or only the CRS pattern of one TRP to a specific physical downlink shared channel (PDSCH) is determined through the parameter crs-RateMatch-PerCORESETPoolIndex-r16, and only the CRS pattern of one TRP is applied when the parameter crs-RateMatch-PerCORESETPoolIndex-r16 is configured to be enabled and, otherwise, all of the CRS patterns of the two TRPs are applied.

[Table 4] shows the ServingCellConfig IE including the CRS pattern, and [Table 5] shows the RateMatchPatternLTE-CRS IE including at least one parameter for the CRS pattern.

[Table 4]

```
ServingCellConfig ::=                 SEQUENCE {
    tdd-UL-DL-ConfigurationDedicated    TDD-UL-DL-ConfigDedicated
        OPTIONAL,    -- Cond TDD
    initialDownlinkBWP                  BWP-DownlinkDedicated
        OPTIONAL,    -- Need M
    downlinkBWP-ToReleaseList           SEQUENCE (SIZE (1..maxNrofBWPs)) OF BWP-Id
            OPTIONAL,    -- Need N
    downlinkBWP-ToAddModList            SEQUENCE (SIZE (1..maxNrofBWPs)) OF BWP-Downlink
            OPTIONAL,    -- Need N
    firstActiveDownlinkBWP-Id           BWP-Id
        OPTIONAL,    -- Cond SyncAndCellAdd
    bwp-InactivityTimer                 ENUMERATED {ms2, ms3, ms4, ms5, ms6, ms8, ms10, ms20, ms30,
                                            ms40,ms50, ms60, ms80,ms100, ms200,ms300, ms500,
                                            ms750, ms1280, ms1920, ms2560, spare10, spare9, spare8,
                                            spare7, spare6, spare5, spare4, spare3, spare2, spare1 }
OPTIONAL,    --Need R
    defaultDownlinkBWP-Id               BWP-Id
        OPTIONAL,    -- Need S
    uplinkConfig                        UplinkConfig
OPTIONAL,    -- Need M
    supplementaryUplink                 UplinkConfig
OPTIONAL,    -- Need M
    pdcch-ServingCellConfig             SetupRelease { PDCCH-ServingCellConfig }
        OPTIONAL,    -- Need M
    pdsch-ServingCellConfig             SetupRelease { PDSCH-ServingCellConfig }
        OPTIONAL,    -- Need M
    csi-MeasConfig                      SetupRelease { CSI-MeasConfig }
        OPTIONAL,    -- Need M
    sCellDeactivationTimer              ENUMERATED {ms20, ms40, ms80, ms160, ms200, ms240,
                                            ms320, ms400, ms480, ms520, ms640, ms720,
                                            ms840, ms1280, spare2,spare1}       OPTIONAL,    -- Cond
ServingCellWithoutPUCCH
    crossCarrierSchedulingConfig        CrossCarrierSchedulingConfig
OPTIONAL,    -- Need M
    tag-Id                              TAG-Id,
    dummy                               ENUMERATED {enabled}
            OPTIONAL,    -- Need R
    pathlossReferenceLinking            ENUMERATED {spCell, sCell}
        OPTIONAL,    -- Cond SCellOnly
    servingCellMO                       MeasObjectId
        OPTIONAL,    -- Cond MeasObject
    ....
    [[
    lte-CRS-ToMatchAround               SetupRelease { RateMatchPatternLTE-CRS }
        OPTIONAL,    -- Need M
    rateMatchPatternToAddModList        SEQUENCE (SIZE (1..maxNrofRateMatchPatterns)) OF RateMatchPattern
        OPTIONAL,    -- Need N
    rateMatchPatternToReleaseList       SEQUENCE (SIZE (1..maxNrofRateMatchPatterns)) OF RateMatchPatternId
        OPTIONAL,    -- Need N
    downlinkChannelBW-PerSCS-List       SEQUENCE (SIZE (1..maxSCSs)) OF SCS-SpecificCarrier
        OPTIONAL    -- Need S
    ]],
    [[
    supplementaryUplinkRelease          ENUMERATED {true}
        OPTIONAL,    -- Need N
    tdd-UL-DL-ConfigurationDedicated-IAB-MT-r16    TDD-UL-DL-ConfigDedicated-IAB-MT-r16
        OPTIONAL,    -- Cond TDD_IAB
    dormantBWP-Config-r16               SetupRelease { DormantBWP-Config-r16 }
        OPTIONAL,    -- Need M
    ca-SlotOffset-r16                   CHOICE {
        refSCS15kHz                         INTEGER (-2..2),
        refSCS30KHz                         INTEGER (-5..5),
        refSCS60KHz                         INTEGER (-10..10),
        refSCS120KHz                        INTEGER (-20..20)
    }
OPTIONAL,    -- Cond AsyncCA
    channelAccessConfig-r16             SetupRelease { ChannelAccessConfig-r16 }
OPTIONAL,    -- Need M
    intraCellGuardBandsDL-List-r16      SEQUENCE (SIZE (1..maxSCSs)) OF IntraCellGuardBandsPerSCS-r16
        OPTIONAL,    -- Need S
    intraCellGuardBandsUL-List-r16      SEQUENCE (SIZE (1..maxSCSs)) OF IntraCellGuardBandsPerSCS-r16
```

```
        OPTIONAL,   -- Need S
        csi-RS-ValidationWith-DCI-r16           ENUMERATED {enabled}
        OPTIONAL,   -- Need R
        lte-CRS-PatternList1-r16                SetupRelease { LTE-CRS-PatternList-r16 }
OPTIONAL,   -- Need M
        lte-CRS-PatternList2-r16                SetupRelease { LTE-CRS-PatternList-r16 }
OPTIONAL,   -- Need M
        crs-RateMatch-PerCORESETPoolIndex-r16   ENUMERATED {enabled}
            OPTIONAL,   -- Need R
        enableTwoDefaultTCI-States-r16          ENUMERATED {enabled}
        OPTIONAL,   -- Need R
        enableDefaultTCI-StatePerCoresetPoolIndex-r16 ENUMERATED {enabled}
        OPTIONAL,   -- Need R
        enableBeamSwitchTiming-r16              ENUMERATED {true}
            OPTIONAL,   -- Need R
        cbg-TxDiffTBsProcessingType1-r16        ENUMERATED {enabled}
        OPTIONAL,   -- Need R
        cbg-TxDiffTBsProcessingType2-r16        ENUMERATED {enabled}
            OPTIONAL,   -- Need R
        ]]
}
```

[Table 5]

```
          -    RateMatchPatternLTE-CRS
```

The IE *RateMatchPatternLTE-CRS* is used to configure a pattern to rate match around LTE CRS. See TS 38.214 [19], clause 5.1.4.2.

**RateMatchPatternLTE-CRS information element**

```
-- ASN1START
-- TAG-RATEMATCHPATTERNLTE-CRS-START

RateMatchPatternLTE-CRS ::=          SEQUENCE {
    carrierFreqDL                    INTEGER (0..16383),
    carrierBandwidthDL               ENUMERATED {n6, n15, n25, n50, n75, n100, spare2, spare1},
    mbsfn-SubframeConfigList         EUTRA-MBSFN-SubframeConfigList
    OPTIONAL,   -- Need M
    nrofCRS-Ports                    ENUMERATED {n1, n2, n4},
    v-Shift                          ENUMERATED {n0, n1, n2, n3, n4, n5}
}

LTE-CRS-PatternList-r16 ::=          SEQUENCE (SIZE (1..maxLTE-CRS-Patterns-r16)) OF RateMatchPatternLTE-CRS

-- TAG-RATEMATCHPATTERNLTE-CRS-STOP
-- ASN1STOP
```

| RateMatchPatternLTE-CRS field descriptions |
|---|
| **carrierBandwidthDL** <br> BW of the LTE carrier in number of PRBs (see TS 38.214 [19], clause 5.1.4.2). |
| **carrierFreqDL** <br> Center of the LTE carrier (see TS 38.214 [19], clause 5.1.4.2). |
| **mbsfn-SubframeConfigList** <br> LTE MBSFN subframe configuration (see TS 38.214 [19], clause 5.1.4.2). |
| **nrofCRS-Ports** <br> Number of LTE CRS antenna port to rate-match around (see TS 38.214 [19], clause 5.1.4.2). |
| **v-Shift** <br> Shifting value v-shift in LTE to rate match around LTE CRS (see TS 38.214 [19], clause 5.1.4.2). |

[Related to slot format indication]

A method by which the BS indicates a slot format to the UE is described. In a 5G communication system, a downlink signal transmission interval and an uplink signal transmission interval may be dynamically changed. To this end, the BS may indicate whether each of the OFDM symbols included in one slot is a downlink symbol, an uplink symbol, or a flexible symbol to the UE through a slot format indicator (SFI). The flexible symbol is neither a downlink symbol nor an uplink symbol, or may be a symbol which can be changed to a downlink or uplink symbol by UE-specific control information or scheduling information. At this time, the flexible symbol may include a gap guard required for a process of switching from the downlink to the uplink.

The UE receiving the slot format indicator may perform an operation of receiving a downlink signal from the BS in a symbol indicated as the downlink symbol and perform an operation of transmitting an uplink signal to the BS in a symbol indicated as the uplink symbol. For the symbol indicated as the flexible symbol, the UE may perform at least a PDCCH monitoring operation, and, through another indicator, for example, DCI, the UE may perform an operation of receiving a downlink signal from the BS in the flexible symbol (for example, when DCI format 1_0 or 1_1 is received) or an operation of transmitting an uplink signal to the BS (for example, DCI format 0_0 or 0_1 is received).

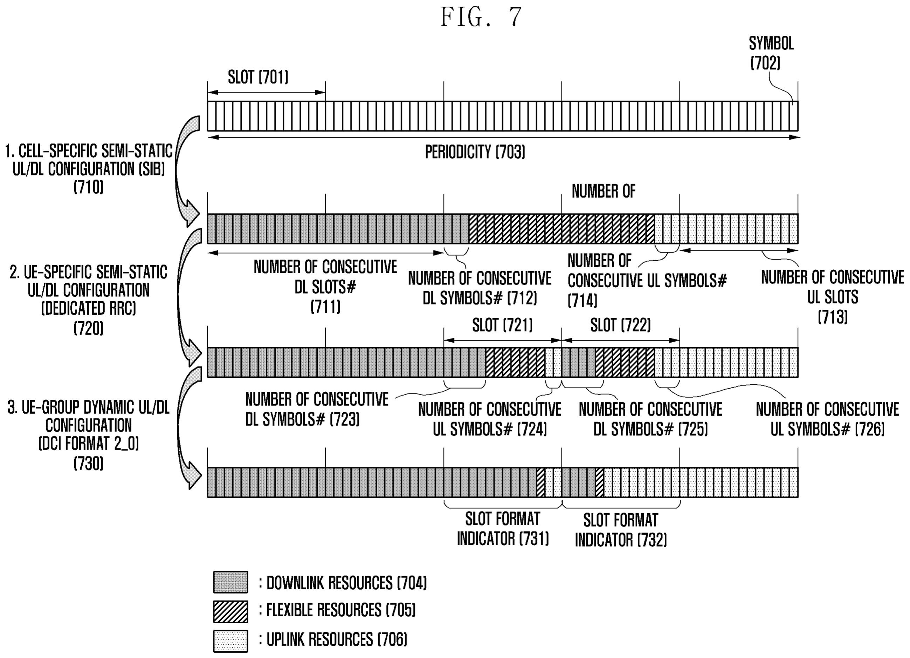

FIG. 7 is a diagram illustrating an example of an uplink-downlink (UL/DL) configuration in a wireless communication system according to an embodiment of the disclosure.

Referring to FIG. 7, three steps of the uplink-downlink configuration of the symbol/slot are illustrated. In a first step, through cell-specific configuration information 710 for semi-statically configuring the uplink-downlink, for example, system information such as an SIB, the uplink-downlink of the symbol/slot may be configured. Specifically, the cell-specific uplink-downlink configuration information 710 in the system information may include information indicating uplink-downlink pattern information and reference subcarrier spacing. The uplink-downlink pattern information may indicate a transmission periodicity 703 of each pattern, the number of consecutive downlink slots at the beginning of each pattern (number of consecutive full DL slots at the beginning of each DL-UL pattern) 711, the number of consecutive downlink symbols from the beginning of the next slot 712 (number of consecutive DL symbols in the beginning of the slot following the last full DL slot), the number of consecutive uplink slots from the end of each pattern 713 (number consecutive full UL slots at the end of each DL-UL pattern), and the number of symbols of the previous slot 714 (number of consecutive UL symbols in the end of the slot preceding the first full UL slot). At this time, the UE may determine that the slot/symbol which is not indicated as the uplink or downlink is the flexible slot/symbol.

In a second step, UE-specific configuration information 720 transmitted through UE-dedicated higher-layer signaling (that is, RRC signaling) may indicate symbols to be configured as the downlink or the uplink within the flexible slot or slots 721 and 722 including the flexible symbol. For example, the UE-specific uplink-downlink configuration information 720 may include a slot index indicating the slot 721 or 722 including the flexible symbol, the number of consecutive downlink symbols from the beginning of each slot 723 or 725 (number of consecutive DL symbols in the beginning of the slot), or the number of consecutive uplink symbols from the end of each slot 724 or 726 (number of consecutive UL symbols in the end of the slot) or include information indicating the entire downlink or information indicating the entire uplink for each slot. At this time, the symbol/slot configured as the uplink or the downlink through the cell-specific configuration information 710 in the first step cannot be changed to the downlink or the uplink through UE-specific higher-layer signaling 720.

Last, in order to dynamically change the downlink signal transmission interval and the uplink signal transmission interval, downlink control information of the downlink control channel may include a slot format indicator 730 indicating whether each symbol is a downlink symbol, an uplink symbol, or a flexible symbol within each slot among a plurality of slots starting from the slot in which the UE detected the downlink control information. At this time, in the first and second steps, the slot format indicator cannot indicate the symbol/slot configured as the uplink or the downlink as the downlink or the uplink. In the first and second steps, the slot format of each slot 731 or 732 including at least one symbol which is not configured as the uplink or the downlink may be indicated by the corresponding downlink control information.

The slot format indicator may indicate an uplink-downlink configuration for 14 symbols within one slot as shown in [Table 6] below. The slot format indicator may be simultaneously transmitted to a plurality of UEs through a UE group (or cell) common control channel. In other words, the downlink control information including the slot format indicator may be transmitted through a PDCCH which is CRC-scrambled by an identifier different from a UE-specific cell-RNTI (C-RNTI), for example, an SFI-RNTI. The downlink control information may include slot format indicators for one or more slots, that is, N slots. A value of N may be an integer larger than 0 or a value in a set of predefined available values configured as 1, 2, 5, 10, and 20 which the UE receives from the BS through higher-layer signaling. The size of the slot format indicator may be configured by the BS in the UE through higher-layer signaling.

[Table 6]

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | F | F | F | F |
| 6 | D | D | D | D | D | D | D | D | D | F | F | F | F | F |
| 7 | D | D | D | D | D | D | D | D | F | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |
| 56 – 254 | Reserved | | | | | | | | | | | | | |
| 255 | UE determines the slot format for the slot based on *TDD-UL-DL-ConfigurationCommon*, or *TDD-UL-DL-ConfigDedicated* and, if any, on detected DCI formats | | | | | | | | | | | | | |

In [Table 6], D denotes a downlink symbol, U denotes an uplink symbol, and F denotes a flexible symbol. According to [Table 6], a total number of slot formats which can be supportable for one slot is 256. In the NR system, a maximum size of information bits which can be used to indicate slot formats is 128 bits, and may be configured in the UE by the BS through higher-layer signaling, for example, "dci-PayloadSize".

At this time, a cell operating in a licensed or an unlicensed band may configure and indicate additional slot formats shown in [Table 7] by introducing one or more additional slot formats or modifying at least one of the existing slot formats.

[Table 7] shows an example of additional slot formats in which one slot is constituted by only uplink symbols and flexible symbols (F).

[Table 7]

| Format | number (or index) of symbol within one slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 56 | F | U | U | U | U | U | U | U | U | U | U | U | U | U |
| 57 | F | F | U | U | U | U | U | U | U | U | U | U | U | U |
| 58 | U | U | U | U | U | U | U | U | U | U | U | U | U | F |
| 59 | U | U | U | U | U | U | U | U | U | U | U | U | F | F |
| ... | | | | | | | | | | | | | | |

In an embodiment, downlink control information used for indicating slot formats may indicate slot format(s) for a plurality of serving cells, and slot format(s) for the respective serving cells may be separated by a serving cell ID. Further, for each serving cell, a slot format combination of one or more slots may be indicated by the downlink control information. For example, when the size of one slot format indicator index field within the downlink control information is 3 bits and indicates a slot format for one serving cell, the 3-bit slot format indicator index field may indicate one of a total of 8 slot formats (or slot format combination), and the BS may indicate the slot format indicator index field through UE group common downlink control information (common DCI).

In an embodiment, at least one slot format indicator index field included in the downlink control information may be constituted by a slot format combination indicator for a plurality of slots. For example, [Table 8] shows 3-bit slot format combination indicators constituting slot formats of [Table 6] and [Table 7]. Among values of slot format combination indicators, {0, 1, 2, 3, 4} indicate a slot format for one slot. The remaining 3 values {5, 6, 7} indicate slot formats for 4 slots, and the UE may sequentially apply the indicated slot formats to the 4 slots from the slot in which the downlink control information including the slot format combination indicator was detected.

[Table 8]

| Slot format combination ID | Slot Formats |
|---|---|
| 0 | 0 |
| 1 | 1 |
| 2 | 2 |
| 3 | 19 |
| 4 | 9 |
| 5 | 0 0 0 0 |
| 6 | 1 1 1 1 |
| 7 | 2 2 2 2 |

In an embodiment, when the UE is not configured to monitor DCI format 2_0, some symbols of a specific slot may be configured as flexible symbols (F) according to a slot format configured through higher-layer signaling, or a slot format of a specific slot is not configured, the UE may receive DCI, an RAR UL grant, a fallbackRAR UL grant, or a successRAR for some corresponding symbols within the corresponding slot and transmit a PUSCH, a PUCCH, a PRACH, or an SRS indicated within the received information.

In an embodiment, when some symbols of a specific slot are configured as flexible symbols (F), based on a slot format configured through higher-layer signaling, the UE may not expect reception of an uplink transmission configuration, for example, a configured grant-based PUSCH, PUCCH, or SRS to be transmitted in some corresponding symbols of the corresponding slot, based on higher-layer signaling.

In an embodiment, when the UE receives scheduling of PUSCH transmission for a plurality of slots in DCI format 0_1 and at least one of the symbols at the location at which the PUSCH should be transmitted are configured as the DL in one slot among a plurality of corresponding slots through higher-layer signaling, the UE does not transmit the PUSCH in the corresponding slot.

In an embodiment, when some symbols of a specific slot are configured as flexible symbols (F) through higher-layer signaling or a slot format for a specific slot is not configured, the UE receives DCI format 2_0, a slot format indicator value is not 255, flexible symbols (F) are indicated for some symbols of the corresponding slot, and the UE receives a DCI format, an RAR UL grant, or a successRAR indicating a PUSCH, a PUCCH, a PRACH, or an SRS within the corresponding flexible symbols, the UE may transmit the PUSCH, the PUCCH, the PRACH, or the SRS within the corresponding flexible symbols within the corresponding slot.

In an embodiment, when some symbols of a specific slot are configured as flexible symbols (F) through higher-layer signaling or a slot format for a specific slot is not configured, the UE receives DCI format 2_0, a slot format indicator value is not 255, and the UE is configured to transmit a PUCCH, a PUSCH, or a PRACH for some symbols within the corresponding slot through higher-layer signaling, the UE may transmit the preset PUCCH, PUSCH, or PRACH only when some corresponding symbols within the corresponding slot are indicated as uplink symbols (UL) through DCI format 2_0.

[QCL, TCI state]

In the wireless communication system, one or more different antenna ports (or replaced with one or more channels, signals, and combinations thereof, but commonly referred to as different antenna ports for convenience in the following description of the disclosure) may be associated by a quasi co-location (QCL) configuration shown in [Table 9] below. The TCI state is to inform of a QCL relation between a PDCCH (or a PDCCH DMRS) and another RS or channel, and a reference antenna port A (reference RS #A) and another purpose antenna port B (target RS #B) which are quasi co-located (QCLed) means that the UE is allowed to apply some or all of large-scale channel parameters estimated in the antenna port A to channel measurement from the antenna port B. The QCL may need to correlate different parameters according to situations of 1) time tracking influenced by average delay and delay spread, 2) frequency tracking influenced by Doppler shift and Doppler spread, 3) radio resource management (RRM) influenced by an average gain, and 4) beam management (BM) influenced by a spatial parameter. Accordingly, in NR, four types of QCL relations shown in [Table 9] below are supported.

[Table 9]

| QCL type | Large-scale characteristics |
|:---:|:---:|
| A | Doppler shift, Doppler spread, average delay, delay spread |
| B | Doppler shift, Doppler spread |
| C | Doppler shift, average delay |
| D | Spatial Rx parameter |

The spatial RX parameter may refer to some or all of various parameters such as angle of arrival (AoA), power angular spectrum (PAS) of AoA, angle of departure (AoD), PAS of AoD, transmit/receive channel correlation, transmit/receive beamforming, and spatial channel correlation.

The QCL relation can be configured in the UE through RRC parameter TCI-state and QCL-Info as shown in [Table 9] below. Referring to [Table 10] below, the BS may configure one or more TCI states in the UE and inform the UE of a maximum of two QCL relations (qcl-Type 1 and qcl-Type 2) for an RS referring to an ID of the TCI state, that is, a target RS. At this time, each piece of the QCL information (QCL-Info) included in the TCI state includes a serving cell index and a BWP index of a reference RS indicated by the corresponding QCL information, a type and an ID of the reference RS, and the QCL types as shown in [Table 9] above.

[Table 10]

TCI-State ::=                               SEQUENCE {

   tci-StateId                               TCI-StateId,

   (ID of corresponding TCI state)

   qcl-Type1                               QCL-Info,

   (information of first reference RS of RS (target RS) referring to

corresponding TCI state ID)

   qcl-Type2                               QCL-Info

OPTIONAL,     -- Need R

   (information of second reference RS of RS (target RS) referring

to corresponding TCI state ID)

   ...

}


QCL-Info ::=                               SEQUENCE {

   cell                               ServCellIndex

OPTIONAL,     -- Need R

   (serving cell index of reference RS indicated by corresponding

```
        QCL information)

            bwp-Id                                          BWP-Id

OPTIONAL, -- Cond CSI-RS-Indicated

            (BWP index of reference RS indicated by corresponding QCL

information)

            referenceSignal                   CHOICE {

                csi-rs                                    NZP-CSI-RS-

ResourceId,

                ssb                                       SSB-Index

            },

            (one of CSI-RS ID or SSB ID indicated by corresponding

QCL information)


        qcl-Type                              ENUMERATED

{typeA, typeB, typeC, typeD},

            ...

        }
```

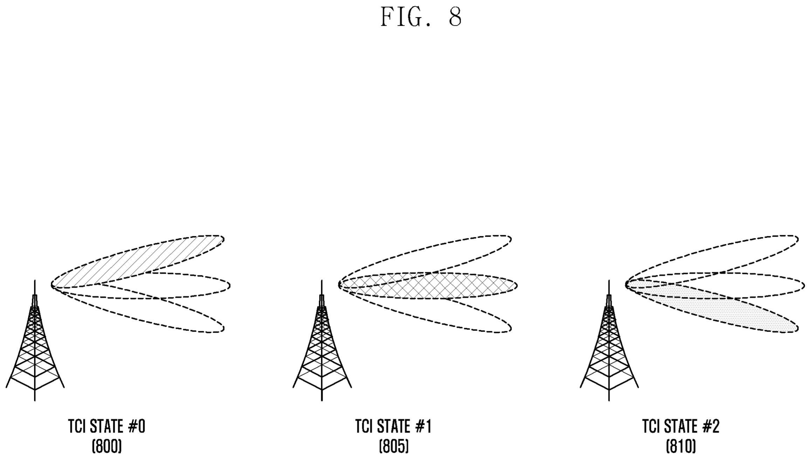

FIG. 8 is a diagram illustrating an example of BS beam allocation according to a TCI state configuration.

Referring to FIG. 8, the BS may transfer information on N different beams to the UE through N different TCI states. For example, in the case of N=3 as illustrated in FIG. 8, the BS may make qcl-Type2 parameters included in three TCI states 800, 805, and 810 correlated with CSI-RSs or SSBs corresponding to different beams and configured as QCL type D and may notify that antenna ports referring to the different TCI states 800, 805, and 810 are correlated with different spatial Rx parameters, that is, different beams.

[Table 11] to [Table 15] below show valid TCI state configurations according to target antenna port types.

[Table 11] shows valid TCI state configurations when the target antenna port is a CSI-RS for tracking (that is, TRS). The TRS is an NZP CSI-RS for which a repetition parameter is not configured and trs-Info is configured as true among CSI-RSs. The third configuration in [Table 10] may be used for an aperiodic TRS.

[Table 11]

Valid TCI state configurations when target antenna port is CSI-RS

for tracking (TRS)

| Valid TCI state Configuration | DL RS 1 | qcl-Type1 | DL RS 2 (if configured) | qcl-Type2 (if configured) |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

[Table 12] shows valid TCI state configurations when the target antenna port is a CSI-RS for CSI. The CSI-RS for CSI may be an NZP CSI-RS for which a parameter (for example, a repetition parameter) indicating repetition is not configured and trs-Info is also not configured as true among the CSI-RSs.

[Table 12]

Valid TCI state configurations when target antenna port is CSI-RS

for CSI

| Valid TCI state Configuration | DL RS 1 | qcl-Type1 | DL RS 2 (if configured) | qcl-Type2 (if configured) |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

[Table 13] shows valid TCI state configurations when the target antenna port is a CSI-RS for beam management (BM) (having the same meaning as a CSI-RS for L1 RSRP reporting). The CSI-RS for BM is an NZP CSI-RS for which a repetition parameter is configured to have a value of on or off and trs-Info is not configured as true among the CSI-RSs.

[Table 13]

Valid TCI state configurations when target antenna port is CSI-RS

for BM (for L1 RSRP reporting)

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

[Table 14] shows valid TCI state configurations when the target antenna port is a PDCCH DMRS.

[Table 14]

Valid TCI state configurations when target antenna port is PDCCH DMRS

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

[Table 15] shows valid TCI state configurations when the target antenna port is a PDSCH DMRS.

[Table 15]

Valid TCI state configurations when target antenna port is PDSCH DMRS

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

In a representative QCL configuration method by [Table 11] to [Table 15], the target antenna ports and the reference antenna ports for each step are configured and operated as "SSB" -> "TRS" -> "CSI-RS for CSI, CSI-RS for BM, PDCCH DMRS, or PDSCH DMRS". Accordingly, it is possible to assist the UE in the reception operation by associating statistical characteristics which can be measured from the SSB and the TRS with respective antenna ports.

[Unified TCI state]

Hereinafter, a method of indicating and activating a single TCI state based on a unified TCI scheme is described. The unified TCI scheme may be a scheme of unifying transmission and reception beam management schemes divided into a TCI state scheme used for downlink reception of the UE and a spatial relation info scheme used for uplink transmission in the conventional Rel-15 and 16 into a TCI state and managing the same. Accordingly, when receiving an indication from the BS, based on the unified TCI scheme, the UE may perform beam management even for uplink transmission by using the TCI state. When the UE receives a configuration of a TCI-State which is higher-layer signaling having tci-stateId-r17 which is higher-layer signaling from the BS, the UE may perform an operation based on the unified TCI scheme by using the corresponding TCI-State. The TCI-State may exist in two forms such as a joint TCI state or a separate TCI state.

The first form is the joint TCI state, and the UE may receive an indication of all TCI states to be applied to both uplink transmission and downlink reception from the BS through one TCI-State. When the UE receives an indication of a TCI-State based on the joint TCI state, the UE may receive an indication of a parameter to be used for downlink channel estimation by using an RS corresponding to qcl-Type1 and a parameter to be used as a downlink reception beam or reception filter by using an RS corresponding to qcl-Type2 within the TCI-State based on the corresponding joint TCI state. When the UE receives an indication of the TCI-State based on the joint TCI state, the UE may receive an indication of a parameter to be used as an uplink transmission beam or transmission filter by using an RS corresponding to qcl-Type2 within the TCI-State based on the corresponding joint DL/UL TCI state. At this time, when the UE receives the indication of the joint TCI state, the UE may apply the same beam to both the uplink transmission and the downlink reception.

The second form is the separate TCI state, and the UE may individually receive indications of the UL TCI state to be applied to uplink transmission and the DL TCI state to be applied to downlink reception from the BS. When the UE receives the indication of the UL TCI state, the UE may receive an indication of a parameter to be used as an uplink transmission beam or transmission filter by using a reference RS or a source RS configured within the corresponding UL TCI state. When the UE receives the indication of the DL TCI state, the UE may receive an indication of a parameter to be used for downlink channel estimation by using an RS corresponding to qcl-Type1 and a parameter to be used as a downlink reception beam or reception filter by using an RS corresponding to qcl-Type2 configured within the corresponding DL TCI state.

When the UE receives indications of the DL TCI state and the UL TCI state together, the UE may receive an indication of a parameter to be used as an uplink transmission beam or transmission filter by using a reference RS or a source RS configured within the corresponding UL TCI state and receive an indication of a parameter to be used for downlink channel estimation by using an RS corresponding to qcl-Type1 and a parameter to be used as a downlink reception beam or reception filter by using an RS corresponding to qcl-Type2 configured within the corresponding DL TCI state. At this time, when the reference RSs or the source RSs configured within the DL TCI state and the UL TCI state indicated by the UE are different, the UE may individually apply beams to uplink transmission and downlink reception, based on the indicated UL TCI state and DL TCI state.

The UE may receive a configuration of a maximum of 128 joint TCI states for each specific bandwidth part within a specific cell from the BS through higher-layer signaling and receive a configuration of a maximum of 64 or 128 DL TCI states of the separate TCI states for each specific bandwidth part within a specific call, based on a UE capability report, through higher-layer signaling, and the DL TCI state of the separate TCI states and the joint TCI state may use the same higher-layer signaling structure. For example, when 128 joint TCI states are configured and 64 DL TCI states of the separate TCI states are configured, the 64 DL TCI states may be included in the 128 joint TCI states.

The UE may receive a configuration of a maximum of 32 or 64 UL TCI states among the separate TCI states for each specific bandwidth part within a specific cell, based on a UE capability report, through higher-layer signaling. Like the relation between the DL TCI states of the separate TCI states and the joint TCI states, the UL TCI states of the separate TCI states and the joint TCI states may also use the same higher-layer signaling structure, and the UL TCI states of the separate TCI states may use a higher-layer signaling structure which is different from that of the joint TCI states and the DL TCI states of the separate TCI states.

As described above, using different or the same higher-layer signaling structure may be defined in the standard, or the structure may be identified through other higher-layer signaling configured by the BS, based on a UE capability report containing information on a usage scheme that can be supported by the UE between the two schemes.

The UE may receive a transmission and reception beam-related indication through the unified TCI scheme by using one scheme of the joint TCI states and the separate TCI states configured by the BS. The UE may receive a configuration indicating whether to use one of the joint TCI states and the separate TCI states from the BS through higher-layer signaling.

The UE may receive a transmission and reception beam-related indication by using one scheme selected from the joint TCI states and the separate TCI states through higher-layer signaling, in which case there may be two methods of indicating a transmission and reception beam from the BS, such as a MAC-CE-based indication method and a MAC-CE-based activation and DCI-based indication method.

When the UE receives a transmission and reception beam-related indication by using the joint TCI state scheme through higher-layer signaling, the UE may receive a MAC-CE indicating the joint TCI states from the BS and perform a transmission and reception beam application operation, and the BS may schedule reception for a PDSCH including the corresponding MAC-CE to the UE through a PDCCH. When the number of joint TCI states included in the MAC-CE is one, the UE may determine an uplink transmission beam or transmission filter and a downlink reception beam or reception filter by using the joint TCI state indicated from 3 ms after transmission of a PUCCH including HARQ-ACK information indicating whether the PDSCH including the corresponding MAC-CE has been successfully received. If the number of joint TCI states included in the MAC-CE is two or more, the UE may identify that a plurality of joint TCI states indicated by the MAC-CE corresponds to respective codepoints in a TCI state field of DCI format 1_1 or DCI format 1_2 from 3 ms after transmission of the PUCCH including HARQ-ACK information indicating whether the PDSCH including the corresponding MAC-CE has been successfully received, and activate the indicated joint TCI states. Thereafter, the UE may receive DCI format 1_1 or 1_2 and apply one joint TCI state indicated by the TCI state field within the corresponding DCI to the uplink transmission and downlink reception beams. At this time, DCI format 1_1 or 1_2 may include downlink data channel scheduling information (with DL assignment) or may not include the same (without DL assignment).

When the UE receives a transmission and reception beam-related indication by using the separate TCI state scheme through higher-layer signaling, the UE may receive a MAC-CE indicating the separate TCI states from the BS and perform a transmission and reception beam application operation, and the BS may schedule reception for a PDSCH including the corresponding MAC-CE to the UE through a PDCCH. When the number of separate TCI state sets included in the MAC-CE is one, the UE may determine an uplink transmission beam or transmission filter and a downlink reception beam or reception filter by using separate TCI states included in the indicated separate TCI state set from 3 ms after transmission of the PUCCH including HARQ-ACK information meaning whether the corresponding PDSCH is successfully received. At this time, the separate TCI state set may be a single or a plurality of separate TCI states which one codepoint of the TCI state field within DCI format 1_1 or 1_2 can have, and one separate TCI state set may include one DL TCI state, one UL TCI state, or one DL TCI state and one UL TCI state. When the number of separate TCI state sets included in the MAC-CE is two or more, the UE may identify that a plurality of separate TCI state sets indicated by the MAC-CE from 3 ms after transmission of the PUCCH including HARQ-ACK information meaning whether the corresponding PDSCH is successfully received correspond to respective codepoints in the TCI state field of DCI format 1_1 or 1_2, and activate the indicated separate TCI state sets. At this time, respective codepoints in the TCI state field of DCI format 1_1 or 1_2 may indicate one DL TCI state, one UL TCI state, or one DL TCI state and one UL TCI state. The UE may receive DCI format 1_1 or 1_2 and apply separate TCI state sets indicated by the TCI state field within the corresponding DCI to the uplink transmission and downlink reception beams. At this time, DCI format 1_1 or 1_2 may include downlink data channel scheduling information (with DL assignment) or may not include the same (without DL assignment).

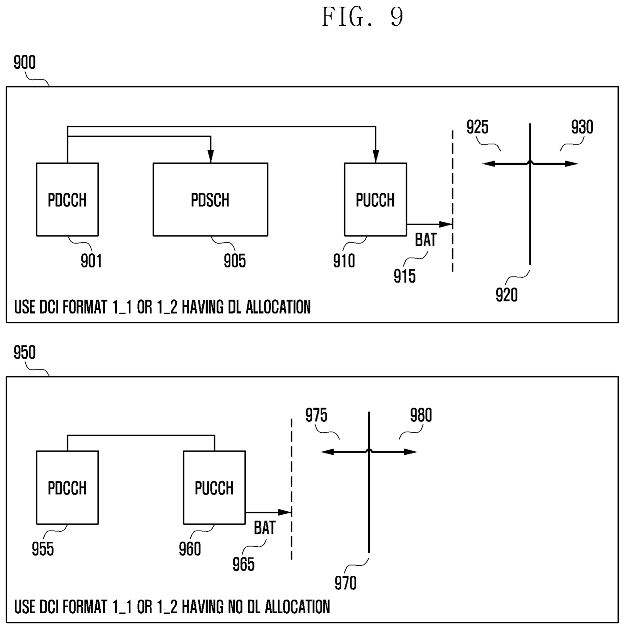

FIG. 9 is a diagram illustrating a beam application time that can be considered when the unified TCI scheme is used in a wireless communication system according to an embodiment of the disclosure. As described above, the UE may receive DCI format 1_1 or 1_2 that includes downlink data channel scheduling information (with DL assignment) or does not include the same (without DL assignment) from the BS and apply one joint TCI state or separate TCI state set indicated by the TCI state field within the corresponding DCI to the uplink transmission and downlink reception beams.

- DCI format 1_1 or 1_2 with DL assignment 900:when the UE receives DCI format 1_1 or 1_2 including downlink data channel scheduling information from the BS as indicated by reference numeral 901 and indicates one joint TCI state or separate TCI state set based on the unified TCI scheme, the UE may receive a PDSCH scheduled based on the received DCI as indicated by reference numeral 905 and transmit a PUCCH including HARQ-ACK meaning whether the DCI and the PDSCH are successfully received as indicated by reference numeral 910. At this time, the HARQ-ACK may include all of whether the DCI is successfully received and whether the PDSCH is successfully received, and the UE may transmit NACK when at least one of the DCI and the PDSCH is not received and transmit ACK when both of them are successfully received.
- DCI format 1_1 or 1_2 without DL assignment 950:when the UE receives DCI format 1_1 or 1_2 that does not include downlink data channel scheduling information from the BS as indicated by reference numeral 955 and indicates one joint TCI state set or separate TCI state set based on the unified TCI scheme, the UE may assume at least one combination among the following matters for the corresponding DCI.

   ■ CRC scrambled using a CS-RSNTI is included.
   ■ Values of all bits allocated to all fields used as a redundancy version (RV) field are 1.
   ■ Values of all bits allocated to all fields used as a modulation and coding scheme (MCS) field are 1.
   ■ Values of all bits allocated to all fields used as a new data indication (NDI) field are 0.
   ■ Values of all bits allocated to a frequency domain resource allocation (FDRA) field are 0 in the case of FDRA type 0, values of all bits allocated to the FDRA field are 1 in the case of FDRA type 1, and values of all bits allocated to the FDRA field are 0 in the case where the FDRA type is dynamicSwitch.

The UE may transmit a PUCCH including HARQ-ACK indicating whether DCI format 1_1 or 1_2 in which the above-described matters are assumed has been successfully received as indicated by reference numeral 960.

- When a new TCI state indicated through DCI 901 and 955 is the same as the TCI state that was previously already indicated and thus applied to uplink transmission and downlink reception beams for both DCI format 1_1 or 1_2 with DL assignment 900 and DCI format 1_1 or 1_2 without DL assignment 950, the UE may maintain the existing applied TCI state. When the new TCI state is different from the previously indicated TCI state, the UE may determine an application time point of a joint TCI state or separate TCI state set which can be indicated from a TCI state field included in the DCI as an interval 930 or 980 after an initial slot 920 or 970 after a beam application time (BAT) 915 or 965 from PUCCH transmission and use the previously indicated TCI-state until an interval 925 or 975 before the corresponding slot 920 or 970.
- For both DCI format 1_1 or 1_2 with DL assignment 900 and DCI format 1_1 or 1_2 without DL assignment 950, the BAT is the specific number of OFDM symbols and may be configured through higher-layer signaling based on UE capability report information, and numerology for the BAT and a first slot after the BAT may be determined based on the smallest numerology among all cells to which the joint TCI states or the separate TCI state set indicated through the DCI is applied.

The UE may apply one joint TCI state indicated through the MAC-CE or the DCI to reception of control resource sets connected to all UE-specific search spaces, reception of a PDSCH scheduled by a PDCCH transmitted from the corresponding control resource sets, transmission of the PUSCH, and transmission of all PUCCH resources.

When one separate TCI state set indicated through the MAC-CE or the DCI includes one DL TCI state, the one separate TCI state set may be applied to reception of control resource sets connected to all UE-specific search spaces and reception of a PDSCH scheduled by a PDCCH transmitted from the corresponding control resource sets and may be applied to all PUSCH and PUCCH resources, based on the previously indicated UL TCI state.

When one separate TCI state set indicated through the MAC-CE or the DCI includes one UL TCI state, the UE may apply the one separate TCI state set to all PUSCH and PUCCH resources, reception of control resource sets connected to all UE-specific search spaces, based on the existing indicated DL TCI state, and reception of a PDSCH scheduled by a PDCCH transmitted from the corresponding control resource sets.

When one separate TCI state set indicated through the MAC-CE or the DCI includes one DL TCI state and one UL TCI state, the UE may apply the DL TCI state to reception of control resource sets connected to all UE-specific search spaces and reception of a PDSCH scheduled by a PDCCH transmitted from the corresponding control resource sets, and apply the UL TCI state to all PUSCHs and PUCCH resources.

[Unified TCI state MAC-CE]

Hereinafter, a method of indicating and activating a single TCI state based on the unified TCI scheme is described. The UE may receive scheduling of a PDSCH including the following MAC-CE from the BS and analyze each codepoint of a TCI state field within DCI format 1_1 or 1_2 after three slots for transmitting HARQ-ACK for the corresponding PDSCH to the BS, based on information within the MAC-CE received from the BS. That is, the UE may activate each entry of the MAC-CE received from the BS in each codepoint of the TCI state field within DCI format 1_1 or 1_2.

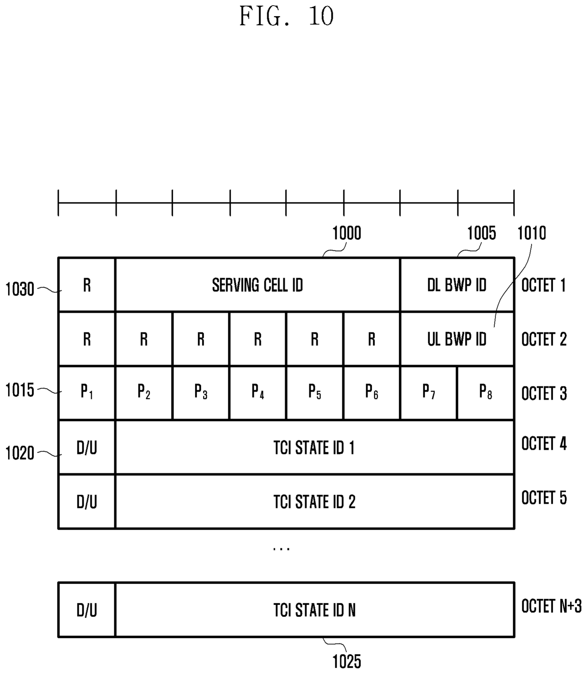

FIG. 10 is a diagram illustrating another MAC-CE format for activating and indicating a joint TCI state or a separate DL or UL TCI state in a wireless communication system according to an embodiment of the disclosure. The meaning of each field within the corresponding MAC-CE format is described below.

- Serving cell ID 1000:this field may indicate a serving cell to which the corresponding MAC-CE is to be applied. The length of this field may be 5 bits. When the serving cell indicated by this field is included in one or more of simultaneousU-TCI-UpdateListl, simultaneousU-TCI-UpdateList2, simultaneousU-TCI-UpdateList3, or simultaneousU-TCI-UpdateList4 which is higher-layer signaling, the corresponding MAC-CE may be applied to all serving cells included in a list of one or more of simultaneousU-TCI-UpdateListl, simultaneousU-TCI-UpdateList2, simultaneousU-TCI-UpdateList3, and simultaneousU-TCI-UpdateList4 including the serving cell indicated by this field.
- DL BWP ID 1005:this field may indicate a DL BWP to which the corresponding MAC-CE is to be applied, and the meaning of each codepoint in this field may correspond to each codepoint of a bandwidth part indicator within DCI. The length of this field may be 2 bits.
- UL BWP ID 1010:this field may indicate a UL BWP to which the corresponding MAC-CE is to be applied, and the meaning of each codepoint in this field may correspond to each codepoint of a bandwidth part indicator within DCI. The length of this field may be 2 bits.
- $P_i$ 1015:this field may indicate whether each codepoint in the TCI state field within DCI format 1_1 or 1_2 has a plurality of TCI states or one TCI state. When a value of $P_i$ is 1, it may mean that an $i^{th}$ codepoint has a plurality of TCI states, which may imply that the corresponding codepoint may include separate DL TCI states and separate UL TCI state. When a value of $P_i$ is 0, it may mean that an $i^{th}$ codepoint has a single TCI state, which may imply that the corresponding codepoint may include one of the joint TCI state, separate DCI TCI state, or the separate UL TCI state.
- D/U 1020:this field may indicate whether a TCI state ID field within the same octet is a joint TCI state, a separate DL TCI state, or a separate UL TCI state. When this field is 1, the TCI state ID field within the same octet may be the joint TCI state or the separate DL TCI state and, when this field is 0, the TCI state ID within the same octet may be the separate UL TCI state.
- TCI state ID 1025:this field may indicate a TCI state that can be detected by a TCI-StateId corresponding to higher-layer signaling. When a D/U field is configured as 1, this field may be used to express the TCI-StateId that can be expressed by 7 bits. When the D/U field is configured as 0, a most significant bit (MSB) of this field may be considered as being reserved, and the remaining 6 bits may be used to express the UL-TCIState-Id corresponding to higher-layer signaling. The maximum number of TCI states that can be activated may be 8 in the case of the joint TCI state and 16 in the case of the separate DL or UL TCI state.
- R:indicates a reserved bit and may be configured as 0.

For the MAC-CE formats in FIG. 10, the UE may include a third octet including fields $P_1$, $P_2$, ..., $P_8$ into the corresponding MAC-CE format in FIG. 10 regardless of whether unifiedTCI-StateType-r17 in MIMOparam-r17 within ServingCellConfig corresponding to higher-layer signaling is configured as joint or separate. In this case, the UE may perform TCI state activation by using the fixed MAC-CE format regardless of higher-layer signaling configured by the BS. In another example, for the MAC-CE format in FIG. 10, when unifiedTCI-StateType-r17 in MIMOparam-r17 within ServingCellConfig corresponding to higher-layer signaling is configured as joint, the UE may omit the third octet including the fields $P_1$, $P_2$,..., $P_8$ in FIG. 10. In this case, the UE may save a maximum of 8 bits of payload of the corresponding MAC-CE according to higher-layer signaling configured by the BS. Further, all of D/U fields located in first bits from the fourth octet in FIG. 10 may be considered as R fields, and all of the corresponding R fields may be configured as 0 bits.

[CSI resource configuration]

In NR, there is the CSI framework through which the BS instructs the UE to measure and report channel state information (CSI). The CSI framework in NR may be constituted by a minimum of two elements such as resource setting and report setting, and the report setting may have a correlation with the resource setting with reference to at least one of IDs of the resource setting.

According to an embodiment of the disclosure, the resource setting may include information related to a reference signal (RS) by which the UE measures channel state information. The BS may configure one or more resource settings in the UE. For example, the BS and the UE may exchange signaling information such as [Table 16] in order to transmit information on the resource setting.

[Table 16]

```
-- ASN1START
-- TAG-CSI-RESOURCECONFIG-START

CSI-ResourceConfig ::=          SEQUENCE {
    csi-ResourceConfigId           CSI-ResourceConfigId,
    csi-RS-ResourceSetList         CHOICE {
        nzp-CSI-RS-SSB                   SEQUENCE {
            nzp-CSI-RS-ResourceSetList    SEQUENCE (SIZE (1..maxNrofNZP-CSI-RS-ResourceSetsPerConfig)) OF NZP-CSI-RS-
ResourceSetId
                                                                                          OPTIONAL, -- Need
R
            csi-SSB-ResourceSetList       SEQUENCE (SIZE (1..maxNrofCSI-SSB-ResourceSetsPerConfig)) OF CSI-SSB-ResourceSetId
                                                                                          OPTIONAL --
Need R
        },
        csi-IM-ResourceSetList         SEQUENCE (SIZE (1..maxNrofCSI-IM-ResourceSetsPerConfig)) OF CSI-IM-ResourceSetId
    },

    bwp-Id                         BWP-Id,
    resourceType                   ENUMERATED { aperiodic, semiPersistent, periodic },
    ...
}

-- TAG-CSI-RESOURCECONFIG-STOP
-- ASN1STOP
```

In [Table 16], signaling information CSI-ResourceConfig includes information on each resource setting. According to the signaling information, each resource setting may include a resource setting index (csi-ResourceConfigId), a BWP index (bwp-ID), a configuration of transmission in the time axis of resources (resourceType), or a resource set list (csi-RS-ResourceSetList) including at least one resource set. The configuration of transmission in the time axis of resources may be configured as aperiodic transmission, semi-persistent transmission, or periodic transmission. The resource set list may be a set including resource sets for channel measurement or resource sets for interference measurement. When the resource set list is sets including resource sets for channel measurement, each resource set may include at least one resource, which may be an index of a CSI reference signal (CSI-RS) resource or a synchronization/-broadcast channel block (SS/PBCH block) (SSB). When the resource set list is sets including resource sets for interference measurement, each resource set may include at least one interference measurement resource (CSI Inference Measurement (CSI-IM)).

For example, when the resource set includes a CSI-RS, the BS and the UE may exchange signaling information such as [Table 17] in order to transmit information on the resource set.

[Table 17]

```
-- ASN1START
-- TAG-NZP-CSI-RS-RESOURCESET-START
NZP-CSI-RS-ResourceSet ::=      SEQUENCE {
    nzp-CSI-ResourceSetId          NZP-CSI-RS-ResourceSetId,
    nzp-CSI-RS-Resources           SEQUENCE (SIZE (1..maxNrofNZP-CSI-RS-ResourcesPerSet)) OF NZP-CSI-RS-ResourceId,
    repetition                     ENUMERATED { on, off }                                OPTIONAL, --
Need S
    aperiodicTriggeringOffset      INTEGER(0..6)                                         OPTIONAL, -- Need
S
    trs-Info                       ENUMERATED {true}                                     OPTIONAL, --
Need R
    ...
}

-- TAG-NZP-CSI-RS-RESOURCESET-STOP
-- ASN1STOP
```

In [Table 17], signaling information NZP-CSI-RS-ResourceSet includes information on each resource set. According to the signaling information, each resource set may include at least information on a resource set index (nzp-CSI-ResourceSetId) or an index set of the included CSI-RS (nzp-CSI-RS-Resources), and may include some of information on a spatial domain transmission filter of the included CSI-RS resource (repetition) or whether the included CSI-RS resource is for tracking (trs-Info).

The CSI-RS may be a most representative reference signal included in the resource set. The BS and the UE may exchange signaling information such as [Table 18] in order to transmit information on the CSI-RS resource.

## [Table 18]

```
-- ASN1START
-- TAG-NZP-CSI-RS-RESOURCE-START

NZP-CSI-RS-Resource ::=              SEQUENCE {
    nzp-CSI-RS-ResourceId               NZP-CSI-RS-ResourceId,
    resourceMapping                     CSI-RS-ResourceMapping,
    powerControlOffset                  INTEGER (-8..15),
    powerControlOffsetSS                ENUMERATED{db-3, db0, db3, db6}        OPTIONAL,    -- Need R
    scramblingID                        ScramblingId,
    periodicityAndOffset                CSI-ResourcePeriodicityAndOffset       OPTIONAL,    -- Cond PeriodicOrSemiPersistent
    qcl-InfoPeriodicCSI-RS              TCI-StateId                            OPTIONAL,    -- Cond Periodic
    ...
}

-- TAG-NZP-CSI-RS-RESOURCE-STOP
-- ASN1STOP
```

In [Table 18], signaling information NZP-CSI-RS-Resource includes information on each CSI-RS. Information included in the signaling information NZP-CSI-RS-Resource may have the following meaning.

- nzp-CSI-RS-ResourceId:CSI-RS resource index
- resourceMapping:resource mapping information of CSI-RS resource
- powerControlOffset:ratio between PDSCH EPRE (Energy Per RE) and CSI-RS EPRE
- powerControlOffsetSS:ratio between SS/PBCH block EPRE and CSI-RS EPRE
- scramblingID:scrambling index of CSI-RS sequence
- periodicityAndOffset:transmission periodicity and slot offset of CSI-RS resource
- qcl-InfoPeriodicCSI-RS:TCI-state information when corresponding CSI-RS is periodic CSI-RS

resourceMapping included in the signaling information NZP-CSI-RS-Resource indicates resource mapping information of the CSI-RS resource and may include frequency resource resource element (RE) mapping, the number of ports, symbol mapping, a CDM type, a frequency resource density, and frequency band mapping information. The number of ports, the frequency resource density, the CDM type, and time-frequency axis RE mapping which can be configured therethrough may have a predetermined value in one of rows of [Table 19] below.

[Table 19]

| Row | Ports $X$ | Density $\rho$ | cdm-Type | $(\overline{k},\overline{l})$ | CDM group index $j$ | $k'$ | $l'$ |
|---|---|---|---|---|---|---|---|
| 1 | 1 | 3 | No CDM | $(k_0,l_0)$, $(k_0+4,l_0)$, $(k_0+8,l_0)$ | 0,0,0 | 0 | 0 |
| 2 | 1 | 1, 0.5 | No CDM | $(k_0,l_0)$ | 0 | 0 | 0 |
| 3 | 2 | 1, 0.5 | FD-CDM2 | $(k_0,l_0)$ | 0 | 0, 1 | 0 |
| 4 | 4 | 1 | FD-CDM2 | $(k_0,l_0)$, $(k_0+2,l_0)$ | 0,1 | 0, 1 | 0 |
| 5 | 4 | 1 | FD-CDM2 | $(k_0,l_0)$, $(k_0,l_0+1)$ | 0,1 | 0, 1 | 0 |
| 6 | 8 | 1 | FD-CDM2 | $(k_0,l_0),(k_1,l_0),(k_2/l_0),(k_3,l_0)$ | 0,1,2,3 | 0, 1 | 0 |
| 7 | 8 | 1 | FD-CDM2 | $(k_0,l_0),(k_1l_0),(k_0,l_0+1),(k_1/l_0+1)$ | 0,1,2,3 | 0, 1 | 0 |
| 8 | 8 | 1 | CDM4 (FD2,TD2) | $(k_0,l_0),(k_1,l_0)$ | 0,1 | 0, 1 | 0, 1 |
| 9 | 12 | 1 | FD-CDM2 | $(k_0,l_0),(k_1,l_0)$, $(k_2,l_0),(k_3,l_0),(k_4,l_0),(k5,l_0)$ | 0,1,2,3,4,5 | 0, 1 | 0 |
| 10 | 12 | 1 | CDM4 (FD2,TD2) | $(k_0,l_0),(k_1,l_0),(k_2,l_0)$ | 0,1,2 | 0, 1 | 0, 1 |
| 11 | 16 | **1, 0.5** | FD-CDM2 | $(k_0,l_0),(k_1,l_0),(k_2,l_0),(k_3,l_0)$, $(k_0,l_0+1),(k_1,l_0+1),(k_2,l_0+1),(k_3,l_0+1)$ | 0,1,2,3, 4,5,6,7 | 0, 1 | 0 |
| 12 | 16 | 1, 0.5 | CDM4 (FD2,TD2) | $(k_0,l_0),(k_1,l_0),(k_2,l_0),(k_3,l_0)$ | 0,1,2,3 | 0, 1 | 0, 1 |
| 13 | 24 | 1, 0.5 | FD-CDM2 | $(k_0,l_0),(k_1,l_0),(k_2,l_0),(k_0,l_0+1),(k_1,l_0+1),(k_2,l_0+1)$, $(k_0,l_1),(k_1,l_1),(k_2,l_1),(k_0,l_1+1),(k_1,l_1,+1),(k_2,l_1+1)$ | 0,1,2,3,4,5, 6,7,8,9,10,11 | 0, 1 | 0 |
| 14 | 24 | 1, 0.5 | CDM4 (FD2,TD2) | $(k_0,l_0),(k_1,l_0),(k_1,l_0),(k_0,l_1),(k_1,l_1),(k_2,l_1)$ | 0,1,2,3,4,5 | 0, 1 | 0, 1 |
| 15 | 24 | 1, 0.5 | CDMB (FD2,TD4) | $(k_0,l_0),(k_1,l_0),(k_2,l_0)$ | 0,1,2 | 0, 1 | 0, **1**, 2, 3 |
| 16 | 32 | 1, 0.5 | FD-CDM2 | $(k_0,l_0),(k_1,l_0),(k_2,l_0),(k_3,l_0)$, $(k_0,l_0+1),(k_1,l_0+1),(k_1,l_0+1),(k_3,l_0+1)$, $(k_0,l_1),(k_1l_1),(k_2,l_1),(k_3,l_1)$, $(k_0,l_1+1),(k_1,l_1,+1),(k_1,l_1+1),(k_3,l_1+1)$ | 0,1,2,3, 4,5,6,7, 8,9,10,11, 12,13,14,15 | 0, 1 | 0 |
| 17 | 32 | 1, 0.5 | CDM4 (FD2,TD2) | $(k_0,l_0)$, $(k_1,l_0),(k_1,l_0),(k_2,l_0),(k_3,l_0),(k_1,l_1),(k_2,l_1),(k_3,l_1)$ | 0,1,2,3,4,5,6,7 | 0, 1 | 0, 1 |
| 18 | 32 | 1, 0.5 | CDM8 (FD2,TD4) | $(k_0,l_0),(k_1,l_0),(k_2,l_0),(k_3,l_0)$ | 0,1,2,3 | 0,1 | 0,1, 2, 3 |

[Table 19] shows a frequency resource density which can be configured according to the number (X) of CSI-RS ports, a CDM type, a start location $\overline{(k,l)}$ in a frequency axis and a time axis of a CSI-RS component RE pattern, the number (k') of REs in the frequency axis of the CSI-RS component RE pattern, and the number of (l') REs in the time axis of the CSI-RS component RE pattern. The CSI-RS component RE pattern may be a basic unit of the CSI-RS resource. Through Y=1+max(k') REs in the frequency axis and Z=1+max(l') REs in the time axis, the CSI-RS component RE pattern may be constituted by YZ REs. When the number of CSI-RS ports is 1, the CSI-RS RE location may be designated without any limit of subcarriers within a physical resource block (PRB), and the CSI-RS RE location may be designated by a bitmap of 12 bits. When the number of CSI-RS ports is {2, 4, 8, 12, 16, 24, 32} and Y=2, the CSI-RS RE location may be designated in every two subcarriers within the PRB, and the CSI-RS RE location may be designated by a bitmap of 6 bits. When the number of CSI-RS ports is 4 and Y=4, the CSI-RS RE location may be designated in every four subcarriers within the PRB, and the CSI-RS RE location may be designated by a bitmap of 3 bits. Similarly, the time axis RE location may be designated by a bitmap of a total of 14 bits.

[CSI report configuration]

According to an embodiment of the disclosure, the report setting may have a correlation with the resource setting with reference to at least one of IDs of the resource setting, and resources setting(s) having the correlation with the report setting provide configuration information including information on a reference signal for channel information measurement. When resource setting(s) having the correlation with the report setting are used for channel information measurement, the measured channel information may be used for a channel information report according to a report method configured in the report setting having the correlation.

According to an embodiment of the disclosure, the report setting may include configuration information related to the CSI report method. For example, the BS and the UE may exchange signaling information such as [Table 20] in order to transmit information related to the report setting.

[Table 20]

```
-- ASN1START
-- TAG-CSI-REPORTCONFIG-START

CSI-ReportConfig ::=                         SEQUENCE {
    reportConfigId                               CSI-ReportConfigId,
    carrier                                      ServCellIndex                   OPTIONAL,   -- Need S
    resourcesForChannelMeasurement               CSI-ResourceConfigId,
    csi-IM-ResourcesForInterference              CSI-ResourceConfigId            OPTIONAL,   -- Need R
    nzp-CSI-RS-ResourcesForInterference          CSI-ResourceConfigId            OPTIONAL,   -- Need R
    reportConfigType                             CHOICE {
        periodic                                     SEQUENCE {
            reportSlotConfig                             CSI-ReportPeriodicityAndOffset,
            pucch-CSI-ResourceList                       SEQUENCE (SIZE (1..maxNrofBWPs)) OF PUCCH-CSI-Resource
        },
        semiPersistentOnPUCCH                        SEQUENCE {
            reportSlotConfig                             CSI-ReportPeriodicityAndOffset,
            pucch-CSI-ResourceList                       SEQUENCE (SIZE (1..maxNrofBWPs)) OF PUCCH-CSI-Resource
        },
        semiPersistentOnPUSCH                        SEQUENCE {
            reportSlotConfig                             ENUMERATED {sl5, sl10, sl20, sl40, sl80, sl160, sl320},
            reportSlotOffsetList                         SEQUENCE (SIZE (1.. maxNrofUL-Allocations)) OF INTEGER(0..32),
            p0alpha                                      P0-PUSCH-AlphaSetId
        },
        aperiodic                                    SEQUENCE {
            reportSlotOffsetList                         SEQUENCE (SIZE (1..maxNrofUL-Allocations)) OF INTEGER(0..32)
        }
    },
    reportQuantity                               CHOICE {
        none                                         NULL,
        cri-RI-PMI-CQI                               NULL,
        cri-RI-i1                                    NULL,
        cri-RI-i1-CQI                                SEQUENCE {
            pdsch-BundleSizeForCSI                       ENUMERATED {n2, n4}                             OPTIONAL    --
Need S
        },
        cri-RI-CQI                                   NULL,
        cri-RSRP                                     NULL,
        ssb-Index-RSRP                               NULL,
        cri-RI-Li-PMI-CQI                            NULL
    },
    reportFreqConfiguration                      SEQUENCE {
        cqi-FormatIndicator                          ENUMERATED { widebandCQI, subbandCQI }              OPTIONAL,   --
Need R
        pmi-FormatIndicator                          ENUMERATED { widebandPMI, subbandPMI }              OPTIONAL,   --
Need R
        csi-ReportingBand                            CHOICE {
            subbands3                                    BIT STRING(SIZE(3)),
            subbands4                                    BIT STRING(SIZE(4)),
            subbands5                                    BIT STRING(SIZE(5)),
            subbands6                                    BIT STRING(SIZE(6)),
            subbands7                                    BIT STRING(SIZE(7)),
            subbands8                                    BIT STRING(SIZE(8)),
            subbands9                                    BIT STRING(SIZE(9)),
            subbands10                                   BIT STRING(SIZE(10)),
            subbands11                                   BIT STRING(SIZE(11)),
            subbands12                                   BIT STRING(SIZE(12)),
            subbands13                                   BIT STRING(SIZE(13)),
            subbands14                                   BIT STRING(SIZE(14)),
            subbands15                                   BIT STRING(SIZE(15)),
            subbands16                                   BIT STRING(SIZE(16)),
            subbands17                                   BIT STRING(SIZE(17)),
            subbands18                                   BIT STRING(SIZE(18)),
            ....
            subbands19-v1530                             BIT STRING(SIZE(19))
        } OPTIONAL       -- Need S
    }                                                                                                   OPTIONAL,   --
Need R
    timeRestrictionForChannelMeasurements        ENUMERATED {configured, notConfigured},
    timeRestrictionForInterferenceMeasurements   ENUMERATED {configured, notConfigured},
```

In [Table 20], signaling information CSI-ResourceConfig includes information on each reporting setting. Information included in the signaling information CSI-ReportConfig may have the following meaning.

- reportConfigId:report setting index
- carrier:serving cell index
- resourcesForChannelMeasurement:resource setting index for channel measurement having the correlation with report setting
- csi-IM-ResourcesForInterference:resource setting index having CSI-IM resources for interference measurement having correlation with report setting
- nzp-CSI-RS-ResourcesForInterference:resource setting index having CSI-RS resources for interference measurement having correlation with report setting
- reportConfigType: indicates time axis transmission configuration of channel report and transmission channel and has configurations of aperiodic transmission, semi-persistent physical uplink control channel (PUCCH) transmission, semi-persistent PUSCH transmission, or periodic transmission
- reportQuantity: indicates a type of reported channel information and may have types of channel information ("cri-RI-PMI-CQI", "cri-RI-il", "cri-RI-il-CQI", "cri-RI-CQI", "cri-RSRP", "ssb-Index-RSRP", and "cri-RI-LI-PMI-CQI") when a channel report is not transmitted ("none") and a channel report is transmitted. Elements included in channel information types are channel quality indicator (CQI), precoding matric indicator (PMI), CSI-RS resource indicator (CRI), SS/PBCH block resource indicator (SSBRI), layer indicator (LI), rank indicator (RI), and/or reference signal received power (L1-RSRP).

- reportFreqConfiguration: indicates whether reported channel information includes only an entire bandwidth (wideband) or includes information on each subband and may have configuration information of a subband including channel information when information on each subband is included.
- timeRestrictionForChannelMeasurements: indicate whether time axis is limited for a reference signal for channel measurement in reference signals referenced by reported channel information
- timeRestrictionForInterferenceMeasurements: indicates whether the time axis is limited for a reference signal for interference measurement in reference signals referenced by reported channel information
- codebookConfig: codebook information referenced by reported channel information
- groupBasedBeamReporting: indicates whether beam grouping of channel report is performed
- cqi-Table: CQI table index referenced by reported channel information
- subbandSize: index indicating subband size of channel information
- non-PMI-PortIndication: port mapping information referred to when non-PMI channel information is reported

When the BS indicates a channel information report through high-layer signaling or L1 signaling, the UE may perform the channel information report with reference to the configuration information included in the indicated report setting.

The BS may indicate the channel state information (CSI) report to the UE through higher-layer signaling including radio resource control (RRC) signaling or medium access control (MAC) control element (CE) signaling, or L1 signaling (for example, common DCI, group-common DCI, or UE-specific DCI).

For example, the BS may indicate an aperiodic CSI report to the UE through higher-layer signaling or DCI using DCI format 0_1. The BS configures a plurality of CSI report trigger states including a parameter for the aperiodic CSI report of the UE or a parameter for the CSI report through higher-layer signaling. The parameter for the CSI report or the CSI report trigger state may include a slot interval between a PDCCH including DCI and a PUSCH including the CSI report or a set including available slot intervals, a reference signal ID for channel state measurement, a type of included channel information, and the like. When the BS indicates some of the plurality of CSI report trigger states to the UE through DCI, the UE reports channel information according to the CSI report configuration of report setting configured in the indicated CSI report trigger state. The channel information report may be performed through a PUSCH scheduled by DCI format 0_1. Time axis resource allocation of the PUSCH including the CSI report of the UE may be performed through a slot interval with a PDCCH indicated through DCI, a start symbol within the slot for time axis resource allocation of the PUSCH, a symbol length indication, and the like. For example, the location of the slot in which the PUSCH including the CSI report of the UE is transmitted may be indicated through a slot interval with the PDCCH indicated through DCI, and the start symbol within the slot and the symbol length can be indicated through a time domain resource assignment field of the DCI.

For example, the BS may indicate a semi-persistent CSI report transmitted to the UE by means of the PUSCH through DCI using DCI format 0_1. The BS may activate or deactivate the semi-persistent CSI report transmitted by means of the PUSCH through DCI scrambled by an SP-CSI-RNTI. When the semi-persistent CSI report is activated, the UE may periodically report channel information according to the configured slot interval. When the semi-persistent CSI report is deactivated, the UE may stop the activated periodic channel information report. The BS configures a parameter for the semi-persistent CSI report of the UE or a plurality of CSI report trigger states including the parameter for the semi-persistent CSI report through higher-layer signaling. The parameter for the CSI report or the CSI report trigger state may include a slot interval between a PDCCH including DCI indicating the CSI report and a PUSCH including the CSI report, a set including available slot intervals, a slot interval between a slot in which higher-layer signaling indicating the CSI report is activated and a PUSCH including the CSI report, a slot interval period of the CSI report, a type of included channel information, and the like. When the BS activates some of a plurality of CSI report trigger states or some of a plurality of report settings in the UE through higher-layer signal or DCI, the UE may report channel information according to a CSI report configuration configured in the report setting included in the indicated CSI report trigger state or in the activated report setting. The channel information report may be performed through a PUSCH semi-persistently scheduled by DCI format 0_1 scrambled by an SP-CSI-RNTI. Time axis resource allocation of the PUSCH including the CSI report of the UE may be performed through a slot interval period of the CSI report, a slot interval with the slot in which higher-layer signaling is activated, a slot interval with a PDCCH indicated through DCI, a start symbol within the slot for time axis resource allocation of the PUSCH, a symbol length indication, and the like. For example, the location of the slot in which the PUSCH including the CSI report of the UE is transmitted may be indicated through the slot interval with the PDCCH indicated through DCI, and the start symbol within the slot and the symbol length can be indicated through a time domain resource assignment field of DCI format 0_1.

For example, the BS may indicate a semi-persistent CSI report transmitted to the UE by means of the PUCCH through higher-layer signaling such as the MAC-CE. Through the MAC-CE signaling, the BS may activate or deactivate the semi-persistent CSI report transmitted by means of the PUCCH. When the semi-persistent CSI report is activated, the UE may periodically report channel information according to the configured slot interval. When the semi-persistent CSI report is deactivated, the UE may stop the activated periodic channel information report. The BS configures the parameter for the semi-persistent CSI report of the UE through higher-layer signaling. The parameter for the CSI report may include PUCCH resources for transmitting the CSI report, a slot interval period of the CSI report, a type of the included channel information, and the like. The UE may transmit the CSI report through the PUCCH. Alternatively, when the PUCCH for the CSI report overlaps the PUSCH, the CSI report may be transmitted by means of the PUSCH. The location of the slot in which the PUCCH including the CSI report is transmitted is indicated through a slot interval period of the CSI report configured through higher-layer signaling and a slot interval between a slot in which higher-layer signaling is activated and the PUCCH including the CSI report, and the start symbol within the slot and the symbol length can be indicated through a start symbol to which the PUCCH resources configured through higher-layer signaling is allocated, and a symbol length.

For example, the BS may indicate a periodic CSI report to the UE through higher-layer signaling. The BS may activate or deactivate the periodic CSI report through higher-layer signaling including RRC signaling. When the periodic CSI report is activated, the UE may periodically report channel information according to the configured slot interval. When the periodic CSI report is deactivated, the UE may stop the activated periodic channel information report. The BS configures report setting including the parameter for the periodic CSI report of the UE through higher-layer signaling. The parameter for the CSI report may include a PUCCH resource configuration for the CSI report, a slot interval between a slot in which higher-layer signaling indicating the CSI report is activated and a PUCCH including the CSI report, a slot interval period of the CSI report, a reference signal ID for channel state measurement, a type of included channel information, and the like. The UE may transmit the CSI report through the PUCCH. Alternatively, when the PUCCH for the CSI report overlaps the PUSCH, the CSI report may be transmitted by means of the PUSCH. The location of the slot in which the PUCCH including the CSI report is transmitted is indicated through a slot interval period of the CSI report configured through higher-layer signaling and a slot interval between a slot in which higher-layer signaling is activated and the PUCCH including the CSI report, and the start symbol within the slot and the symbol length can be indicated through a start symbol to which the PUCCH resources configured through higher-layer signaling is allocated and a symbol length.

For the CSI report setting (CSI-ReportConfig), each report setting CSI-ReportConfig may be associated with one downlink (DL) bandwidth part identified by a higher-layer parameter bandwidth part identifier (bwp-id) given as the CSI resource setting associated with the corresponding report setting, CSI-ResourceConfig. As a time domain report operation for each report setting CSI-ReportConfig, "aperiodic", "semi-persistent", and "periodic" schemes may be supported, which may be configured in the UE by the BS through reportConfigType parameters configured from a higher layer. The semi-persistent CSI reporting method supports "PUCCH-based semi-persistent (semi-PersistentOnPUCCH)" and "PUSCH-based persistent (semi-PersistentOnPUSCH)". In the case of the periodic or semi-persistent CSI reporting method, the UE may receive a configuration of PUCCH or PUSCH resources to transmit the CSI from the BS through higher-layer signaling. A period of PUCCH or PUSCH resources to transmit the CSI and a slot offset may be given as numerology of an uplink (UL) bandwidth part configured to transmit the CSI report. In the case of the aperiodic CSI reporting method, the UE may receive scheduling of PUSCH resources to transmit the CSI from the BS through L1 signaling (above described DCI format 0_1).

For the CSI resource settings (CSI-ResourceConfig), each CSI resource setting CSI-ReportConfig may include $S(\geq 1)$ CSI resource sets (given as a higher-layer parameter csi-RS-ResourceSetList). The CSI resource set list may be constituted by a non-zero power (NZP) CSI-RS resource set and an SS/PBCH block set or constituted by a CSI-interference measurement (CSI-IM) resource set. Each CSI resource setting may be located in a downlink (DL) bandwidth part identified by a higher-layer parameter bwp-id, and the CSI resource setting may be associated with a CSI report setting in the same downlink bandwidth part. The time domain operation of CSI-RS resources within the CSI resource settings may be configured as one of 'aperiodic', 'periodic', or 'semi-persistent' from the higher-layer parameter resourceType. For the periodic or semi-persistent CSI resource settings, the number of CSI-RS resource sets may be limited to S=1, and the configured period and slot offset may be given as numerology of a downlink bandwidth part identified by bwp-id. The UE may receive a configuration of one or more CSI resource settings for channel or interference measurement from the BS through higher-layer signaling and may include, for example, the following CSI resources.

- CSI-IM resources for interference measurement
- NZP CSI-RS resources for interference measurement
- NZP CSI-RS resources for channel measurement

For CSI-RS resource sets associated with resource setting in which higher-layer parameter resourceType is configured as "aperiodic", "periodic", or "semi-persistent", a trigger state for CSI reporting setting in which reportType is configured as "aperiodic" and resource setting for channel or interference measurement for one or a plurality of component cells (CCs) may be configured through a higher-layer parameter CSI-AperiodicTriggerStateList.

The aperiodic CSI report of the UE may use the PUSCH, the periodic CSI report may use the PUCCH, and when the semi-persistent CSI report is triggered or activated by DCI, the semi-persistent CSI report may be performed using the PUCCH after activated by the PUSCH or MAC control element (MAC CE). As described above, the CSI resource setting may also be configured aperiodically, periodically, or semi-persistently. A combination between the CSI report setting and the CSI resource configuration may be supported based on [Table 21] below.

[Table 21]

| Table 5.2.1.4-1: Triggering/Activation of CSI Reporting for the possible CSI-RS Configurations. | | | |
|---|---|---|---|
| **CSI-RS Configuration** | **Periodic CSI Reporting** | **Semi-Persistent CSI Reporting** | **Aperiodic CSI Reporting** |
| Periodic CSI-RS | No dynamic triggering/activation | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

The aperiodic CSI report may be triggered by a "CSI request" field of DCI format 0_1 corresponding to scheduling DCI for the PUSCH. The UE may monitor the PDCCH, acquire DCI format 0_1, and acquire scheduling information for the PUSCH and a CSI request indicator. The CSI request indicator may be configured as NTS (=0, 1, 2, 3, 4, 5, or 6) bit and determined by higher-layer signaling (reportTriggerSize). Among one or a plurality of aperiodic CSI report trigger states which can be configured through high-layer signaling (CSI-AperiodicTriggerStateList), one trigger state may be triggered by the CSI request indicator.

- When all bits of the CSI request field are 0, it may mean that no CSI report is requested.

- When the number (M) of CSI trigger states within the configured CSI-AperiodicTriggerStateList is larger than 2NTs-1, M CSI trigger states may be mapped to 2NTs-1 according to a predefined mapping relation, and one of 2NTs-1 trigger states may be indicated by the CSI request field.

- When the number (M) of CSI trigger states within the configured CSI-AperiodicTriggerStateList is smaller than or equal to 2NTs-1, one of M CSI trigger states may be indicated by the CSI request field.

[Table 22] below shows an example of the relation between the CSI request indicator and the CSI trigger state which can be indicated by the corresponding indicator.

[Table 22]

| CSI request field | CSI trigger state | CSI-ReportConfigId | CSI-ResourceConfigId |
|---|---|---|---|
| 00 | no CSI request | N/A | N/A |
| 01 | CSI trigger state#1 | CSI report#1 | CSI resource#1, |
| | | CSI report#2 | CSI resource#2 |
| 10 | CSI trigger state#2 | CSI report#3 | CSI resource#3 |
| 11 | CSI trigger state#3 | CSI report#4 | CSI resource#4 |

The UE may measure CSI resources in the CSI trigger state triggered by the CSI request field and generate the CSI (including one or more of the CQI, the PMI, the CRI, the SSBRI, the LI, the RI, or the L1-RSRP), based thereon. The UE may transmit the acquired CSI by using a PUSCH scheduled by corresponding DCI format 0_1. When 1 bit corresponding to an uplink data indicator (UL-SCH indicator) within DCI format 0_1 indicates "1", uplink data (UL-SCH) and the acquired CSI may be multiplexed and transmitted to PUSCH resources scheduled by DCI format 0_1. When 1 bit corresponding to an uplink data indicator (UL-SCH indicator) within DCI format 0_1 indicates "0", only the CSI may be mapped and transmitted to PUSCH resources scheduled by DCI format 0_1 without uplink data (UL-SCH).

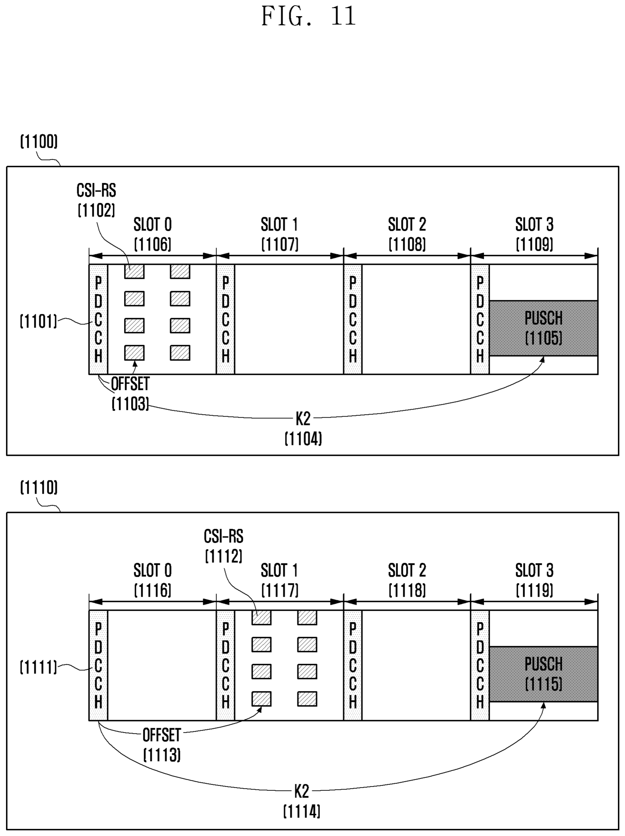

FIG. 11 is a diagram illustrating an example of an aperiodic CSI report method.

In an example 1100 of FIG. 11, the UE may acquire DCI format 0_1 by monitoring a PDCCH 1101 and acquire scheduling information for a PUSCH 1105 and CSI request information therefrom. The UE may acquire, from the received CSI request indicator, resource information for a CSI-RS 1102 to be measured. The UE may determine a time point at which resources of the transmitted CSI-RS 1102 are measured based on a time point at which DCI format 0_1 is received and a parameter for an offset (aperiodicTriggeringOffset) within a CSI resource set configuration (for example, an NZP CSI-RS resource set configuration (NZP-CSI-RS-ResourceSet)). More specifically, the UE may receive a configuration of an offset value X of the parameter aperiodicTriggeringOffset within the NZP-CSI-RS resource set configuration from the BS through higher-layer signaling, and the configured offset value X may be an offset between a slot in which DCI for triggering the aperiodic CSI report is received and a slot in which CSI-RS resources are transmitted. For example, the aperiodicTriggeringOffset parameter value and the offset value X may have the mapping relation shown in [Table 23] below.

[Table 23]

| aperiodicTriggeringOffset | Offset X |
|---|---|
| 0 | 0 slot |
| 1 | 1 slot |
| 2 | 2 slots |
| 3 | 3 slots |
| 4 | 4 slots |
| 5 | 16 slots |
| 6 | 24 slots |

In the example 1100 of FIG. 11, an example of configuring the offset value X=0 is shown. In this case, the UE may receive the CSI-RS 1102 in the slot (corresponding to slot #0 1106 in FIG. 11) for receiving DCI format 0_1 of triggering the aperiodic CSI report and report CSI information measured by the received CSI-RS to the BS through the PUSCH 1105. The UE may acquire scheduling information (information corresponding to each field of DCI format 0_1) for the PUSCH 1105 for the CSI report from DCI format 0_1. For example, the UE may acquire information on a slot to transmit the PUSCH 1105, based on the time domain resource allocation information for the PUSCH 1105 in DCI format 0_1. In the example 1100 of FIG. 11, the UE may acquire 3 that is a K2 value corresponding to a slot offset value for PDCCH-to-PUSCH, and accordingly, the PUSCH 1105 may be transmitted at a time point at which the PUSCH 1105 receives the PDCCH 1101 in slot #3 1109 spaced apart from slot #0 1106 by 3 slots.

In an example 1110 of FIG. 11, the UE may acquire DCI format 0_1 by monitoring a PDCCH 1111 and acquire scheduling information for a PUSCH 1115 and CSI request information therefrom. The UE may acquire, from the received CSI request indicator, resource information for a CSI-RS 1112 to be measured. In the example 1110 of FIG. 11, an example of configuring the offset value for the CSI-RS as X=1 is shown. In this case, the UE may receive the CSI-RS 1112 in the slot (corresponding to slot #0 1116 in FIG. 11) in which DCI format 0_1 that triggers the aperiodic CSI report is received and report CSI information measured by the received CSI-RS to the BS through the PUSCH 1115.

Aperiodic CSI report may include at least one or all of CSI part 1 or CSI part 2, and when the aperiodic CSI report is transmitted through the PUSCH, it may be multiplexed with a transport block. After a CRC is inserted into input bits of the aperiodic CSI for multiplexing, the aperiodic CSI report may be mapped to resource elements within the PUSCH in a specific pattern and transmitted after encoding and rate matching. The CRC insertion may be omitted according to a coding method or the length of input bits. In multiplexing of CSI part 1 or CSI part 2 included in the aperiodic CSI report, the number of modulation symbols calculated for rate matching may be calculated as shown in [Table 24] below.

[Table 24]

For CSI part 1 transmission on PUSCH not using repetition type B with UL-SCH, the number of coded modulation symbols per layer for CSI part 1 transmission, denoted as $Q'_{CSI\text{-}part1}$, is determined as follows:

$$Q'_{CSI\text{-}1} = \min\left\{ \left\lceil \frac{(O_{CSI\text{-}1}+L_{CSI\text{-}1})\cdot\beta^{PUSCH}_{offset}\cdot\Sigma^{N^{PUSCH}_{symb,all}-1}_{l=0} M^{UCI}_{sc}(l)}{\Sigma^{C_{UL\text{-}SCH}-1}_{r=0} K_r} \right\rceil, \left\lceil \alpha\cdot\Sigma^{N^{PUSCH}_{symb,all}-1}_{l=0} M^{UCI}_{sc}(l) \right\rceil - Q'_{ACK/CG-UCI} \right\}$$

...

For CSI part 1 transmission on an actual repetition of a PUSCH with repetition Type B with UL-SCH, the number of coded modulation symbols per layer for CSI part 1 transmission, denoted as is determined as follows:

$$Q'_{CSI\text{-}1} = \min\left\{ \left\lceil \frac{(O_{CSI\text{-}1} + L_{CSI\text{-}1}) \cdot \beta^{PUSCH}_{offset} \cdot \Sigma^{N^{PUSCH}_{symb,nominal}-1}_{l=0} M^{UCI}_{sc,nominal}(l)}{\Sigma^{C_{UL\text{-}SCH}-1}_{r=0} K_r} \right\rceil, \ \alpha \right.$$

$$\left. \cdot \sum^{N^{PUSCH}_{symb,nominal}-1}_{l=0} M^{UCI}_{sc,nominal}(l) \ - Q'_{ACK/CG-UCI}, \right.$$

$$\left. \sum^{N^{PUSCH}_{symb,actual}-1}_{l=0} M^{UCI}_{sc,actual}(l) - Q'_{ACK/CG-UCI} \right\}$$

...

For CSI part 1 transmission on PUSCH without UL-SCH, the number of coded modulation symbols per layer for CSI part 1 transmission, denoted as $Q'_{CSI\text{-}part1}$, is determined as follows:

if there is CSI part 2 to be transmitted on the PUSCH,

$$Q'_{CSI\text{-}1} = \min\left\{ \left\lceil \frac{(O_{CSI\text{-}1} + L_{CSI\text{-}1}) \cdot \beta^{PUSCH}_{offset}}{R \cdot Q_m} \right\rceil, \ \sum^{N^{PUSCH}_{symb,all}-1}_{l=0} M^{UCI}_{sc}(l) - Q'_{ACK} \right\}$$

$$Q'_{CSI\text{-}1} = \sum^{N^{PUSCH}_{symb,all}-1}_{l=0} M^{UCI}_{sc}(l) - Q'_{ACK}$$

else

end if

...

For CSI part 2 transmission on PUSCH not using repetition type B with UL-SCH, the number of coded modulation symbols per layer for CSI part 2 transmission, denoted as $Q'_{CSI\text{-}part2}$, is determined as follows:

$$Q'_{CSI\text{-}2} = \min\left\{ \left\lceil \frac{(O_{CSI\text{-}2}+L_{CSI\text{-}2})\cdot\beta^{PUSCH}_{offset}\cdot\Sigma^{N^{PUSCH}_{symb,all}-1}_{l=0} M^{UCI}_{sc}(l)}{\Sigma^{C_{UL\text{-}SCH}-1}_{r=0} K_r} \right\rceil, \left\lceil \alpha\cdot\Sigma^{N^{PUSCH}_{symb,all}-1}_{l=0} M^{UCI}_{sc}(l) \right\rceil - Q'_{ACK/CG-UCI} - Q'_{CSI\text{-}1} \right\}$$

For CSI part 2 transmission on an actual repetition of a PUSCH with repetition Type B with UL-SCH, the number of coded modulation symbols per layer for CSI part 2 transmission, denoted as $Q'_{CSI\text{-}part2}$, is determined as follows:

$$Q'_{CSI\text{-}2} = \min \left\{ \begin{array}{c} \dfrac{\left(O_{CSI\text{-}2} + L_{CSI\text{-}2}\right) \cdot \beta^{PUSCH}_{offset} \cdot \sum_{l=0}^{N^{PUSCH}_{symb,nominal}-1} M^{UCI}_{sc,nominal}(l)}{\sum_{r=0}^{C_{UL\text{-}SCH}-1} K_r} \quad , \quad \alpha \\[1em] \cdot \sum_{l=0}^{N^{PUSCH}_{symb,nominal}-1} M^{UCI}_{sc,nominal}(l) - Q'_{ACK/CG-UCI} - Q'_{CSI\text{-}1} \; , \\[1em] \sum_{l=0}^{N^{PUSCH}_{symb,actual}-1} M^{UCI}_{sc,actual}(l) - Q'_{ACK/CG-UCI} - Q'_{CSI\text{-}1} \end{array} \right\}$$

...

For CSI part 2 transmission on PUSCH without UL-SCH, the number of coded modulation symbols per layer for CSI part 2 transmission, denoted as $Q'_{CSI\text{-}part2}$, is determined as follows:

$$Q'_{CSI\text{-}2} = \sum_{l=0}^{N^{PUSCH}_{symb,all}-1} M^{UCI}_{sc}(l) - Q'_{ACK} - Q'_{CSI\text{-}1}$$

Particularly, in the case of PUSCH repetitive transmission schemes A and B, the UE may multiplex and transmit the aperiodic CSI report only in the first repetitive transmission of the PUSCH repetitive transmission. This is because the aperiodic CSI report information is encoded in a polar code scheme in which case each PUSCH repetition should have the same frequency and time resource allocation for multiplexing to several PUSCH repetitions, and particularly, since respective actual repetitions may have different OFDM symbol lengths in the case of PUSCH repetition type B, the aperiodic CSI report may be multiplexed and transmitted only to the first PUSCH repetition.

Further, for PUSCH repetitive transmission scheme B, when the UE receives DCI for scheduling the aperiodic CSI report or activating the semi-persistent CSI report without scheduling for the transport block, it may be assumed that a value of the nominal repetition is 1 even though the number of PUSCH repetitive transmissions configured through higher-layer signaling is larger than 1. In addition, when the UE schedules or activates the aperiodic or semi-persistent CSI report without scheduling for the transport block, based on PUSCH repetitive transmission scheme B, the UE may expect that the first nominal repetition is the same as the first actual repetition. For the transmitted PUSCH including the semi-persistent CSI, based on PUSCH repetitive transmission scheme B, without scheduling for DCI after the semi-persistent CSI report is activated by DCI, when the first nominal repetition is different from the first actual repetition, transmission for the first nominal repetition may be ignored.

[CSI computation time]

When the BS indicates the aperiodic CSI report or the semi-persistent CSI report to the UE through DCI, the UE may determine whether a valid channel report can be performed through the indicated CSI report in consideration of a channel computation time required for the CSI report (CSI computation time). For the aperiodic CSI report or the semi-persistent CSI report indicated through DCI, the UE may perform the valid CSI report from an uplink symbol after Z symbols from the end of the last symbol included in the PDCCH including DCI indicating the CSI report, and the Z symbols may vary depending on numerology of a downlink bandwidth part corresponding to the PDCCH including DCI indicting the CSI report, numerology of an uplink bandwidth part corresponding to the PUSCH transmitting the CSI report, and the type or characteristic of channel information reported by the CSI report (report quantity, frequency and granularity, the number of ports of the reference signal, codebook type, and the like). In other words, in order to determine which CSI report is valid (in order to make the corresponding CSI report a valid CSI report), uplink transmission of the corresponding CSI report must not be performed earlier than a symbol Zref, including timing advance. At this time, the symbol Zref is an uplink symbol starting a cyclic prefix (CP) after a time $T_{proc,CSI} = (Z)(2048 + 144) \cdot \kappa 2^{-\mu} \cdot T_C$ from the moment the last symbol of the triggering PDCCH ends. A detailed value of Z follows the description below, and $T_C = 1/(\Delta f_{max} \cdot N_f)$, $\Delta f_{max} = 480 \cdot 10^3 Hz$, $N_f = 4096$, $\kappa = 64$, and $\mu$ are numerology. $\mu$ may be appointed to use a value causing the largest value of $T_{proc,CSI}$ among $(\mu_{PPCCH}, \mu_{CSI\text{-}RS}, \mu_{UL})$ $\mu_{PDCCH}$ denotes subcarrier spacing used for PDCCH transmission, $\mu_{CSI\text{-}RS}$ denotes subcarrier spacing used for CSI-RS transmission, and $\mu_{UL}$ denotes subcarrier spacing of an uplink channel used for uplink control information (UCI) transmission for CSI reporting. In another example, $\mu$ can be appointed to use a value that causes the largest $T_{proc,CSI}$ among $(\mu_{PDCCH}, \mu_{UL})$ The definition of $\mu_{PDCCH}$ and $\mu_{UL}$ refers to the above description. For convenience of later description, satisfaction of the above condition means satisfaction of CSI reporting validity condition 1.

When the reference signal for channel measurement for the aperiodic CSI report indicated to the UE through DCI is an aperiodic reference signal, the UE may perform the valid CSI report from an uplink symbol after Z' symbols from the end of the last symbol including the reference signal, and the Z' symbols may vary depending on numerology of a downlink BWP corresponding to the PDCCH including DCI indicating the CSI report, numerology of a BWP corresponding to a reference signal for channel measurement for the CSI report, numerology of an uplink BWP corresponding to the PUSCH transmitting the CSI report, and a type or a characteristic of channel information reported by the CSI report (report quantity, frequency band granularity, the number of ports of reference signals, codebook type, and the like). In other words, in order to determine which CSI report is valid (in order to make the corresponding CSI report a valid CSI report), uplink transmission of the corresponding CSI report must not be performed earlier than a symbol Zref', including timing advance. At this time, the symbol Zref' is an uplink symbol starting a cyclic prefix (CP) after a time

$$T'_{\mathrm{proc,CSI}} = (Z')(2048 + 144) \cdot \kappa 2^{-\mu} \cdot T_C$$

from the moment the last symbol of the aperiodic CSI-RS or aperiodic CSI-IM triggered by the triggering PDCCH ends. A detailed value of Z' follows the description below, and $T_c = 1/(\Delta f_{max} \cdot N_f)$, $\Delta f_{max} = 480 \cdot 10^3$Hz, $N_f = 4096$, $\kappa = 64$, and $\mu$ are numerology. $\mu$ may be appointed to use a value causing the largest $T_{\mathrm{proc,CSI}}$ among ($\mu_{PDCCH}$, $\mu_{CSI-RS}$, $\mu_{UL}$), $\mu_{PDCCH}$ denotes subcarrier spacing used for PDCCH transmission, $\mu_{CSI-RS}$ denotes subcarrier spacing used for CSI-RS transmission, and $\mu_{UL}$ denotes subcarrier spacing of an uplink channel used for uplink control information (UCI) transmission for CSI reporting. In another example, $\mu$ can be appointed to use a value that causes the largest $T_{\mathrm{proc,CSI}}$ among ($\mu_{PDCCH}$, $\mu_{UL}$). The definition of $\mu_{PDCCH}$ and $\mu_{UL}$ refers to the above description. For convenience of later description, satisfaction of the above condition means satisfaction of CSI reporting validity condition 2.

When the BS indicates the aperiodic CSI report for the aperiodic reference signal to the UE through DCI, the UE may perform the valid CSI report from the first uplink symbol that satisfies all of the time point after Z symbols from the end of the last symbol included in the PDCCH including DCI indicating the CSI report and the time point after Z' symbols from the end of the last symbol including the reference signal. That is, only when CSI reporting validity conditions 1 and 2 are all satisfied, the aperiodic CSI reporting based on the aperiodic reference signal may be determined as the valid CSI report.

When the CSI report time point indicated by the BS does not satisfy a CSI computation time requirement, the UE may determine that the corresponding CSI report is not valid and may not consider an update of the channel information state for the CSI report.

The Z and Z' symbols for calculating the CSI computation time follow [Table 25] and [Table 26] below. For example, when channel information reported by the CSI report includes only wideband information, the number of ports of the reference signal is 4 or smaller, the number of reference signal resources is 1, and the codebook type is "typel-SinglePanel" or the report channel information type (report quantity) is "cri-RI-CQI", the Z and Z' symbols follow values of $Z_1$, $Z'_1$ in [Table 26]. This is named delay requirement 2 later. In addition, when the PUSCH including the CSI report does not include a TB or HARQ-ACK and CPU occupation of the UE is 0, the Z and Z' symbols follow values of $Z_1$, $Z'_1$ in [Table 25], which is named delay requirement 1. The CPU occupation is described below in detail. When the report quantity is "cri-RSRP" or "ssb-Index-RSRP", the Z and Z' symbols follow values of $Z_3$, $Z'_3$ in [Table 26]. $X_1$, $X_2$, $X_3$, and $X_4$ in [Table 26] indicate UE capability for a beam report time and $KB_1$ and $KB_2$ in [Table 26] indicate UE capability for a beam change time. In the case that does not correspond to the type or the characteristic of the channel information reported by the CSI report, Z and Z' symbols follow values of $Z_2$, $Z'_2$ in [Table 26].

[Table 25]

| $\mu$ | $Z_1$ [symbols] | |
|---|---|---|
| | $Z_1$ | $Z'_1$ |
| 0 | 10 | 8 |
| 1 | 13 | 11 |
| 2 | 25 | 21 |
| 3 | 43 | 36 |

**EP 4 694 469 A1**

[Table 26]

| μ | $Z_1$ [symbols] | | $Z_2$ [symbols] | | $Z_3$ [symbols] | |
|---|---|---|---|---|---|---|
| | $Z_1$ | $Z_1'$ | $Z_2$ | $Z_2'$ | $Z_3$ | $Z_3'$ |
| 0 | 22 | 16 | 40 | 37 | 22 | $X_1$ |
| 1 | 33 | 30 | 72 | 69 | 33 | $X_2$ |
| 2 | 44 | 42 | 141 | 140 | $\min(44, X_3 + KB_1)$ | $X_3$ |
| 3 | 97 | 85 | 152 | 140 | $\min(97, X_4 + KB_2)$ | $X_4$ |

[CSI reference resource]

When indicating the aperiodic/semi-persistent/periodic CSI report to the UE, the BS may configure CSI reference resources in order to determine a reference time and a frequency for a channel to be reported by the CSI report. The frequency of the CSI reference resources may be carrier and subband information to measure the CSI, which may correspond to a carrier and reportFreqConfiguration, respectively, in higher-layer signaling CSI-ReportConfig. The time of the CSI reference resources may be defined as a time reference for transmitting the CSI report. For example, when it is indicated to transmit CSI report #X in a carrier to transmit the CSI report and uplink slot n' of the BWP, the time of the CSI reference resources of CSI report #X may be defined as a carrier to measure the CSI and downlink slot n-nCSI-ref of the BWP. The downlink slot n $n = \left\lfloor n' \cdot 2^{\mu_{DL}} / 2^{\mu_{UL}} \right\rfloor$ is calculated as when numerology of the carrier and BWP to measure the CSI is named μDL and numerology of the carrier and BWP to transmit CSI report #X is named μUL. When CSI report #X transmitted in uplink slot n' is the semi-persistent or periodic CSI report, nCSI-ref that is a slot interval between downlink slot n and the CSI reference signal follows $n_{CSI-ref} = 4 \cdot 2^{\mu_{DL}}$. if a single CSI-RS/SSB resource is associated with the corresponding CSI report according to the number of CSI-RS/SSB resources for channel measurement, and follows $n_{CSI-ref} = 5 \cdot 2^{\mu_{DL}}$ if multiple CSI-RS/SSB resources are associated with the corresponding CSI report. When CSI report #X transmitted in uplink slot n' is the aperiodic CSI report, $n_{CSI-ref} = \left\lfloor Z' / N_{symb}^{slot} \right\rfloor$ may be calculated in consideration of the CSI computation time Z' for channel measurement. $N_{symb}^{slot}$ is the number of symbols included in one slot, and is assumed as $N_{symb}^{slot} = 14$ in NR.

When the BS indicates transmission of any CSI report in uplink slot n' to the UE through higher-layer signaling or DCI, the UE may report the CSI by performing channel measurement or interference measurement for CSI-RS resources, CSI-IM resources, or SSB resources that are transmitted not later than a CSI reference resource slot of the CSI report transmitted in uplink slot n' among CSI-RS resources, CSI-IM resources, or SSB resources associated with the corresponding CSI report. The CSI-RS resources, CSI-IM resources, or SSB resources associated with the corresponding CSI report may be CSI-RS resources, CSI-IM resources, or SSB resources included in a resource set configured in resource setting referenced by the report setting for the CSI report of the UE configured through higher-layer signaling, CSI-RS resources, CSI-IM resources, or SSB resources referenced by a CSI report trigger state including a parameter for the corresponding CSI report, or CSI-RS resources, CSI-IM resources, or SSB resources indicated by an ID of a reference signal (RS) set.

In embodiments of the disclosure, the CSI-RS/CSI-IM/SSB occasion is a time point at which CSI-RS/CSI-IM. SSB resource(s) determined by a higher-layer configuration or a combination of the higher-layer configuration and DCI triggering are transmitted. For example, in the semi-persistent or periodic CSI-RS resources, a transmitted slot is determined according to a slot period and slot offset configured through higher-layer signaling, and transmission symbol(s) within the slot are determined according to resource mapping information (resourceMapping). In another example, in the aperiodic CSI-RS resources, a transmitted slot is determined according to a slot offset with the PDCCH including DCI indicating the channel report configured through higher-layer signaling, and transmission symbol(s) within the slot are determined according to resource mapping information (resourceMapping).

The CSI-RS occasion may be determined in consideration of only the transmission time point of each CSI-RS resource or in consideration of all of the transmission time points of one or more CSI-RS resource(s) included in the resource set, and accordingly, the CSI-RS occasion according to each resource set configuration can be interpreted in two ways below.

- Interpretation 1-1: From a start time point of the earliest symbol to an end time point of the latest symbol in which one specific resource is transmitted among one or more CSI-RS resources included in resource set(s) configured in resource setting referenced by report setting configured for the CSI report
- Interpretation 1-2: from a start time point of the earliest symbol in which CSI-RS resources transmitted at the earliest time point are transmitted to an end time point of the latest symbol in which CSI-RS resources transmitted at the latest time point are transmitted among all CSI-RS resources included in resource set(s) configured in resource setting referred to by report setting configured for the CSI report

Hereinafter, in embodiments of the disclosure, the individual application is possible in consideration of all of the two interpretations for the CSI-RS occasion. Further, like in the case of the CSI-RS occasion, all of the two interpretations can be considered for the CSI-IM occasion and the SSB occasion, but the principle is similar to the above description and thus an overlapping description is omitted hereinafter.

In embodiments of the disclosure, "the CSI-RS/CSI-IM/SSB occasion for CSI report #X transmitted in uplink slot n ′″" is a set of the CSI-RS occasion, the CSI-IM occasion, and the SSB occasion which are not later than CSI reference resources of CSI report #X transmitted in uplink slot n' among the CSI-RS occasion, the CSI-IM occasion, and the SSB occasion of CSI-RS resources, CSI-IM resources, and SSB resources included in the resource set configured in resource setting referenced by report setting configured for CSI report #X.

In embodiments of the disclosure, "the latest CSI-RS/CSI-IM/SSB occasion among the CSI-RS/CSI-IM/SSB occasions for CSI report #X transmitted in uplink slot n′″" can have two interpretations below.

- Interpretation 2-1: a set of occasions including the latest CSI-RS occasion among CSI-RS occasions for CSI report #X transmitted in uplink slot n', the latest CSI-IM occasion among CSI-RS occasions for CSI report #X transmitted in uplink slot n', and the latest SSB occasion among SSB occasions for CSI report #0 transmitted in uplink slot n'
- Interpretation 2-2: the latest occasion among all of the CSI-RS occasion, the CSI-IM occasion, and the SSB occasion for CSI report #X transmitted in uplink slot n'

Hereinafter, in embodiments of the disclosure, the individual application is possible in consideration of all of the two interpretations for the "latest CSI-RS/CSI-IM/SSB occasion among the CSI-RS/CSI-IM/SSB occasions for CSI report #X transmitted in uplink slot n′″". When the two interpretations (interpretation 1-1 and interpretation 1-2) are considered for the CSI-RS occasion, the CSI-IM occasion, and the SSB occasion, the "latest CSI-RS/CSI-IM/SSB occasion among the CSI-RS/CSI-IM/SSB occasions for CSI report #X transmitted in uplink slot n′″ can be individually applied in consideration of all of four different interpretations (the application of interpretation 1-1 and interpretation 2-1, the application of interpretation 1-1 and interpretation 2-2, and the application of 1-2 and interpretation 2-1, and the application of interpretation 1-2 and interpretation 2-2) in embodiments of the disclosure.

The BS may indicate the CSI report in consideration of an amount of channel information which can be simultaneously calculated for the CSI report by the UE, that is, the number of channel information computation units (CSI processing units (CPUs)) of the UE. When the number of channel information computation units which the UE can simultaneously calculate is $N_{CPU}$, the UE may not expect the CSI report indication of the BS which requires channel information computations larger than $N_{CPU}$ or may not consider an update of channel information which requires channel information computations larger than $N_{CPU}$. $N_{CPU}$ may be reported by the UE in the BS through higher-layer signaling or may be configured by the BS through higher-layer signaling.

It is assumed that the CSI report which the BS indicated to the UE occupies some or all of the CPUs for channel information computation among the total number $N_{CPU}$ of pieces of channel information which can be simultaneously calculated by the UE. When the number of channel information computation units required for each CSI report, for example, CSI report n (n = 0,1, ... , N - 1) is $O_{CPU}^{(n)}$, the number of channel information computation units required for a total of N CSI reports may be $\sum_{n=0}^{N-1} O_{CPU}^{(n)}$. The channel information computation units required for each reportQuantity configured in the CSI report may be configured as shown in [Table 27] below.

[Table 27]

| |
|---|
| - $O_{CPU}^{(n)} = 0$ : when the reportQuantity configured in the CSI report is set to 'none' and trs-Info is configured in the CSI-RS resource set associated with the CSI report. |

(continued)

| |
|---|
| - $O_{CPU}^{(n)} = 1$ : when the reportQuantity configured in the CSI report is set to 'none', 'cri-RSRP', or 'ssb-Index-RSRP', and trs-Info is not configured in the<br>- CSI-RS resource set associated with the CSI report.<br>When the reportQuantity configured in the CSI report is set to 'cri-RI-PMI-CQI', 'cri-RI-il', 'cri-RI-il-CQI', 'cri-RI-CQI', or 'cri-RI-LI-PMI-CQI'<br><br>>> $O_{CPU}^{(n)} = N_{CPU}$ : when an aperiodic CSI report is triggered and the corresponding CSI report is not multiplexed with one or both of TB/HARQ-ACK. The corresponding CSI report is wideband CSI, corresponds to up to 4 CSI-RS ports, corresponds to a single resource without a CRI report, and has codebookType of 'typeI-SinglePanel' or reportQuantity of 'cri-RI-CQI'<br>(this case corresponds to the delay requirement 1 described above, and can be regarded as a case where the UE quickly calculates CSI by using all available CPUs and reports the same).<br><br>>> $O_{CPU}^{(n)} = K_s$ : all other cases except the above. $K_s$ denotes the number of CSI-RS resources in the CSI-RS resource set for channel measurement. |

When the number of channel information computations required by the UE for a plurality of CSI reports at a specific time point is larger than the number N_CPU of channel information computation units which can be simultaneously calculated by the UE, the UE may not consider an update of channel information for some CSI reports. Among the plurality of indicated CSI reports, a CSI report which does not consider the update of the channel information is determined in consideration of a time during which channel information computation required for at least the CSI report occupies the CPU and a priority of the reported channel information. For example, it is possible to not consider the update of channel information for the CSI report starting at the last time point at which the channel information computation required for the CSI report occupies the CPU and it is possible to not consider the update of channel information preferentially for the CSI report having a low priority of channel information.

The priority of channel information may be determined with reference to [Table 28] below.

[Table 28]

| |
|---|
| CSI priority value $Pri_{iCSI}(y, k, c, s) = 2 \cdot N_{cells} \cdot M_s \cdot y + N_{cells} \cdot M_s \cdot k + M_s \cdot c + s$,<br>- $y$ = 0 for an aperiodic CSI report transmitted through PUSCH, $y$ = 1 for a semi-persistent CSI report transmitted through PUSCH, $y$ = 2 for a semi-persistent CSI report transmitted through PUCCH, $y$ = 3 for a periodic CSI report transmitted through PUCCH;<br>- $k$ = 0 when the CSI report includes L1-RSRP; $k$ = 1 when the CSI report does not include L1-RSRP;<br>- $c$ : serving cell index , $N_{cells}$: maximum number of serving cells configured through higher layer signaling (*maxNrofServingCells*) ;<br>- $s$ : CSI report configuration index *(reportConfigID)*, $M_s$ : maximum number of CSI report configurations configured through higher layer signaling (*maxNrofCSI-ReportConfigurations*). |

The CSI priority for the CSI report is determined through the priority value PriiCSI(y,k,c,s) in [Table 28]. Referring to [Table 28], the CSI priority value is determined through a type of channel information included in the CSI report, a time axis report characteristic of the CSI report (aperiodic, semi-persistent, periodic), a channel (PUSCH or PUCCH) in which the CSI report is transmitted, a serving cell index, or a CSI report configuration index. In the CSI priority for the CSI report, priority values PriiCSI(y,k,c,s) are compared and it is determined that a CSI priority for the CSI report having a smaller priority value is higher.

When the time during which the channel information computation required for the CSI report indicated to the UE by the BS occupies the CPU is a CPU occupation time, the CPU occupation time is determined in consideration of some or all of the type of channel information (report quantity) included in the CSI report, the time axis characteristic (aperiodic, semi-persistent, and periodic) of the CSI report, the slot or symbol occupied by higher-layer signaling or DCI indicating the CSI report, or the slot or symbol occupied by a reference signal for channel state measurement.

[PDCCH: related to DCI]

Subsequently, downlink control information (DCI) in the 5G system is described in detail.

In the 5G system, scheduling information for uplink data (or a physical uplink data channel (physical uplink shared channel (PUSCH)) or downlink data (or physical downlink data channel (physical downlink shared channel (PDSCH)) is transmitted from the BS to the UE through DCI. The UE may monitor a fallback DCI format and a non-fallback DCI format for the PUSCH or the PDSCH. The fallback DCI format may include a predefined fixed field between the BS and the UE, and the non-fallback DCI format may include a configurable field.

The DCI may be transmitted through a physical downlink control channel (PDCCH) after passing through a channel coding and modulation process. A cyclic redundancy check (CRC) may be added to a DCI message payload and may be scrambled by a radio network temporary identifier (RNTI) corresponding to the identity of the UE. Depending on the purpose of the DCI message, for example, UE-specific data transmission, a power control command, a random access response, or the like, different RNTIs may be used. That is, the RNTI is not explicitly transmitted but is included in a CRC calculation process to be transmitted. When the DCI message transmitted through the PDCCH is received, the UE may identify the CRC through the allocated RNTI, and may recognize that the corresponding message is transmitted to the UE if the CRC identification result is correct.

For example, DCI for scheduling a PDSCH for system information (SI) may be scrambled by an SI-RNTI. DCI for scheduling a PDSCH for a random access response (RAR) message may be scrambled by an RA-RNTI. DCI for scheduling a PDSCH for a paging message may be scrambled by a P-RNTI. DCI for notifying of a slot format indicator (SFI) may be scrambled with an SFI-RNTI. DCI for notifying of transmit power control (TPC) may be scrambled with a TPC-RNTI. DCI for scheduling a UE-specific PDSCH or PUSCH may be scrambled with a cell RNTI (C-RNTI).

DCI format 0_0 may be used for fallback DCI for scheduling a PUSCH in which case the CRC may be scrambled by a C-RNTI. DCI format 0_0 in which the CRC is scrambled by the C-RNTI may include, for example, information in [Table 29] below.

[Table 29]

| |
|---|
| - Identifier for DCI formats (DCI format identifier) - [1] bit |
| - Frequency domain resource assignment (frequency domain resource assignment) - $\left[\lceil \log_2 (N_{RB}^{UL, BWP} (N_{RB}^{UL, BWP} + 1)/2) \rceil \right]$ bits |
| - Time domain resource assignment (Time domain resource assignment) - X bits |
| - Frequency hopping flag (Frequency hopping flag) - 1 bit. |
| - Modulation and coding scheme (Modulation and coding scheme) - 5 bits |
| - New data indicator (New data indicator) - 1 bit |
| - Redundancy version (Redundancy version) - 2 bits |
| - HARQ process number (HARQ process number) - 4 bits |
| - TPC command for scheduled PUSCH (Transmit power control (TPC) command for scheduled PUSCH - [2] bits |
| - UL/SUL indicator (Uplink (UL)/supplementary UL (SUL) indicator) - 0 or 1 bit |

DCI format 0_1 may be used for non-fallback DCI for scheduling a PUSCH in which case the CRC may be scrambled with a C-RNTI. DCI format 0_1 in which the CRC is scrambled by the C-RNTI may include, for example, information in [Table 30] below.

[Table 30]

| |
|---|
| - Carrier indicator (Carrier indicator) |
| - 0 or 3 bits |
| - UL/SUL indicator - 0 or 1 bit |
| - Identifier for DCI formats - [1] bits |
| - Bandwidth part indicator (Bandwidth part indicator) - 0, 1 or 2 bits |
| - Frequency domain resource assignment |

(continued)

• For resource allocation type 0(For resource allocation type0), $\lceil N_{RB}^{UL,\,BWP} / P \rceil$ bits

• For resource allocation type 1(For resource allocation type 1),

$$\lceil \log_2 (N_{RB}^{UL,\,BWP} (N_{RB}^{UL,\,BWP} + 1)/2) \rceil \text{ bits}$$

- Time domain resource assignment -1, 2, 3, or 4 bits

- VRB-to-PRB mapping (virtual resource block-to-physical resource block mapping) - 0 or 1 bit, only for resource allocation type 1.

• 0 bit if only resource allocation type 0 is configured;

• 1 bit otherwise.

- Frequency hopping flag - 0 or 1 bit, only for resource allocation type 1.

• 0 bit if only resource allocation type 0 is configured;

• 1 bit otherwise.

- Modulation and coding scheme - 5 bits

- New data indicator - 1 bit

- Redundancy version - 2 bits

- HARQ process number - 4 bits

- 1st downlink assignment index (1st downlink assignment index)-1 or 2 bits

• 1 bit for semi-static HARQ-ACK codebook (for semi-static HARQ-ACK codebook);

• 2 bits for dynamic HARQ-ACK codebook with single HARQ-ACK codebook (for dynamic HARQ-ACK codebook with single HARQ-ACK codebook).

- 2nd downlink assignment index (2nd downlink assignment index)

- 0 or 2 bits

• 2 bits for dynamic HARQ-ACK codebook with two HARQ-ACK sub-codebooks (for dynamic HARQ-ACK codebook with two HARQ-ACK sub-codebooks);

• 0 bit otherwise.

- TPC command for scheduled PUSCH - 2 bits

- SRS resource indicator (SRS resource indicator) - $\left\lceil \log_2 \left( \sum_{k=1}^{L_{max}} \binom{N_{SRS}}{k} \right) \right\rceil$ or $\lceil \log_2 (N_{SRS}) \rceil$ bits

• $\left\lceil \log_2 \left( \sum_{k=1}^{L_{max}} \binom{N_{SRS}}{k} \right) \right\rceil$ bits for non-codebook based PUSCH transmission (for non-codebook based PUSCH transmission);

• $\lceil \log_2 (N_{SRS}) \rceil$ bits for codebook based PUSCH transmission (for codebook based PUSCH transmission).

- Precoding information and number of layers (Precoding information and number of layers)-up to 6 bits

- Antenna ports (Antenna ports)- up to 5 bits

(continued)

> - SRS request (SRS request)- 2 bits
> - CSI request (Channel state information request) - 0, 1, 2, 3, 4, 5, or 6 bits
> - CBG transmission information (code block group transmission information)- 0, 2, 4, 6, or 8 bits
> - PTRS-DMRS association (Phase tracking reference signal-demodulation reference signal relationship)- 0 or 2 bits.
> - beta_offset indicator (beta_offset indicator)- 0 or 2 bits
> - DMRS sequence initialization (Demodulation reference signal sequence initialization)- 0 or 1 bit

DCI format 1_0 may be used for fallback DCI for scheduling a PDSCH in which case the CRC may be scrambled with a C-RNTI. DCI format 1_0 in which the CRC is scrambled by the C-RNTI may include, for example, information in [Table 31] below.

[Table 31]

> - Identifier for DCI formats - [1] bit
>
> - Frequency domain resource assignment - $\left[\left\lceil \log_2(N_{RB}^{DL,\,BWP}(N_{RB}^{DL,\,BWP}+1)/2) \right\rceil\right]$ bits
>
> - Time domain resource assignment - X bits
> - VRB-to-PRB mapping - 1 bit.
> - Modulation and coding scheme - 5 bits
> - New data indicator - 1 bit
> - Redundancy version - 2 bits
> - HARQ process number - 4 bits
> - Downlink assignment index - 2 bits
> - TPC command for scheduled PUCCH - [2] bits
> - PUCCH resource indicator (PUCCH (physical uplink control channel) resource indicator- 3 bits
> - PDSCH-to-HARQ feedback timing indicator (PDSCH-to-HARQ feedback timing indicator)- [3] bits

DCI format 1_1 may be used for non-fallback DCI for scheduling a PDSCH in which case the CRC may be scrambled with a C-RNTI. DCI format 1_1 in which the CRC is scrambled by the C-RNTI may include, for example, information in [Table 32] below.

[Table 32]

> - Carrier indicator - 0 or 3 bits
> - Identifier for DCI formats - [1] bits
> - Bandwidth part indicator - 0, 1 or 2 bits
> - Frequency domain resource assignment
>
>   • For resource allocation type 0, $\left\lceil N_{RB}^{DL,\,BWP}/P \right\rceil$ bits
>
>   • For resource allocation type 1,
>
>   $\left\lceil \log_2(N_{RB}^{DL,\,BWP}(N_{RB}^{DL,\,BWP}+1)/2) \right\rceil$ bits
>
> - Time domain resource assignment -1, 2, 3, or 4 bits
> - VRB-to-PRB mapping - 0 or 1 bit, only for resource allocation type 1.
>
>   • 0 bit if only resource allocation type 0 is configured;
>
>   • 1 bit otherwise.
>
> - PRB bundling size indicator (PRB bundling size indicator) - 0 or 1 bit
> - Rate matching indicator (Rate matching indicator) - 0, 1, or 2 bits
> - ZP CSI-RS trigger (ZP CSI-RS trigger) - 0, 1, or 2 bits
> For transport block 1(For transport block 1):
> - Modulation and coding scheme - 5 bits
> - New data indicator - 1 bit

(continued)

- Redundancy version - 2 bits

For transport block 2(For transport block 2):

- Modulation and coding scheme - 5 bits

- New data indicator - 1 bit

- Redundancy version - 2 bits

- HARQ process number - 4 bits

- Downlink assignment index - 0 or 2 or 4 bits

- TPC command for scheduled PUCCH - 2 bits

- PUCCH resource indicator - 3 bits

- PDSCH-to-HARQ_feedback timing indicator - 3 bits

- Antenna ports - 4, 5 or 6 bits

- Transmission configuration indication (Transmission configuration indication)- 0 or 3 bits

- SRS request - 2 bits

- CBG transmission information - 0, 2, 4, 6, or 8 bits

- CBG flushing out information (Code block group flushing out information) - 0 or 1 bit

- DMRS sequence initialization - 1 bit

[PDCCH:CORESET, REG, CCE, Search Space]

Hereinafter, a downlink control channel in the 5G communication system is described in more detail with reference to the drawings.

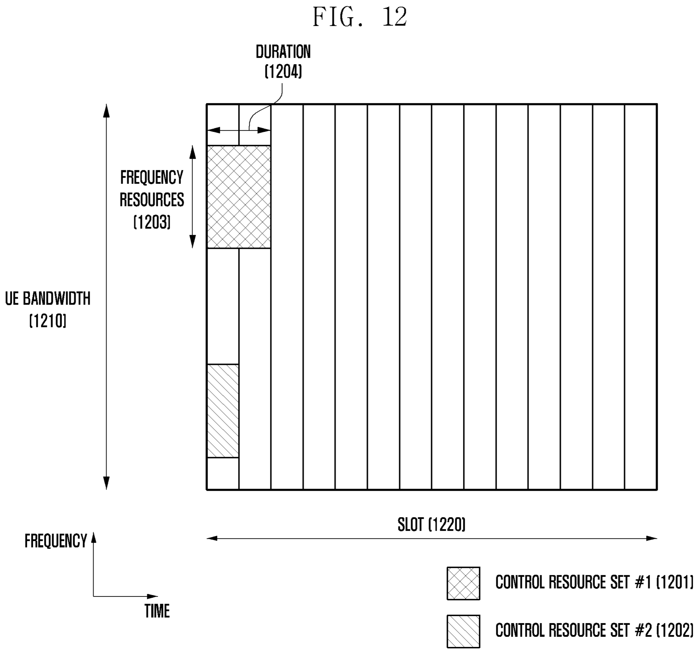

FIG. 12 is a diagram illustrating an example of a control resource set (CORESET) in which a downlink control channel is transmitted in the 5G wireless communication system. FIG. 12 illustrates an example in which a UE bandwidth part 1210 is configured in the frequency axis and two control resource sets (control resource set #1 1201 and control resource set #2 1202) are configured within one slot 1220 in the time axis. The control resource sets 1201 and 1202 may be configured in specific frequency resources 1203 within the entire UE bandwidth part 1210 in the frequency axis. One or a plurality of OFDM symbols may be configured in the time axis, which may be defined as a control resource set duration 1204. Referring to the example illustrated in FIG. 12, control resource set #1 1201 is be configured as the control resource set duration of 2 symbols, and control resource set #2 1202 is configured as the control resource set duration of 1 symbol.

The control resource set in 5G may be configured in the UE by the BS through higher-layer signaling (for example, system information, a master information block (MIB), or radio resource control (RRC) signaling). Configuring the control resource set in the UE may mean providing information such as a control resource set identifier (identity), a frequency location of the control resource set, and a symbol length of the control resource set. For example, the information in [Table 33] below may be included.

[Table 33]

```
ControlResourceSet ::=                                    SEQUENCE {
        -- Corresponds to L1 parameter 'CORESET-ID'


        controlResourceSetId            ControlResourceSetId,
(Control resource set Identifier (Identity))
        frequencyDomainResources        BIT STRING (SIZE (45)),
(Frequency Axis Resource Allocation Information)
        duration                        INTEGER (1..maxCoReSetDuration),
(Time Axis Resource Allocation Information)
        cce-REG-MappingType             CHOICE {
(CCE-to-REG Mapping Scheme)
        interleaved                     SEQUENCE {


        reg-BundleSize                  ENUMERATED {n2, n3, n6},
          (REG Bundle Size)


        precoderGranularity             ENUMERATED
{sameAsREG-bundle, allContiguousRBs},


        interleaverSize                 ENUMERATED {n2, n3, n6}
        (Interleaver Size)


        shiftIndex       INTEGER(0..maxNrofPhysicalResourceBlocks-1)
                            OPTIONAL
          (Interleaver Shift)
        },
        nonInterleaved                  NULL
```

```
},
   tci-StatesPDCCH                          SEQUENCE(SIZE
(1..maxNrofTCI-StatesPDCCH)) OF
      TCI-StateId                           OPTIONAL,
   (QCL Configuration Information)
      tci-PresentInDCI                      ENUMERATED {enabled}
                        OPTIONAL,   -- Need S
   }
```

In [Table 33], tci-StatesPDCCH (simply, referred to as a transmission configuration indication (TCI) state) configuration information may include information on one or a plurality of synchronization signal (SS)/physical broadcast channel (PBCH) block indexes or channel state information reference signal (CSI-RS) indexes having the quasi co-located (QCL) relationship with a DMRS transmitted in the corresponding control resource set.

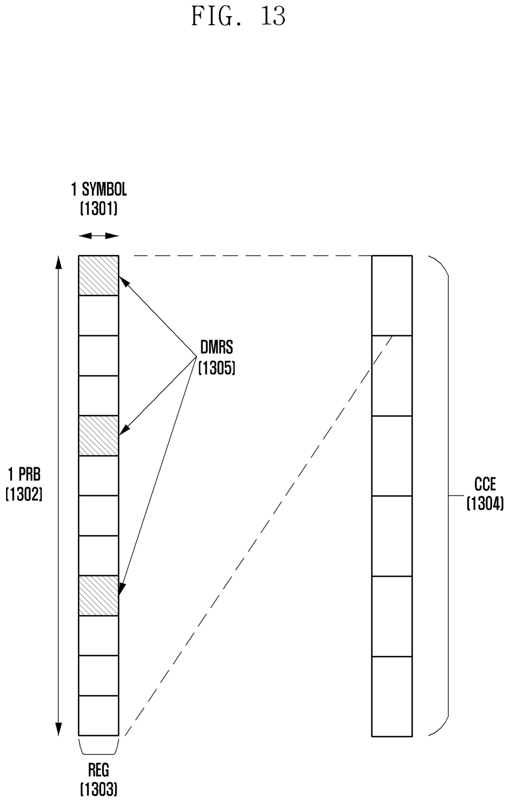

FIG. 13 is a diagram illustrating an example of the basic unit of time and frequency resources constituting a downlink control channel which can be used in 5G. According to FIG. 13, the basic unit of time and frequency resources constituting the control channel may be a resource element group (REG) 1303, and the REG 1303 may be defined as one OFDM symbol 1301 in the time axis and one physical resource block (PRB) 1302 in the frequency axis, that is, as 12 subcarriers. The BS may configure a downlink control channel allocation unit by concatenating the REGs 1303.

As illustrated in FIG. 13, when the basic unit in which the downlink control channel is allocated in the 5G is a control channel element (CCE) 1304, one CCE 1304 may be constituted by a plurality of REGs 1303. In describing the REG 1303 illustrating in FIG. 13 by way of example, the REG 1303 may be constituted by 12 REs, and when 1 CCE 1304 is constituted by 6 REGs 1303, 1 CCE 1304 may be constituted by 72 REs. When a downlink control resource set is configured, the corresponding control resource set may be constituted by a plurality of CCEs 1304, and a specific downlink control channel may be mapped to one or a plurality of CCEs 1304 according to an aggregation level (AL) within the control resource set and then transmitted. CCEs 1304 within the control resource set may be distinguished by numbers and the numbers of the CCEs 1304 may be assigned according to a logical mapping scheme.

The basic unit of the downlink control channel illustrated in FIG. 13, that is, the REG 1303, may include all of the REs to which the DCI is mapped and the areas to which DMRSs 1305 corresponding to reference signals for decoding the REs, are mapped. Like in FIG. 13, 3 DMRSs 1305 may be transmitted within 1 REG 1303. The number of CCEs required to transmit the PDCCH may be 1, 2, 4, 8, or 16 according to the aggregation level (AL), and the different numbers of CCEs may be used to implement link adaptation of the downlink control channel. For example, when AL=L, one downlink control channel may be transmitted through L CCEs. The UE is required to detect a signal in the state where the UE is not aware of information on the downlink control channel, and a search space indicating a set of CCEs is defined for blind decoding. The search space is a set of downlink control channel candidates constituting CCEs for which the UE should attempt decoding at the given aggregation level, and there are several aggregation levels at which 1, 2, 4, 8, and 16 CCEs are configured as one group, so that the UE may have a plurality of search spaces. A search space set may be defined as a set of search spaces at all configured aggregation levels.

The search spaces may be classified into a common search space and a UE-specific search space. UEs in a predetermined group or all UEs may search for a common search space of the PDCCH in order to receive cell-common control information such as dynamic scheduling for system information or paging messages. For example, PDSCH scheduling allocation information for transmission of an SIB including information on an operator of a cell, etc., may be received by searching for a common search space of the PDCCH. In the case of the common search space, UEs in a predetermined group or all UEs should receive the PDCCH, and thus it may be defined as a set of pre-appointed CCEs. Scheduling allocation information for the UE-specific PDSCH or PUSCH may be received by searching for a UE-specific search space of the PDCCH. The UE-specific search space may be UE-specifically defined as a UE identity and a function of various system parameters.

In 5G, parameters for the search space of the PDCCH may be configured in the UE by the BS through higher-layer signaling (for example, SIB, MIB, or RRC signaling). For example, the BS may configure, in the UE, the number of PDCCH candidates at each aggregation level L, a monitoring period of the search space, a monitoring occasion in units of symbols within the slot for the search space, a search space type (a common search space or a UE-specific search space), a combination of a DCI format and an RNTI to be monitored in the corresponding search space, and a control resource set index for monitoring the search space. For example, the information in [Table 34] below may be included.

[Table 34]

| |
|---|
| SearchSpace ::=                              SEQUENCE {<br><br> --Identity of the search space. SearchSpaceId = 0 identifies the SearchSpace configured through PBCH (MIB) or ServingCellConfigCommon.<br><br>        searchSpaceId                        SearchSpaceId,<br>     (Search Space Identity)<br><br>        controlResourceSetId                ControlResourceSetId, |

(Control resource set Identity)

      monitoringSlotPeriodicityAndOffset     CHOICE {

(Monitoring Slot Level Periodicity)

          sl1            NULL,

          sl2            INTEGER (0..1),

          sl4            INTEGER (0..3),

          sl5            INTEGER (0..4),

          sl8            INTEGER (0..7),

          sl10           INTEGER (0..9),

          sl16           INTEGER (0..15),

          sl20           INTEGER (0..19)

      }

                    OPTIONAL,

duration(Monitoring Length)      INTEGER (2..2559)

      monitoringSymbolsWithinSlot     BIT STRING (SIZE (14))

                    OPTIONAL,

(Monitoring Symbol in Sot)

      nrofCandidates          SEQUENCE {

(The Number of PDCCH Candidates per Aggregation Level)

          aggregationLevel1         ENUMERATED {n0, n1, n2, n3, n4, n5, n6, n8},

          aggregationLevel2         ENUMERATED {n0, n1, n2, n3, n4, n5, n6, n8},

          aggregationLevel4         ENUMERATED {n0, n1, n2, n3, n4, n5, n6, n8},

          aggregationLevel8         ENUMERATED {n0, n1, n2, n3, n4, n5, n6, n8},

          aggregationLevel16       ENUMERATED {n0, n1, n2, n3, n4, n5, n6, n8}

```
        },


        searchSpaceType                    CHOICE {
        (Search Space Type)
--Configures this search space as common search space (CSS) and DCI
formats to monitor.
        common                             SEQUENCE {
        (Common Search Space)
        }
        ue-Specific                        SEQUENCE {
        (UE-Specific Search Space)
--Indicates whether the UE monitors in this USS for DCI formats 0-0 and 1-0
or for formats 0-1 and 1-1.
        formats                            ENUMERATED {formats0-0-
And-1-0, formats0-1-And-1-1},
        ...
        }
```

The BS may configure one or a plurality of search space sets in the UE according to configuration information. According to some embodiments, the BS may configure search space set 1 and search space 2 in the UE, and the configuration may be performed such that DCI format A scrambled by an X-RNTI in search space set 1 is monitored in the common search space and DCI format B scrambled by a Y-RNTI in search space set 2 is monitored in the UE-specific search space.

According to configuration information, there may be one or a plurality of search space sets in the common search space or the UE-specific search space. For example, search space set #1 and search space set #2 may be configured as common search spaces, and search space set #3 and search space set #4 may be configured as UE-specific search spaces.

In the common search space, the following combinations of DCI formats and RNTIs may be monitored. Of course, the disclosure is not limited to the following examples.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the following combinations of DCI formats and RNTIs may be monitored. Of course, the disclosure is not limited to the following examples.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Specified RNTIs may follow the following definition and purposes.

Cell RNTI (C-RNTI): used for UE-specific PDSCH scheduling
Temporary cell RNTI (TC-RNTI): used for UE-specific PDSCH scheduling
Configured scheduling RNTI (CS-RNTI): used for semi-statically configured UE-specific PDSCH scheduling
Random access RNTI (RA-RNTI): used for scheduling PDSCH at random access stage
Paging RNTI (P-RNTI): used for scheduling PDSCH through which paging is transmitted
System information RNTI (SI-RNTI): used for scheduling PDSCH through which system information is transmitted
Interruption RNTI (INT-RNTI): used for indicating whether puncturing is performed for PDSCH
Transmit power control for PUSCH RNTI (TPC-PUSCH-RNTI): used for indicating PUSCH power control command
Transmit power control for PUCCH RNTI (TPC-PUCCH-RNTI): used for indicating PUCCH power control command
Transmit power control for SRS RNTI (TPC-SRS-RNTI): used for indicating SRS power control command

The above specified DCI formats may follow [Table 35] below.

[Table 35]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM sy mbol(s) where UE may assume no transmission is inten ded for the UE |
| 2_2 | Transmission of TPC commands for PUCCH and PUSC H |
| 2_3 | Transmission of a group of TPC commands for SRS tra nsmissions by one or more UEs |

In 5G, a search space at an aggregation level L in a search space set s in a control resource set p may be expressed as shown in the [Equation 2] below.

[Equation 2]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- $L$ : aggregation level
- $n_{CI}$: carrier index

- $N_{CCE,p}$: total number of CCEs existing within control resource set p $\quad n_{s,f}^{\mu}$
- $\quad$ : slot index

- $M_{s,max}^{(L)}$ : number of PDCCH candidates at aggregation level L

$$m_{s,n_{CI}} = 0, \ldots, M_{s,max}^{(L)} - 1$$

- $\quad$ : index of PDCCH candidate at aggregation level L

-

$$i = 0, \ldots, L - 1$$

$$Y_{p,n_{s,f}^{\mu}} = \left( A_p \cdot Y_{p,n_{s,f}^{\mu}-1} \right) mod\, D \quad , \quad Y_{p,-1} = n_{RNTI} \neq 0 \quad ,$$

$$A_p = 39827 \, for \, pmod3 = 0 \quad , \quad A_p = 39829 \, for \, pmod3 = 1 \quad ,$$

$$A_p = 39839 \, for \, pmod3 = 2 \quad , \quad D = 65537$$

$n_{RNTI}$: UE identifier $Y_{p,n_{s,f}^{\mu}}$ value may correspond to 0 in the case of the common search space. $Y_{p,n_{s,f}^{\mu}}$ value may correspond to a value varying depending on a UE ID (a C-RNTI or an ID configured in the UE by the BS) and a time index in the case of the UE-specific search space.

As a plurality of search space sets can be configured as different parameters (for example, the parameters in [Table 34]) in 5G, a search space set which the UE monitors may be different each time point. For example, when search space set #1 is configured on an X-slot period, search space set #2 is configured on a Y-slot period, and X and Y are different, the UE may monitor all of search space set #1 and search space set #2 in a specific slot, and monitor one of search space set #1 and search space set #2 in a specific slot.

[SS/PBCH block]

Subsequently, a synchronization signal (SS)/PBCH block in 5G is described.

The SS/PBCH block may be a physical layer channel block constituted by a primary SS (PSS), a secondary SS (SSS), and a PBCH. A detailed description thereof is made below.

- PSS: is a signal which is a reference of downlink time/frequency synchronization and provides some pieces of information of a cell ID.
- SSS: is a reference of downlink time/frequency synchronization and provides the remaining cell ID information which the PSS does not provides. In addition, the SSS serves as a reference signal for demodulation of a PBCH.
- PBCH: provides necessary system information required for transmitting and receiving a data channel and a control channel by the UE. The necessary system information may include search space-related control information indicating radio resource mapping information of the control channel, scheduling control information for a separate data channel transmitting system information, and the like.
- SS/PBCH block: the SS/PBCH block is constituted by a combination of PSS, SSS, and PBCH. One or a plurality of SS/PBCH blocks may be transmitted within a time of 5 ms, and each of the transmitted SS/PBCH blocks may be distinguished by an index.

The UE may detect the PSS and the SSS in an initial access step and decode the PBCH. The UE may acquire an MIB from the PBCH and receive a configuration of control resource set (CORESET) #0 (corresponding to a control resource set having control resource set index of 0) therefrom. The UE may monitor control resource set #0, based on the assumption that the selected SS/PBCH block and a demodulation reference signal (DMRS) transmitted in control resource set #0 are quasi co-located (QCL). The UE may receive system information as downlink control information transmitted in control resource set #0. The UE may acquire configuration information related to a random access channel (RACH) required for initial access from the received system information. The UE may transmit a physical RACH (PRACH) to the BS in consideration of the selected SS/PBCH index, and the BS receiving the PRACH may acquire information on the SS/PBCH block index selected by the UE. The BS may know which block is selected by the UE from among the SS/PBCH blocks and that control resource set #0 associated therewith is monitored.

[Related to NC-JT]

According to an embodiment of the disclosure, in order to allow the UE to receive a PDSCH from a plurality of TRPs, non-coherent joint transmission (NC-JT) may be used.

Unlike the conventional system, a 5G wireless communication system may support not only a service requiring a high transmission rate but also both a service having a very short transmission delay and a service requiring a high connection density. In a wireless communication network including a plurality of cells, transmission and reception points (TRPs), or beams, coordinated communication between respective cells, TRPs, or/and beams may satisfy various service requirements by increasing the strength of a signal received by the UE or efficiently controlling interference between the cells, TRPs, or/and beams.

Joint transmission (JT) is a representative transmission technology for the coordinated communication and may increase the strength of a signal received by the UE or throughput by transmitting signals to one UE through different cells, TRPs, or/and beams. At this time, a channel between each cell, TRP, or/and beam and the UE may have significantly different characteristics, and particularly, non-coherent joint transmission (NC-JT) supporting non-coherent precoding between respective cells, TRPs, or/and beams may need individual precoding, MCS, resource allocation, and TCI indication according to the channel characteristics for each link between each cell, TRP, or/and beam and the UE.

The NC-JT transmission may be applied to at least one of a downlink data channel (PDSCH), a downlink control channel (PDCCH), an uplink data channel (PUSCH), and an uplink control channel (PUCCH). In PDSCH transmission, transmission information such as precoding, MCS, resource allocation, and TCI is indicated through DL DCI, and the transmission information should be independently indicated for each cell, TRP, or/and beam for the NC-JT transmission. This is a main factor that increases payload required for DL DCI transmission, which may have a bad influence on reception performance of a PDCCH for transmitting the DCI. Accordingly, in order to support JT of the PDSCH, it is required to carefully design a tradeoff between an amount of DCI information and reception performance of control information.

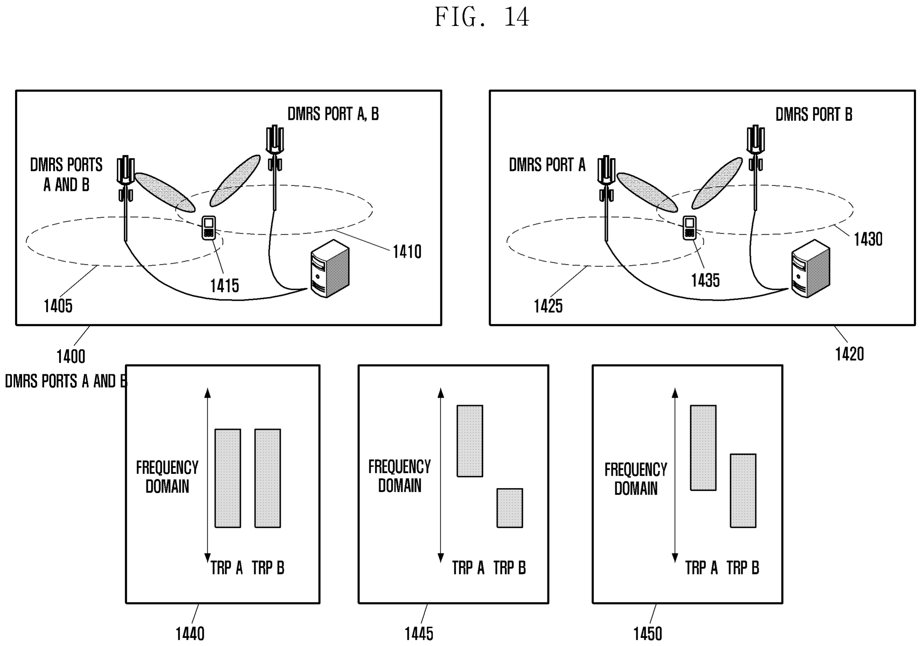

FIG. 14 is a diagram illustrating an antenna port configuration and a resource allocation example to transmit a PDSCH through cooperative communication in a wireless communication system according to an embodiment of the disclosure.

Referring to FIG. 14, the example for PDSCH transmission is described for each scheme of joint transmission (JT), and examples for allocating radio resources for each TRP are illustrated.

Referring to FIG. 14, an example 1400 of coherent joint transmission (C-JT) supporting coherent precoding between respective cells, TRPs, or/and beams is illustrated.

In the case of C-JT, a TRP A 1405 and a TRP B 1410 transmit single data (PDSCH) to a UE 1415, and the plurality of TRPs may perform joint precoding. This may mean that the TRP A 1405 and the TPR B 1410 transmit DMRSs through the same DMRS port in order to transmit the same PDSCH. For example, the TRP A 1405 and the TPR B 1410 may transmit DMRSs to the UE through a DMRS port A and a DMRS B, respectively. In this case, the UE may receive one piece of DCI information for receiving one PDSCH demodulated based on the DMRSs transmitted through the DMRS port A and the DMRS B.

FIG. 14 illustrates an example 1420 of non-coherent joint transmission (NC-JT) supporting non-coherent precoding between respective cells, TRPs, or/and beams for PDSCH transmission.

In the case of NC-JT, the PDSCH is transmitted to a UE 1435 for each cell, TPR, or/and beam, and individual precoding may be applied to each PDSCH. Respective cells, TRPs, or/and beams may transmit different PDSCHs or different PDSCH layers to the UE, thereby improving throughput compared to single cell, TRP, or/and beam transmission. Further, respective cells, TRPs, or/and beams may repeatedly transmit the same PDSCH to the UE, thereby improving reliability compared to single cell, TRP, or/and beam transmission. For convenience of description, the cell, the TRP, or/and the beam are collectively called the TRP.

At this time, various wireless resource allocations such as the case 1440 in which frequency and time resources used by a plurality of TRPs for PDSCH transmission are all the same, the case 1445 in which frequency and time resources used by a plurality of TRPs do not overlap at all, and the case 1450 in which some of the frequency and time resources used by a plurality of TRPs overlap each other may be considered.

In order to support NC-JT, DCIs in various forms, structures, and relations may be considered to simultaneously allocate a plurality of PDSCHs to one UE.

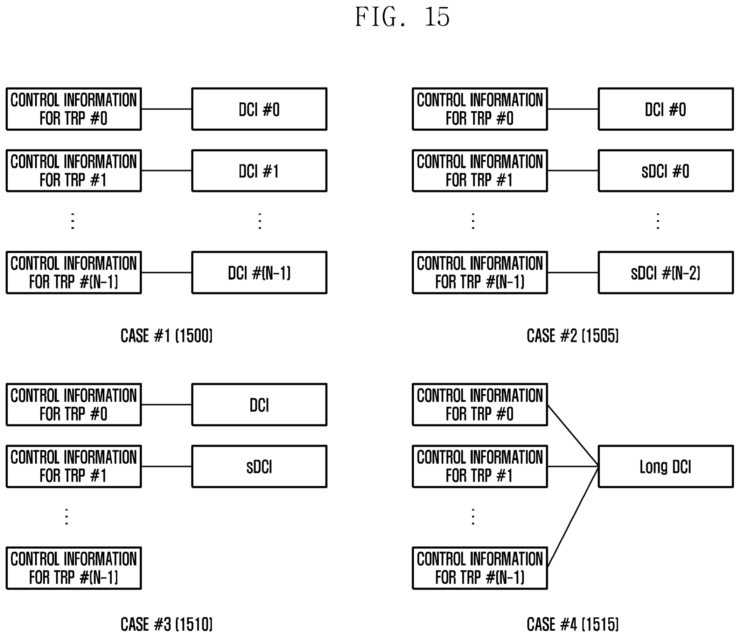

FIG. 15 is a diagram illustrating an example of a configuration of downlink control information (DCI) for NC-JT in which respective TRPs transmit different PDSCHs or different PDSCH layers to the UE in a wireless communication system according to an embodiment of the disclosure.

Referring to FIG. 15, case #1 1500 is an example in which control information for PDSCHs transmitted from (N-1) additional TRPs is transmitted independently from control information for a PDSCH transmitted from a serving TRP in a situation where (N-1) different PDSCHs are transmitted from the (N-1) additional TRPs (TRP #1 to TRP # (N-1)) other than the serving TRP (TRP #0) used for single PDSCH transmission. That is, the UE may acquire control information for PDSCHs transmitted from different TRPs (TRP #0 to TRP #(N-1)) through independent DCI (DCI #0 to DCI #(N-1)). Formats between the independent DCI may be the same as or different from each other, and payload between the DCI may also be the same as or different from each other. In case #1, a degree of freedom of PDSCH control or allocation can be completely guaranteed, but when respective pieces of DCI are transmitted by different TRPs, coverage different for each DCI may be generated and reception performance may deteriorate.

Case #2 1505 is an example in which pieces of control information (DCI) for PDSCHs of (N-1) additional TRPs are transmitted and each piece of the DCI is dependent on control information for the PDSCH transmitted from the serving TRP in a situation where (N-1) different PDSCHs are transmitted from (N-1) additional TRPs (TRP #1 to TRP # (N-1)) other than the serving TRP (TRP #0) used for single PDSCH transmission.

For example, in the case of DCI #0 that is control information for the PDSCH transmitted from the serving TRP (TRP #0), all information elements of DCI format 1_0, DCI format 1_1, and DCI format 1_2 may be included, and in the case of shortened DCI (hereinafter, referred to as sDCI (sDCI #0 to sDCI #(N-2)) corresponding to control information for PDSCHs transmitted from cooperative TRPs (TRP #1 to TRP #(N-1)), only some of the information elements of DCI format 1_0, DCI format 1_1, and DCI format 1_2 may be included. Accordingly, the sDCI for transmitting control information of PDSCHs transmitted from cooperative TPRs has smaller payload compared to the normal DCI (nDCI) for transmitting control information related to the PDSCH transmitted from the serving TRP, and thus can include reserved bits compared to the nDCI.

In case #2, a degree of freedom of each PDSCH control or allocation may be limited according to content of information elements included in the sDCI, but reception performance of the sDCI is better than the nDCI, and thus a probability of the generation of difference between DCI coverage may become lower.

Case #3 1510 is an example in which one piece of control information for PDSCHs of (N-1) additional TRPs is transmitted and the DCI is dependent on control information for the PDSCH transmitted from the serving TRP in a situation where (N-1) different PDSCHs are transmitted from the (N-1) additional TRPs (TRP #1 to TRP # (N-1)) other than the serving TRP (TRP #0) used for single PDSCH transmission.

For example, DCI #0 corresponding to control information for the PDSCH transmitted from the serving TRP (TRP #0) may include all information elements of DCI format 1_0, DCI format 1_1, and DCI format 1_2, but only some of the information elements of DCI format 1_0, DCI format 1_1, and DCI format 1_2 can be gathered in "secondary" DCI (sDCI) and transmitted in the case of control information for PDSCHs transmitted from the cooperative TRPs (TRP #1 to TRP # (N-1)). For example, the sDCI may include at least one piece of HARQ-related information such as frequency domain resource assignment, time domain resource assignment, and the MCS of the cooperative TRPs. In addition, information that is not included in the sDCI such as a bandwidth part (BWP) indicator or a carrier indicator may follow DCI (DCI #0, normal DCI, or nDCI) of the serving TRP.

In case #3 1510, a degree of freedom of PDSCH control or allocation may be limited according to content of the information elements included in the sDCI, but reception performance of the sDCI can be controlled, and case #3 1510 may have reduced complexity of DCI blind decoding of the UE compared to case #1 1500 or case #2 1505.

Case #4 1515 is an example in which control information for PDSCHs transmitted from (N-1) additional TRPs is transmitted in DCI (long DCI) that is the same as that of control information for the PDSCH transmitted from the serving TRP in a situation where different (N-1) PDSCHs are transmitted from the (N-1) additional TRPs (TRP #1 to TRP # (N-1)) other than the serving TRP (TRP #0) used for single PDSCH transmission. That is, the UE may acquire control information for PDSCHs transmitted from different TRPs (TRP #0 to TRP # (N-1)) through single DCI. In case #4 1515, complexity of DCI blind decoding of the UE may not be increased, but a degree of freedom of PDSCH control or allocation may be low since the number of cooperative TRPs is limited according to a long DCI payload restriction.

In the following description and embodiments, the sDCI may refer to various pieces of supplementary DCI such as shortened DCI, secondary DCI, or normal DCI (DCI formats 1_0 and 1_1) including PDSCH control information transmitted in the cooperative TRP, and unless a specific restriction is mentioned, the corresponding description may be similarly applied to the various pieces of supplementary DCI.

In the following description and embodiments, case #1 1500, case #2 1505, and case #3 1510 in which one or more pieces of DCI (PDCCHs) are used to support NC-JT may be classified as multiple PDCCH-based NC-JT and case #4 1515 in which single DCI (or PDCCH) is used to support NC-JT may be classified as single PDCCH-based NC-JT. In multiple PDCCH-based PDSCH transmission, a CORESET for scheduling DCI of the serving TRP (TRP #0) may be separated from CORESETs for scheduling DCI of cooperative TRPs (TRP #1 to TRP #(N-1)). A method of separating the CORESETs may include a method of separating the same through a higher-layer indicator for each CORESET and a method of separating the same through a beam configuration for each CORESET. Further, in single PDCCH-based NC-JT, single DCI may schedule a single PDSCH having a plurality of layers instead of scheduling a plurality of PDSCHs, and the plurality of layers may be transmitted from a plurality of TRPs. At this time, the association relation between a layer and a TRP transmitting the corresponding layer may be indicated through a transmission configuration indicator (TCI) indication for the layer.

In embodiments of the disclosure, the "cooperative TRP" may be replaced with various terms such as a "cooperative panel" or a "cooperative beam" when actually applied.

In embodiments of the disclosure, "the case where NC-JT is applied" may be variously interpreted as "the case where the UE simultaneously receives one or more PDSCHs in one BWP", "the case where the UE simultaneously receives PDSCHs, based on two or more transmission configuration indicator (TCI) indications in one BWP", and "the case where the PDSCHs received by the UE are associated with one or more DMRS port groups" according to circumstances, but is used by one expression for convenience of description.

In the disclosure, the wireless protocol structure for NC-JT may be variously used according to a TRP development scenario. For example, when there is no backhaul delay between cooperative TRPs or there is a small backhaul delay, a method (CA-like method) using a structure based on MAC layer multiplexing can be used similarly to reference numeral S10 of FIG. 5. On the other hand, when the backhaul delay between cooperative TRPs is too large to be ignored (for example, when a time of 2 ms or longer is needed to exchange information such as CSI, scheduling, and HARQ-ACK between cooperative TRPs), a method (DC-like method) of securing a characteristic robust to a delay can be used through an independent structure for each TRP from an RLC layer similarly to reference numeral S20 of FIG. 5.

The UE supporting C-JT or/and NC-JT may receive a C-JT or/and NC-JT-related parameter or a setting value from a higher-layer configuration and set an RRC parameter of the UE, based thereon. For the higher-layer configuration, the UE may use a UE capability parameter, for example, tci-StatePDSCH. The UE capability parameter, for example, tci-StatePDSCH may define TCI states for PDSCH transmission, the number of TCI states may be configured as 4, 8, 16, 32, 64, and 128 in FR1 and as 64 and 128 in FR2, and a maximum of 8 states which can be indicated by 3 bits of a TCI field of the DCI may be configured through a MAC CE message among the configured numbers. A maximum value 128 means a value indicated by maxNumberConfiguredTCistatesPerCC within the parameter tci-StatePDSCH which is included in capability signaling of the UE. As described above, a series of configuration processes from the higher-layer configuration to the MAC CE configuration may be applied to a beamforming indication or beamforming change command for at least one PDSCH from one TRP.

Hereinafter, embodiments of the disclosure are described in detail along with the accompanying drawings. The content in the disclosure can be applied to frequency division duplex (FDD), time division duplex (TDD), and/or cross division duplex (XDD) systems, etc. Hereinafter, in the disclosure, higher signaling (or higher-layer signaling) is a method of transmitting a signal from the BS to the UE through a downlink data channel of a physical layer or from the UE to the BS through an uplink data channel of a physical layer, and may also be referred to as RRC signaling, PDCP signaling, or a medium access control (MAC) control element (CE) (MAC CE).

Hereinafter, in the disclosure, when determining whether to apply cooperative communication, the UE can use various methods by which PDCCH(s) allocating PDSCHs to which cooperative communication is applied have specific formats, PDCCH(s) allocating PDSCHs to which cooperative communication is applied include a specific indicator informing of whether cooperative communication is applied, PDCCH(s) allocating PDSCHs to which cooperative communication is applied are scrambled by a specific RNTI, or the application of cooperative communication to a specific section indicated by a higher layer is assumed. Thereafter, for convenience of description, reception of, by the UE, a PDSCH to which cooperative communication is applied based on conditions similar to the above conditions is referred to as an NC-JT case.

Hereinafter, determining priorities of A and B in the disclosure may be variously expressed as selecting one having a higher priority according to a predetermined priority rule and performing an operation corresponding thereto or omitting (or dropping) an operation for one having a lower priority.

Hereinafter, in the disclosure, the examples are described through a plurality of embodiments, but the embodiments are not independent and one or more embodiments can be simultaneously or complexly applied.

In the following description of the disclosure, for convenience, a cell, a TRP, a panel, a beam, or/and a transmission direction distinguished through a higher layer/L1 parameter of a TCI state, spatial relation information, and the like, or an indicator such as a cell ID, a TRP ID, or a panel ID may be commonly described as a transmission reception point (TRP), a beam, or a TCI state. Accordingly, in the actual application, the TRP, the beam, or the TCI state can be appropriately replaced with one of the above terms.

Hereinafter, in the disclosure, when determining whether to apply cooperative communication, the UE can use various methods by which PDCCH(s) allocating PDSCHs to which cooperative communication is applied have specific formats, PDCCH(s) allocating PDSCHs to which cooperative communication is applied include a specific indicator informing of whether cooperative communication is applied, PDCCH(s) allocating PDSCHs to which cooperative communication is applied are scrambled by a specific RNTI, or the application of cooperative communication to a specific section indicated by a higher layer is assumed. Thereafter, for convenience of description, reception of, by the UE, a PDSCH to which cooperative communication is applied based on conditions similar to the above conditions is referred to as an NC-JT case.

Hereinafter, embodiments of the disclosure are described in detail along with the accompanying drawings. The BS is the entity that allocates resources to the UE, and may be at least one of a gNode B, a gNB, an eNode B, a Node B, a base station (BS), a radio access unit, a radio access point, a BS controller, or a node on a network. The UE may include a user equipment (UE), a mobile station (MS), a cellular phone, a smart phone, a computer, or a multimedia system capable of performing a communication function. Hereinafter, the 5G system is described as an example in embodiments of the disclosure, but the embodiments of the disclosure may be applied to other communication systems having the similar technical background or channel form. For example, mobile communication technologies developed after LTE or LTE-A mobile communication and 5G may be included therein. Accordingly, embodiments of the disclosure may be applied to other communication systems through some modifications without departing from the scope of the disclosure, based on the determination by those skilled in the art. The content in the disclosure can be applied to FDD and TDD systems.

Further, in describing the disclosure, when it is determined that the detailed description for the related function or configuration unnecessarily makes the subject of the disclosure unclear, the detailed description is omitted. Furthermore, the following terms are defined in consideration of the functions in the disclosure, which may vary depending on the intention or practice of a user, an operator, or the like. Therefore, the definitions of the terms should be made based on the contents throughout the specification.

Hereinafter, in describing the disclosure, higher-layer signaling may be at least one of the following signaling or signaling corresponding to one or more combinations.

- Master information block (MIB)
- System information block (SIB) or SIB X (X=1, 2, ...)
- Radio resource control (RRC)
- Medium access control (MAC) control element (CE)

Further, L1 signaling may be at least one of the signaling methods using the following physical layer channel or signaling or signaling corresponding to one or more combinations.

- Physical downlink control channel (PDCCH)
- Downlink control information (DCI)
- UE-specific DCI
- Group common DCI
- Common DCI
- Scheduling DCI (for example, DCI used for scheduling downlink or uplink data)
- Non-scheduling DCI (for example, DCI that is not for scheduling downlink or uplink data)
- Physical uplink control channel (PUCCH)
- Uplink control information (UCI)

Hereinafter, determining priorities of A and B in the disclosure may be variously expressed as selecting one having a higher priority according to a predetermined priority rule and performing an operation corresponding thereto or omitting (or dropping) an operation for one having a lower priority.

Hereinafter, the term slot used in the disclosure is the general term that can refer to a specific time unit corresponding to a transmit time interval (TTI) and, more specifically, may be a slot used in the 5G NR system or a slot or a subframe used in the 4G LTE system.

In the disclosure, unless otherwise specified, scheduling information may be information indicating time and/or frequency resources for a data channel (downlink data channel and/or uplink data channel), and scheduling or performing scheduling may be transmitting scheduling information.

Hereinafter, in the disclosure, the examples are described through a plurality of embodiments but are not independent and one or more embodiments can be simultaneously or complexly applied.

<First embodiment: coexistence method between multiple radio access technologies>

As an embodiment of the disclosure, a coexistence method between multiple radio access technologies (RATs) in the same frequency band is described. The embodiment may be combined and operated with other embodiments.

In a random frequency band, BSs and UEs operating based on one or more radio access technologies may coexist. One BS may operate using one radio access technology or operate using a plurality of radio access technologies, each of which may correspond to a specific antenna port, a specific transmission and reception beam, or a specific TRP of the corresponding BS. One UE may operate using one radio access technology and be connected to a BS using the corresponding radio access technology to perform communication or may have a modem supporting a plurality of radio access technologies and be simultaneously connected to a plurality of BSs through different radio access technologies to perform communication. For example, such a frequency band may be any frequency band from 6 GHz to 12 GHz, but the disclosure is not limited thereto. In the corresponding frequency band, it may be expected that one or more radio access technologies based on the operation in an unlicensed band (or shared spectrum) and one or more radio access technologies based on the operation in a licensed band operate in the same frequency.

In the radio access technology based on the operation in the unlicensed, any BS and UE which are able to operate using the corresponding radio access technology can use the corresponding frequency band, and the use of the frequency band may be free. Accordingly, when the BS or the UE determines that the corresponding frequency band is not used by another BS or another UE, the BS or the UE may use the corresponding frequency band without any payment. For example, the BS or the UE may identify whether a channel in the corresponding frequency band is occupied, and when it is determined that the channel is not occupied, may occupy the corresponding channel to perform communication, and such a scheme may be referred to the radio access technology based on the operation in the unlicensed band. A procedure of identifying whether the channel is occupied in the unlicensed band, for example, a sensing-based procedure of evaluating availability of the channel to perform transmission may be referred to as a channel access procedure or listen before talk (LBT).

The radio access technology based on the operation in the licensed band may operate, based on the assumption that the corresponding frequency band is licensed for a specific purpose, a specific radio access technology, or a communication operator who operates the BS supporting the corresponding radio access technology. Accordingly, the BS and the UE operating based on the corresponding radio access technology may perform communication without any procedure of identifying whether the channel is occupied, performed by the radio access technology based on the operation in the unlicensed band. Further, the radio access technology based on the operation in the licensed band may have no preparation for the coexistence situation with devices operating in other radio access technologies since it may not be expected that there are BSs and UEs based on radio access technologies other than the corresponding radio access technology in the corresponding frequency band. More specifically, with respect to an interference signal or the like by out-of-band radiation generated by the radio access technology in a frequency band adjacent to the corresponding frequency band, the strength of an out-of-band radiation reception signal can be reduced using a channel reception filer or the like in the BS or the UE, but there may be no preparation for an interference signal generated by the radio access technology other than the allowed radio access technology within the corresponding frequency band.

In the corresponding frequency band in which it can be expected to operate one or more radio access technologies based on the operation in the unlicensed band and one or more radio access technologies based on the operation in the licensed band, unlike the assumption by the radio access technology based on the operation in the licensed band, other radio access technologies may exist in the corresponding frequency band (or other radio access technologies may operate in the corresponding frequency band), and different BSs and UEs operating with the respective radio access technologies may have no or insufficient information on the existence of BSs and UEs operating with other radio access technologies. Even though they know the existence or nonexistence, it may be impossible to control transmission and reception resource allocation between different BSs or access points operating with different radio access technologies or perform and control cooperative communication. For example, there may be no higher relay node connected to all of different BSs operating with different radio access technologies or there may be no interface shared between different radio access technologies.

In the following description of the disclosure, the term referring to the radio access technology based on the operation in the unlicensed band may be abbreviated to and named an unlicensed-RAT (U-RAT), and the term referring to the radio access technology based on the operation in the licensed band may be abbreviated to and named a licensed-RAT (L-RAT).

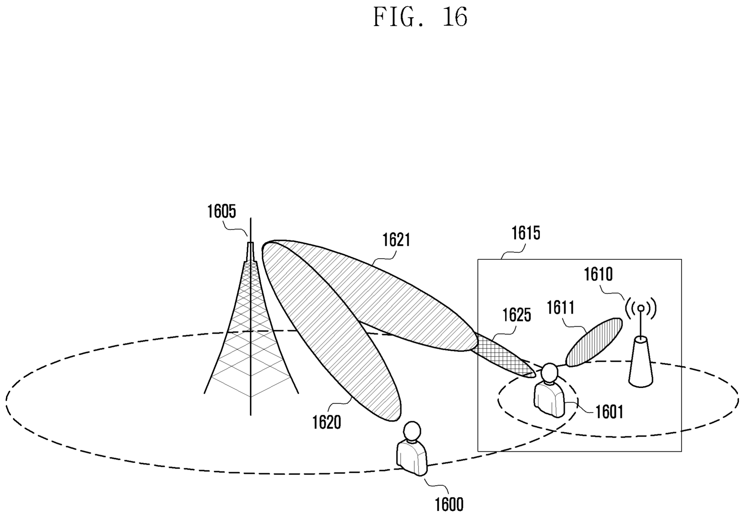

FIG. 16 is a diagram illustrating an example of the coexistence situation of multiple radio access technologies in a wireless communication system according to an embodiment of the disclosure.

Referring to FIG. 16, for example, in the specific frequency band, an L-RAT-based BS or radio access point may exist in an outdoor space as indicated by reference numeral 1605 and a U-RAT-based BS or radio access point may exist in an indoor space 1615 as indicated by reference numeral 1610.

In the case of the existence in the outdoor space, a UE 1600 may be connected to the L-RAT-based BS or radio access point to perform wireless communication in the outdoor space as indicated by reference numeral 1620. When it exists in the indoor space 1615, a UE 1601 may be connected to the L-RAT-based BS or radio access point 1605 existing in the outdoor space and/or connected to the U-RAT-based BS or radio access point 1610 existing in the indoor space 1615.

In the indoor space 1615, a transmission signal 1621 from the L-RAT-based BS or radio access point 1605 existing in the outdoor space may pass through external walls or windows of the building and an attenuation of signal strength may occur as indicated by reference numeral 1625. However, since transmission power of the L-RAT-based BS or radio access point 1605 may relatively stronger than the U-RAT, the strength of the attenuated L-RAT signal 1625 may be similar to the strength of the U-RAT signal 1611 even though the L-RAT signal is attenuated as indicated by reference numeral 1625.

Accordingly, the L-RAT and the U-RAT may coexist in the indoor space 1615, and the L-RAT and the U-RAT do not have a relay node that controls the two RATs or there is no common interface between the L-RAT and the U-RAT, and thus each RAT signal may give interference to each other.

Accordingly, in such the coexistence situation, there may be no way to or it may be difficult to control an interference signal with each other through exchange of information between the L-RAT and the U-RAT, and accordingly, the performance of the UE which is connected to the L-RAT and the U-RAT to operate may deteriorate. When any UE may be connected to both the L-RAT and the U-RAT to operate, the UE and the L-ART or U-RAT-based BS may control interference and/or perform scheduling in consideration of one or more of the following methods or one or more combinations if the L-RAT and the U-RAT coexist.

[Method 1-1]

When the UE may be connected to both the L-RAT BS and the U-RAT BS to operate, the UE may be connected to the L-RAT BS to detect basic information on the corresponding L-RAT and higher-layer signaling received from the corresponding L-RAT BS and transfer the same to the U-RAT BS.

The basic information on the L-RAT which the UE can detect from the L-RAT BS and/or the higher-layer signaling received from the corresponding BS may include one or more of the following matters.

A bandwidth used by the L-RAT BS

Physical cell ID (PCID) information

Waveform-related information (for example, at least one of cyclic prefix OFDM (CP-OFDM) or discrete Fourier transform-spread OFDM (DFT-S-OFDM) (and/or activation (enabled)/deactivation (disabled) of transform precoding))

Subcarrier spacing (when the L-RAT BS operates based on a plurality of subcarriers like OFDM)

Information that can be included in a periodically transmitted channel and signal (for example, at least one of a broadcasted synchronization signal, system information, a paging signal, a reference signal for channel measurement, downlink control channel-related configuration information, information related to sequence of each channel and signal, or demodulation scheme-related information)

Information that can be included in a channel and signal which can be semi-persistently activated and transmitted (for example, at least one of a reference signal for channel measurement, semi-persistent downlink data channel scheduling information, information related to sequence of each channel or signal, and demodulation scheme-related information)

Bandwidth parts (for example, at least one piece of information on one or more activated bandwidth parts and one or more bandwidth parts which are configured but deactivated when a plurality of bandwidth parts are configured)

Information related to a plurality of TRPs (for example, at least one of different TRPs used by the L-RAT BS and the number of beams)

Discontinuous transmission (DTX) and/or DTX-related information (for example, at least one piece of information such as drx-onDurationTimer, drx-InactivityTimer, drx-RetransmissionTimerDL, drx-RetransmissionTimerUL, or ra-ContentionResolutionTimer)

Duplex-related information (for example, at least one of TDD configuration information for each time resource (for example, symbol or slot) when TDD is used, information related to downlink or uplink subbands corresponding to different frequency resources when the uplink or downlink is simultaneously supported by the corresponding different frequency resources within the same time resources, or a period of the corresponding resources and the location in the time and frequency resources when the uplink or downlink are simultaneously supported in the same time and frequency resources)

The UE may transfer some or all of the basic information of the L-RAT and the higher-layer signaling received from the corresponding BS that can be detected from the L-RAT BS to the U-RAT BS. For example, it may be transmitted using at least one of RRC, MAC-CE, UE capability report, or the like. The UE may transmit some or all of the higher-layer signaling through an event trigger scheme according to the reference arbitrarily determined by the UE or, when the UE receives a periodic, semi-persistent, or aperiodic request from the U-RAT BS, transmit some or all of the higher-layer signaling in response thereto.

When information on the L-RAT BS which the UE accesses is changed by a notification from the L-RAT BS, the UE may transfer the changed information on the L-RAT BS to the U-RAT BS. For example, when the UE receives information indicating that information related to a specific periodic signal is changed through a dynamic indication based on RRC, MAC-CE, or L1 signaling from the L-RAT BS, the UE may transfer the corresponding information to the U-RAT BS. In another example, when the UE receives information indicating that the L-RAT BS stops the operation of the corresponding BS to save energy through a dynamic indication based on RRC, MAC-CE, or L1 signaling, the UE may transfer the corresponding information to the U-RAT BS. When the UE transfers the above information to the U-RAT BS, at least one signaling of the RRC, the MAC-CE, or the UE capability report may be used. The UE may transmit the above information through an event trigger scheme according to the reference arbitrarily determined by the UE or, when the UE receives a periodic, semi-persistent, or aperiodic request from the U-RAT BS, may transmit the above information in response thereto.

As described above, when the UE transfer the information on the L-RAT BS to the U-RAT BS, the U-RAT BS may determine whether the channel is efficiently occupied or perform efficient scheduling in consideration of interference between the two BSs, based on the information on the L-RAT BS.

As opposed to the above, when the UE may be connected to both the L-RAT BS and the U-RAT BS to operate, the UE may be connected to the U-RAT BS to detect the received higher-layer signaling and transfer the same to the L-RAT-based BS. The UE may detect basic information on the corresponding U-RAT and higher-layer signaling received from the corresponding U-RAT BS and transfer the same to the L-RAT BS.

The basic information on the U-RAT and/or the higher-layer signaling received from the corresponding BS that can be detected from the U-RAT BS by the UE may include at least one of the following matters.

- A bandwidth used by the U-RAT BS
- Physical cell ID (PCID) information
- Waveform-related information (for example, at least one of OFDM (or CP-OFDM) or DFT-S-OFDM (and/or activation (enabled)/deactivation (disabled) of transform precoding))
- Subcarrier spacing (when the U-RAT BS operates based on a plurality of subcarriers like OFDM)
- Information that can be included in a periodically transmitted channel and signal (for example, at least one of a broadcasted synchronization signal, system information, a paging signal, a reference signal for channel measurement, downlink control channel-related configuration information, information related to sequence of each channel and signal, demodulation scheme-related information, or periodic channel occupation sensing-related information)
- Information that can be included in a channel and signal which can be semi-persistently activated and transmitted (for example, at least one of a reference signal for channel measurement, semi-persistent downlink data channel scheduling information, information related to sequence of each channel and signal, or demodulation scheme-related information)
- Bandwidth parts (for example, at least one piece of information on one or more activated bandwidth parts and one or more bandwidth parts which are configured but deactivated when a plurality of bandwidth parts are configured)
- Information related to a plurality of TRPs (for example, at least one of different TRPs used by the U-RAT BS and the number of beams)
- Discontinuous transmission (DTX) and/or DTX-related information (for example, at least one piece of information such as drx-onDurationTimer, drx-InactivityTimer, drx-RetransmissionTimerDL, drx-RetransmissionTimerUL, or ra-ContentionResolutionTimer)
- Duplex-related information (for example, at least one of TDD configuration information for each time resource (for example, symbol or slot) when TDD is used, information related to downlink or uplink subbands corresponding to different frequency resources when the uplink or downlink is simultaneously supported by the corresponding different frequency resources within the same time resources, or a period of the corresponding resources and the location in the time and frequency resources when the uplink or downlink are simultaneously supported in the same time and frequency resources)

The UE may transfer some or all of the basic information on the U-RAT and the higher-layer signaling received from the corresponding BS that can be detected from the U-RAT BS to the L-RAT BS. For example, it may be transmitted using at least one of RRC, MAC-CE, or UE capability report. The UE may transmit some or all of the higher-layer signaling through an event trigger scheme according to the reference arbitrarily determined by the UE or, when the UE receives a periodic, semi-persistent, or aperiodic request from the L-RAT BS, transmit some or all of the higher-layer signaling in response thereto.

When information on the U-RAT BS which the UE accesses is changed by a notification from the U-RAT BS, the UE may transfer the changed information on the U-RAT BS to the L-RAT BS. For example, when the UE receives information indicating that information related to a specific periodic signal is changed through a dynamic indication based on RRC, MAC-CE, or L1 signaling from the U-RAT BS, the UE may transfer the corresponding information to the L-RAT BS. In another example, when the UE receives information indicating that the U-RAT BS stops the operation of the corresponding BS to save energy through a dynamic indication based on RRC, MAC-CE, or L1 signaling, the UE may transfer the corresponding information to the L-RAT BS. When the UE transfers the above information to the L-RAT BS, at least one signaling of the RRC, the MAC-CE, the UE capability report, or the like may be used. The UE may transmit the information through an even trigger scheme according to the reference arbitrarily determined by the UE or, when the UE receives a periodic, semi-persistent, or aperiodic request from the L-RAT BS, may transmit the information in response thereto.

As described above, when the UE transfers the information on the U-RAT BS to the L-RAT BS, the L-RAT BS may perform efficient scheduling considering interference between the two BSs, based on the information on the U-RAT BS.

[Method 1-2]

When the UE may be connected to both the L-RAT BS and the U-RAT BS to operate and when signals received from the L-RAT BS or the U-RAT BS overlap at some resource element (RE) locations or all RE locations, the UE may perform interference cancellation (IC) for a specific signal among the reception signals from the two BSs in order to easily measure two signals received from the two BSs in the corresponding resources.

The UE may report that the interference cancellation for the specific reception signal is possible to the L-RAT BS and/or the U-RAT BS through UE capability. Further, for the interference cancellation, the UE may transfer one or more of a demodulation scheme for the transmission signals from the L-RAT BS and/or the U-RAT BS, sequence-related information, and time and frequency resource-related information to the L-RAT BS and/or the U-RAT BS. For example, information received from the L-RAT BS may be transferred to the U-RAT BS and/or information received from the U-RAT BS may be transferred to the L-RAT BS.

When the UE reports UE capability indicating that interference cancellation for the signal received from the L-RAT BS is possible to the U-RAT BS and when the signal received from the U-RAT BS overlaps the signal received from the L-RAT BS, the UE may remove the information received from the L-RAT BS from the corresponding reception signal and detect the signal received from the U-RAT BS.

More specifically, for at least the periodic signal among the signals received from the L-RAT BS, when it is unnecessary to receive the periodic signal at a specific time and frequency resource location, based on the determination of the UE, the UE may transfer specific time and frequency information for the corresponding periodic signal to the U-RAT BS to allow the U-RAT BS to transmit the signal to the corresponding time and frequency resource location. The U-RAT BS receiving the same may indicate scheduling for the UE to the specific time and frequency resources among periodic signals of the L-RAT BS reported by the UE as necessary. For example, data for the UE may be scheduled to the specific time and frequency resources. The UE may receive the transmission signal from the U-RAT BS and the periodic signal from the L-RAT BS from which the UE can perform interference cancellation simultaneously or together in the corresponding resources, perform the interference cancellation for the signal from the L-RAT BS in order to detect the transmission signal from the U-RAT BS, and improve the reception performance of the U-RAT BS. At this time, the U-RAT BS may transmit a signal corresponding to scheduling indicated to the UE to the corresponding time and frequency resources without any determination of whether the channel is occupied. As described above, the UE may include information on time and frequency resources of the periodic signal in some information of the scheduling request signal and transfer the same to the U-RAT BS. In the disclosure, simultaneous transmission and reception of a plurality of signals are not limited to transmission and reception of a plurality of signals at the same time point, but may be interpreted as, for example, transmission and reception of a plurality of signal together or transmission and reception thereof within the same time resources (for example, the same TTI).

In another example, when the UE receives a configuration for downlink repetitive transmission from the L-RAT BS and has already completed detected the corresponding transmission during the corresponding repetitive transmission, the UE may transfer information on the downlink repetitive transmission from the corresponding L-RAT BS to the U-RAT BS and transfer a downlink transmission signal which the U-RAT BS desires to the UE through time and frequency resources corresponding to the downlink repetitive transmission from the L-RAT BS. When the UE overlappingly receives the downlink repetitive transmission from the L-RAT BS and the downlink signal from the U-RAT BS, the UE may remove the downlink repetitive transmission from the L-RAT BS from a receiver through an interference cancellation scheme and improve the performance of detection of the downlink signal from the U-RAT BS.

[Method 1-3]

When the UE may be connected to both the L-RAT BS and the U-RAT BS to operate, in order to receive a performance index of a channel between the L-RAT BS and the UE from the UE, the L-RAT BS may configure higher-layer signaling related thereto in the UE.

The UE may receive information on a channel state information reference signal for measuring a channel state between the L-RAT BS and the UE for a specific time and frequency resource from the L-RAT BS through higher-layer signaling. At this time, the L-RAT BS may configure a channel state information reference signal in the UE through higher-layer signaling by using time and frequency resources in which an interference signal which the UE experiences exists and time and frequency resources in which no interference signal exists. The L-RAT BS may use information on the U-RAT BS received from the UE as the reference for determining whether or not the UE experiences the interference signal.

The L-RAT BS may transmit a channel state information reference signal to time and frequency resources through which the U-RAT BS transmits a periodic signal, based on information on the periodic signal of the U-RAT BS received from the UE and indicate the UE to measure a channel state in the corresponding resources, based on the assumption of time and frequency resources in which the UE experiences interference. Further, the L-RAT BS may additionally transmit a channel state information reference signal to time and frequency resources through which the U-RAT BS does not transmit a downlink signal, based on information on the periodic signal of the U-RAT BS received from the UE and indicate the UE to measure a channel state in the corresponding resources, based on the assumption of time and frequency resources in which the UE experiences no interference. At this time, since the U-RAT BS may transmit not only the periodic signal but also an aperiodic signal, the UE may transfer information on time and frequency resources of the channel state information reference signal received from the L-RAT BS to the U-RAT BS. When information on the channel state information reference signal which the UE receives from the L-RAT BS considers interference, the U-RAT BS may transmit a downlink signal to the UE through the corresponding time and frequency resources. When information on the channel state information reference signal which the UE receives from the L-RAT BS does not consider interference, the U-RAT BS may not indicate even scheduling for the aperiodic signal to the UE even though there is no periodic signal in the corresponding time and frequency resources.

As described above, for two time and frequency resources in which an interference signal from the U-RAT BS exists and does not exist from the perspective of the UE, the L-RAT BS may transmit the channel state information reference signal to the UE. The UE may measure a channel state for time and frequency resources in which interference exists or does not exists, based on the channel state information reference signal, and report the measured channel state to the L-RAT BS. Based on the report, the L-RAT BS may help the UE more receive downlink signals from the L-RAT BS by not only scheduling resources in which the U-RAT BS does not transmit the downlink signal to the UE but also indicating more robust scheduling information for resources having interference, based on a channel state for time and frequency resources having interference (for example, the more robust scheduling information may be scheduling information indicating more time and frequency resources even though an MCS of a low index or the same MCS is indicated to have a lower actual coding rate).

Similarly, the UE may receive, from the U-RAT BS, a channel state information reference signal which considers interference from the L-RAT BS or does not consider the interference, measure a channel state between the UE and the U-RAT BS, and report the channel state to the U-RAT BS. The U-RAT BS may refer to the information reported from the UE for scheduling for the corresponding UE.

[Method 1-4]

When the UE may be connected to both the L-RAT BS and the U-RAT BS to operate, the UE may report UE capability indicating that a plurality of individual downlink signals can be simultaneously received using a plurality of reception beams to the L-RAT BS or the U-RAT BS. At this time, the plurality of individual downlink signals may be the same repeated signals or independent different signals. Through a plurality of transmission beams, the L-RAT BS or U-RAT BS receiving the UE capability may transmit downlink signals to the corresponding UE from a plurality of TRPs belonging to the L-RAT BS or a plurality of TRPs belonging to the U-RAT BS.

Similarly, the UE may simultaneously receive the transmission signal from the L-RAT BS and the transmission signal from the U-RAT BS through different reception beams, based on the UE capability indicating that a plurality of individual downlink signals can be simultaneously received using a plurality of reception beams.

In one example, when receiving repetitive transmission for a specific reference signal from the L-RAT BS (that is, receiving a specific reference signal repeatedly transmitted from the L-RAT BS), the UE may transfer higher-layer signaling configuration information therefor to the U-RAT BS. The U-RAT BS receiving the information may transmit different reference signals to the UE through different transmission beams through time and frequency resources in which the L-RAT BS repeatedly transmits the specific reference signal to the UE. The UE may simultaneously receive transmission signals from the L-RAT BS and the U-RAT BS through different reception beams, measure the performance of the reception signals therefor, and transmit the performance to the L-RAT BS or the U-RAT BS. The L-RAT BS or the U-RAT BS may identify which pair of transmission beams give the best performance to the UE, based on a performance index for the simultaneous reception and simultaneously transmit downlink signals to the UE through different transmission beams.

In another example, when the UE are connected to both the L-RAT BS and the U-RAT BS to operate, the UE may transfer information on specific time and frequency resource available by the UE to the L-RAT BS and the U-RAT BS. The L-RAT BS and the U-RAT BS may transmit different reference signals through different transmission beams in the corresponding resources. The UE may receive different reference signals transmitted from respective BSs through different reception beams in the corresponding resources, measure the performance of the corresponding reception signals, and transmit the performance to the L-RAT BS or the U-RAT BS. Based thereon, the L-RAT BS and the U-RAT BS may simultaneously transmit downlink signals to the UE through different transmission beams.

The term beam used in the disclosure may correspond to a specific TRP, a specific reference signal, a specific TCI state, or a specific transmission signal.

[Method 1-5]

When the UE may be connected to both the L-RAT BS and the U-RAT BS to operate, the UE may transmit a request signal to make the L-RAT or U-RAT BS not transmit a downlink signal in specific time and frequency resources.

For example, when the U-RAT BS transmits a periodic signal or a broadcast signal commonly transmitted to all UE connected to the U-RAT BS, the UE may transfer the transmission information of the U-RAT BS to the L-RAT BS. The L-RAT BS may perform dynamic scheduling to the UE while avoiding at least the periodic signal or broadcast signal of the U-RAT BS and transmit the downlink signal. At this time, when the UE receives dynamic scheduling information transmitted from the U-RAT BS, the UE may transfer the scheduling information transmitted from the U-RAT BS (or information thereon) to the L-RAT BS to constrain the L-RAT BS from performing dynamic scheduling in the corresponding resources or, when the scheduling has been already performed from the L-RAT BS, make a request for cancelling the same.

Similarly, when the UE receives the a periodic signal transmitted by the L-RAT or a broadcast signal commonly transmitted to all UE connected to the L-RAT BS, the UE may transfer the transmission information of the L-RAT BS to the U-RAT BS. The U-RAT BS may perform dynamic scheduling to the UE while avoiding at least the periodic signal or broadcast signal of the L-RAT BS and transmit the downlink signal. At this time, when the UE receives dynamic scheduling information transmitted from the L-RAT BS, the UE may transfer the scheduling information transmitted from the L-RAT BS (or information thereon) to the U-RAT BS to constrain the U-RAT BS from performing dynamic scheduling in the corresponding resources or, when the scheduling has been already performed from the U-RAT BS, make a request for cancelling the same.

In another example, the UE may transmit information on a signal having a high priority, based on the specific priority, and make a request for performing scheduling to the L-RAT BS or the U-RAT BS to prevent dynamic scheduling of the L-RAT BS or the U-RAT BS from overlapping the corresponding signal or, when the scheduling has been already performed, may make a request for cancelling a signal having a low priority to the L-RAT BS or the U-RAT BS.

The specific priority may be configured in the UE by the L-RAT BS or the U-RAT BS through higher-layer signaling, may be activated through a MAC-CE, may be dynamically indicated through L1 signaling, or may be notified through a combination of one or more of the higher-layer signaling, the MAC-CE, and the L1 signaling. And/or the specific priority may be defined fixedly to the standard. When one or more combined signaling are used, each signaling may be transmitted from the same BS (for example, one of the L-RAT BS or the U-RAT BS) or transmitted from different BSs (for example, the L-RAT BS and the U-RAT BS).

[Method 1-6]

When the UE may be connected to both the L-RAT BS and the U-RAT BS to operate, the UE may receive a configuration of a combination of one or more of [Method 1-1] to [Method 1-5] through higher-layer signaling, or the combination may be activated through a MAC-CE, indicated through L1 signaling, or notified through a combination of one or more of the higher-layer signaling, the MAC-CE, and the L1 signaling. And/or the combination of one or more of [Method 1-1] to [Method 1-5] may be defined fixedly to the standard. The UE may use configured/activated/indicated/notified/defined methods. When one or more combined signaling are used, each signaling may be transmitted from the same BS (for example, one of the L-RAT BS or the U-RAT BS) or transmitted from different BSs (for example, the L-RAT BS and the U-RAT BS).

In another example, the UE may receive a notification of the combination of one or more of [Method 1-1] to [Method 1-5] from the L-RAT BS and receive a notification of a notification of the combination of one or more of [Method 1-1] to [Method 1-5] from the U-RAT BS. Methods by which the UE receives the notifications from the L-RAT BS or the U-RAT BS may be the same as or different from each other.

For example, the UE may receive a notification to use [Method 1-1] from the L-RAT BS and transfer basic information on the L-RAT BS and information on a periodic signal transmitted by the L-RAT BS to the U-RAT BS. Further, (simultaneously with this) the UE may receive the notification to use [Method 1-5] from the U-RAT BS and transmit a communication limit request to the L-RAT BS for transmission of the U-RAT BS, so as to limit transmission of the L-RAT BS in specific time and frequency resources and guarantee communication with the U-RAT BS.

The UE may report whether to support the combination of one or more of [Method 1-1] to [Method 1-6] to the L-RAT-based BS or the U-RAT-based BS through UE capability.

In another example, the UE may report that the combination of one or more of [Method 1-1] to [Method 1-6] can be supported to the L-RAT BS through UE capability. Further, (simultaneously with this) the UE may report that the combination of one or more of [Method 1-1] to [Method 1-6] can be supported to the U-RAT BS through UE capability. The UE capability reports which the UE reports to the L-RAT BS or the U-RAT BS may be the same as or different from each other.

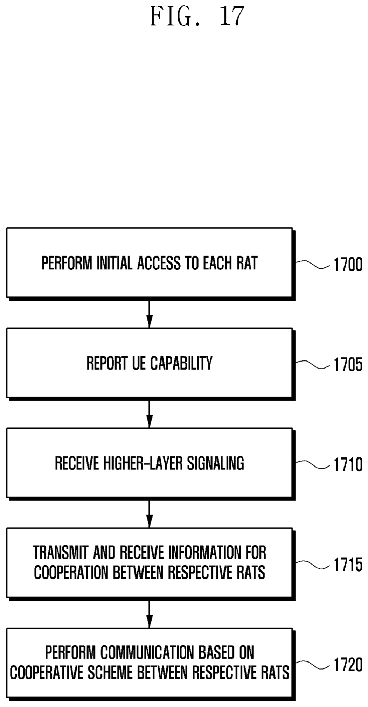

FIG. 17 is a diagram illustrating the operation of the UE for coexistence of multiple radio access technologies in the wireless communication system according to an embodiment of the disclosure. Each step in FIG. 17 may be omitted or the order thereof may be changed according to circumstances.

In step 1700, the UE may perform initial access to each RAT. For example, the UE may receive broadcast signals transmitted from the L-RAT BS and the U-RAT BS and perform an initial access procedure, based on the corresponding signals. The UE may perform the initial access procedure for the L-RAT BS, based on the broadcast signal transmitted/-broadcasted by the L-RAT BS. Further, the UE may perform the initial access procedure for the U-RAT BS, based on the broadcast signal transmitted/broadcasted by the U-RAT BS.

In step 1705, the UE may report UE capability for each RAT. Matters which can be reported through the corresponding UE capability may include information on whether a combination of one or more of [Method 1-1] to [Method 1-6] is supported and/or related information.

In step 1710, the UE may receive higher-layer signaling from the BS. At this time, the UE may receive higher-layer signaling from the L-RAT BS, the U-RAT BS, or the BSs corresponding to the two RATs. Higher-layer signaling which the UE can receive may include configuration information of the BS for the combination of one or more of [Method 1-1] to [Method 1-6] and/or configuration information related to the combination of one or more of [Method 1-1] to [Method 1-6].

In step 1715, the UE may transmit and receive information for cooperative communication between BS corresponding to respective RATs. For example, when the UE and BSs corresponding to respective RATs operate based on [Method 1-1], the UE may transfer information on periodic signals or broadcast signals transmitted by the BSs corresponding to respective RATs to the BSs corresponding to the respective RATs. Further, the BSs corresponding to the respective RATs may notify the corresponding UE of dynamic scheduling, based on information on a periodic signal or broadcast signal of another RAT transmitted by the UE.

In step 1720, the UE may perform communication based on a cooperative scheme between respective RATs. For example, when the UE and BSs corresponding to respective RATs operate based on [Method 1-4], the UE may simultaneously receive different beams which the BSs corresponding to the respective RATs simultaneously transmit by using different reception beams. That is, the UE may receive signals which the BSs corresponding to the respective RATs simultaneously transmit through different transmission beams by using different reception beams. Further, by using the same, the UE may measure the performance for the corresponding simultaneously received signals and report the same to the BSs corresponding to the respective RATs. The BSs corresponding to the respective RATs may transmit downlink signals to the corresponding UE by controlling simultaneous transmission beams (for example, different transmission beams), based on the report information.

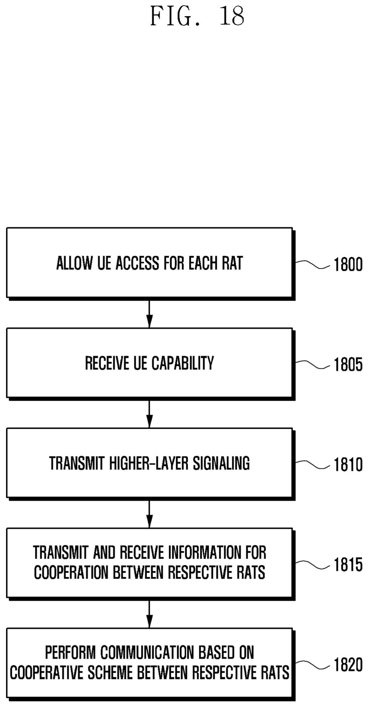

FIG. 18 is a diagram illustrating the operation of the BS for coexistence of multiple radio access technologies in the wireless communication system according to an embodiment of the disclosure. The BS of FIG. 18 may be the L-RAT BS or the U-RAT BS. Each step in FIG. 18 may be omitted or the order thereof may be changed according to circumstances.

In step 1800, the BS for each RAT may allow initial access to each RAT by the UE. For example, the L-RAT BS and the U-RAT BS may transmit broadcast signals and allow the UE receiving the same to access thereto through an initial access process. The L-RAT BS may transmit/broadcast a broadcast signal and allow the UE receiving the same to perform an initial access procedure to access thereto. The U-RAT BS may transmit/broadcast a broadcast signal and allow the UE receiving the same to perform an initial access procedure to access thereto.

In step 1805, the BS for each RAT may receive a UE capability report from the UE. At least one of the L-RAT BS or the U-RAT BS may receive the UE capability report from the UE. Matters which can be reported through the corresponding UE capability may include information on whether a combination of one or more of [Method 1-1] to [Method 1-6] is supported and/or relevant information.

In step 1810, the BS for each RAT may transmit higher-layer signaling to the UE. At this time, the L-RAT BS, the U-RAT BS, or the BSs corresponding to the two RATs may all transmit higher-layer signaling to the UE. At this time, higher-layer signaling which the BS can transmit may include configuration information of the BS for a combination of one or more of [Method 1-1] to [Method 1-6] and/or configuration information related to the combination of one or more of [Method 1-1] to [Method 1-6].

In step 1815, the BS for each RAT may transmit information for cooperative communication between BSs corresponding to respective RATs to the UE and receive the same. For example, when the UE and BSs corresponding to respective RATs operate based on [Method 1-1], the UE may transfer information on periodic signals or broadcast signals transmitted by the BSs corresponding to respective RATs to the BSs corresponding to the respective RATs. Further, the BSs corresponding to the respective RATs may notify the corresponding UE of dynamic scheduling, based on information on a periodic signal or broadcast signal of another RAT transmitted by the UE.

In step 1820, the BS for each RAT may perform communication based on a cooperative scheme between respective RATs with the UE. For example, when the UE and BSs corresponding to respective RATs operate based on [Method 1-4], the UE may simultaneously receive different beams which the BSs corresponding to the respective RATs simultaneously transmit by using different reception beams. That is, the BSs corresponding to the respective RATs may simultaneously transmit signals through different transmission beams, and the UE may receive the same by using different reception beams. Further, by using the same, the UE may measure the performance for the corresponding simultaneously received signals and report the same to the BSs corresponding to the respective RATs. The BSs corresponding to the respective RATs may transmit downlink signals to the corresponding UE by controlling simultaneous transmission beams (for example, different transmission beams), based on the report information.

<Second embodiment: various scenarios of coexistence method between multiple radio access technologies>

As an embodiment of the disclosure, various scenarios of a coexistence method between multiple radio access technologies (RATs) in the same frequency band is described. The embodiment may be combined and operated with other embodiments. The following description is only an example, and the disclosure is not limited to the following example.

For example, like in the first embodiment, the UE may be connected to the L-RAT BS in an outdoor space and may be connected to the U-RAT BS in the indoor space to perform communication. At this time, frequency bands in which the L-RAT BS and the U-RAT BS operate may be the same as each other. The L-RAT BS may be a BS operating in 5G NR, a dynamic spectrum sharing (DSS)-based BS operating both 5G NR and LTE, or a BS operating in the 6G RAT rather than 5G NR and LTE. When the L-RAT BS operating both 5G NR and LTE, a periodic signal or broadcast signal used by the L-RAT BS may be, for example, an SSB, a TRS, a search space, a control resource set, a periodic or/and semi-persistent CSI-RS, a paging PDCCH and PDSCH, a CRS, an MBSFN, or the like. The U-RAT BS may be a BS operating in an ultra wideband (UWB), a wireless local access network (WLAN), or the like, or a BS operating in 5G or 6G, or may include a plurality of BSs operating in respective RAT. At this time, the L-RAT and the U-RAT have no connected point and thus may not share information on each other. For example, the L-RAT may operate based on a BS installed by a communication operator, and the U-RAT may operate based on, for example, a self-installed BS by an individual as needed, which is not operated by the communication operator.

In addition to the situation of the first embodiment, the UE may be connected to two or more L-RAT BSs in the outdoor space, and may be connected to the U-RAT BS in the indoor space to perform communication. At this time, frequency bands in which the two or more L-RAT BSs and the U-RAT BS operate may be the same as each other. The L-RAT BS may be a BS operating in 5G NR, a dynamic spectrum sharing (DSS)-based BS operating both 5G NR and LTE, or a BS operating in the 6G RAT rather than 5G NR and LTE. The operation of the two or more L-RAT BSs may be a situation where 5G and LTE coexist, a situation where 5G and 6G RATs coexist, and a situation where 5G, LTE, and 6G coexist. In this case, the UE may perform an initial access to each RAT-based BS operating in 5G, LTE, and 6G, and transfer a periodic signal or broadcast signal of each RAT to another RAT, based on higher-layer signaling received from each BS. At this time, when the UE is connected to the RAT-based BS operating in 5G and 6G, the UE may consider that the combination of one or more of [Method 1-1] to [Method 1-6] mentioned in the first embodiment can be applied between L-RATs. The U-RAT BS may be a BS operating in the UWB and the WLAN, or a BS operating in 5G or 6G, or may include a plurality of BSs operating in each RAT. At this time, two or more L-RATs may have no connected point and may not share information on each other. Further, the two or more L-RATs and the U-RAT have no connected point and thus may not share information on each other. For example, the L-RAT may operate based on a BS installed by a communication operator, and the U-RAT may operate based on, for example, a self-installed B rather than operated by the communication operator.

In addition to the situation of the first embodiment, the UE may be connected to two or more L-RAT BSs in the outdoor space and connected to the U-RAT BS in the indoor space to perform communication. At this time, frequency bands in which the two or more L-RAT BSs and the U-RAT BS operate may be the same as each other. The L-RAT BS may be a BS operating in 5G NR, a dynamic spectrum sharing (DSS)-based BS operating both 5G NR and LTE, or a BS operating in the 6G RAT rather than 5G NR and LTE. The operation of the two or more L-RAT BSs may be an operation of the BS in a situation where 5G and LTE coexist, a situation where 5G and 6G RATs coexist, and/or a situation where 5G, LTE, and 6G coexist. In another method, some transmission beams used by a specific BS may operate based on the RAT corresponding to 5G NR, and the remaining transmission beams used by the corresponding BS may operate based on the RAT corresponding to 6G. In this case, one BS may support different sectors through different RATs and support all of the RATs corresponding to 5G or 6G for the UE existing in an area where different sectors overlap each other. That is, the UE existing in the corresponding area may perform access by using both the 5G and 6G $RAT_S$, and transmit and receive information from and to the BS corresponding to the corresponding RAT. Accordingly, the UE may consider that the combination of one or more of [Method 1-1] to [Method 1-6] mentioned in the first embodiment can be applied to different beams operating in 5G and 6G RATs (for example, different transmission beams used by the specific BS). The U-RAT BS may be a BS operating in the UWB and the WLAN or a BS operating in 5G or 6G, or may include a plurality of BSs operating in each RAT. At this time, the two or more L-RATs may operate while sharing information with each other within one BS, and have no connected point and thus may not share the information on each other. Further, the two or more L-RATs and the U-RAT have no connected point and thus may not share information on each other. For example, the L-RAT may operate based on a BS installed by a communication operator, and the U-RAT may operate based on a self-installed BS by an individual as needed.

In addition to the situation of the first embodiment, the UE may be connected to two or more L-RAT BSs in the outdoor space, and may be connected to the U-RAT BS in the indoor space to perform communication. At this time, frequency bands in which the two or more L-RAT BSs and the U-RAT BS operate may be the same as each other. The L-RAT BS may be a BS operating in 5G NR, a dynamic spectrum sharing (DSS)-based BS operating both 5G NR and LTE, or a BS operating in the 6G RAT rather than 5G NR and LTE. The operation of the two or more L-RAT BSs may be an operation of the BS in a situation where 5G and LTE coexist, a situation where 5G and 6G RATs coexist, and/or a situation where 5G, LTE, and 6G coexist. In another method, communication may be performed with the UE accessing the corresponding RAT using a waveform based on the RAT corresponding to 5G NR in some time resources used by one specific BS, and communication may be performed with the UE accessing the corresponding RAT using another waveform based on the RAT corresponding to 6G in the remaining time resources. In this case, one BS may support wireless communication to the same or different UEs through different RATs by using different time resources and share the form of a waveform based the RAT corresponding to 5G or 6G or information on time resources with each RAT so as to support easy interference control and multiple access. The U-RAT BS may be a BS operating in the UWB and the WLAN or a BS operating in 5G or 6G, or may include a plurality of BSs operating in each RAT. The two or more L-RATs may have no connected point and may not share information on each other or, when two different L-RATs may operate with divided time in one BS, the two L-RATs may share information therebetween. Further, the two or more L-RATs and the U-RAT have no connected point and thus may not share information on each other. For example, the L-RAT may operate based on a BS installed by a communication operator, and the U-RAT may operate based on, for example, a self-installed B rather than operated by the communication operator.

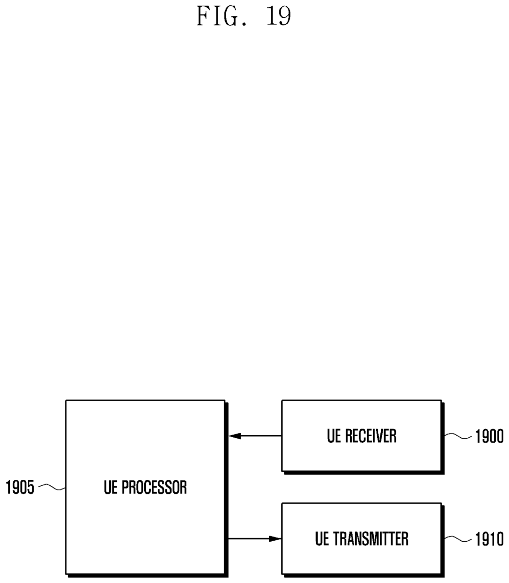

FIG. 19 is a diagram illustrating a structure of the UE in a wireless communication system according to an embodiment of the disclosure.

Referring to FIG. 19, the UE may include a transceiver including a UE receiver 1900 and a UE transmitter 1910, a memory (not shown), and a UE processor 1905 (or a UE controller or processor). According to the communication method of the UE, the UE transceiver 1900 and 1910, the memory, and the UE processor 1905 may operate. However, components of the UE are not limited to the above-described examples. For example, the UE may include more or fewer components than the above-described components. Further, the transceiver, the memory, and the processor may be implemented in the form of a single chip.

The transceiver may transmit and receive a signal to and from the BS. Here, the signal may include control information and data. To this end, the transceiver may be constituted by an RF transmitter configured to up-convert and amplify a frequency of a transmitted signal and an RF receiver configured to low-noise amplify a received signal and downconvert a frequency. However, this is only an example of the transceiver, and the components of the transceiver are not limited to the RF transmitter and the RF receiver.

Further, the transceiver may receive a signal through a radio channel, output the signal to the processor, and transmit the signal output from the processor through a radio channel.

The memory may store programs and data required for the operation of the UE. Further, the memory may store control information or data included in the signal transmitted and received by the UE. The memory may be constituted by storage media such as ROM, RAM, hard disc, CD-ROM, and DVD, or a combination of the storage media. The number of memories may be plural.

The processor may control a series of processes to allow the UE to operate according to the above-described embodiments. For example, the processor may control components of the UE to receive DCI constituted by two layers and simultaneously receive a plurality of PDSCHs. The number of processors may be plural, and the processor may perform a component control operation of the UE by executing programs stored in the memory.

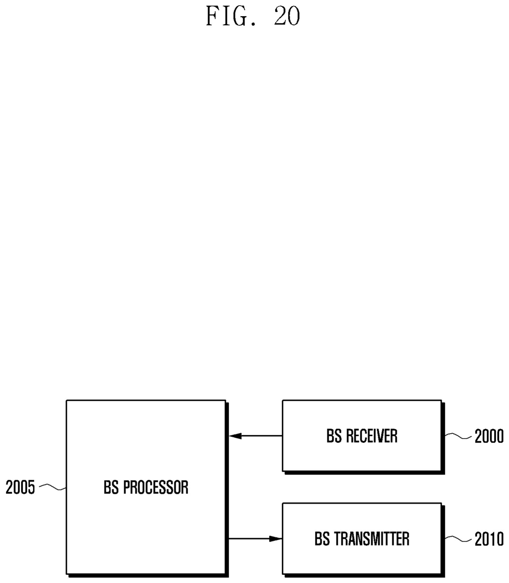

FIG. 20 is a diagram illustrating a structure of the BS in a wireless communication system according to an embodiment of the disclosure.

Referring to FIG. 20, the BS may include a transceiver including a BS receiver 2000 and a BS transmitter 2010, a memory (not shown), and a BS processor 2005 (or a BS controller or processor). According to the communication method of the BS, the BS transceiver 2000 and 2010, the memory, and the BS processor 2005 may operate. However, the components of the BS are not limited to the above described examples. For example, the BS may include more or fewer components than the above-described components. Also, the transceiver, the memory, and the processor may be implemented in the form of a single chip.

The transceiver may transmit and receive a signal to and from the UE. Here, the signal may include control information and data. To this end, the transceiver may be constituted by an RF transmitter configured to up-convert and amplify a frequency of a transmitted signal and an RF receiver configured to low-noise amplify a received signal and downconvert a frequency. However, this is only an example of the transceiver, and the components of the transceiver are not limited to the RF transmitter and the RF receiver.

The transceiver may receive a signal through a radio channel, output the signal to the processor, and transmit the signal output from the processor through a radio channel.

The memory stores programs and data required for the operation of the BS. Further, the memory may store control information or data included in the signal transmitted and received by the BS. The memory may be constituted by storage media such as ROM, RAM, hard disc, CD-ROM, and DVD, or a combination of the storage media. The number of memories may be plural.

The processor may control a series of processes to allow the BS to operate according to the embodiments of the disclosure. For example, the processor may configure DCI of two layers including allocation information for a plurality of PDSCHs and control each component of the BS to transmit the same. The number of processors may be plural, and the processor may perform an operation of controlling components of the BS by executing programs stored in the memory.

Methods pertaining to claims or embodiments of the disclosure may be implemented in the form of hardware, software, or a combination of hardware and software.

When the methods are implemented in software, a computer-readable storage medium for storing one or more programs (software modules) may be provided. The one or more programs stored in the computer-readable storage medium may be configured for execution by one or more processors within the electronic device. The one or more programs include instructions for allowing the electronic device to perform methods according to the claims of the disclosure or embodiments stated in specifications.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, the programs may be stored in a memory constituted by a combination of some or all thereof. A plurality of configuration memories may be included.

In addition, the programs may be stored in an attachable storage device which may access the electronic device through communication networks such as the Internet, Intranet, local area network (LAN), wide LAN (WLAN), and storage area network (SAN) or a combination thereof. The storage device may access a device that implements the embodiments of the disclosure through an external port. Further, a separate storage device in the communication network may access the device that implements the embodiments of the disclosure.

In the detailed embodiments of the disclosure, components included in the disclosure are expressed in a singular or plural form according to the presented detailed embodiments. However, the singular or plural expression is appropriate selection according to a situation presented for convenience of description, the disclosure is not limited to a singular or plural components, and even components expressed as the plural may be configured as the singular and even components expressed as the singular may be configured as the plural.

Meanwhile, embodiments of the disclosure disclosed in the specifications and drawings are specific examples presented to easily describe the technical content of the disclosure and help in understanding of the disclosure, and do not limit the scope of the disclosure. That is, it is obvious to those skilled in the art to which the disclosure belongs that other modification examples based on the technical spirit of the disclosure can be achieved. Further, respective embodiments may be combined and operate as necessary. For example, parts of one embodiment and another embodiment of the disclosure may be combined, and the BS and the UE may be operated. For example, parts of a first embodiment and a second embodiment of the disclosure may be combined, and the BS and the UE may be operated. Further, although the embodiments are presented based on the FDD LTE system, other modification examples based on technical spirit of the embodiments can be applied to other systems such as a TDD LTE system, or a 5G or NR system.

Meanwhile, the order of illustration in the drawings illustrating the method of the disclosure does not necessarily correspond to the order of execution, and the precedence relationship may be changed or executed in parallel.

Alternatively, the drawings illustrating the method of the disclosure may omit some components and include only some components within the scope that does not damage the essence of the disclosure.

Further, the method of the disclosure may be performed through a combination of some or all of the content included in each embodiment within the scope that does not damage the essence of the disclosure.

Various embodiments of the disclosure have been described. The description of the disclosure is for an example, and embodiments of the disclosure are not limited to the disclosed embodiments. It may be understood by those skilled in the art that embodiments of the disclosure can be easily modified in other detailed forms without changing the technical idea or necessary features of the disclosure. The scope of the disclosure is presented by the claims described below rather than the detailed description, and the meaning and scope of the claims and all changed or modified forms derived from the equivalent concept should be construed as being included in the scope of the disclosure.

**Claims**

1. A method performed by a terminal in a communication system, the method comprising:

   receiving information related to a first node from the first node;
   transmitting the information related to the first node to a second node; and
   receiving scheduling information from the second node, the scheduling information received from the second node being based on the information related to the first node,
   wherein the information related to the first node comprises information on a signal by the first node, and
   wherein time-frequency resources scheduled by the scheduling information received from the second node are scheduled not to overlap time-frequency resources for the signal by the first node.

2. The method of claim 1, comprising:

   receiving information related to the second node from the second node;
   transmitting the information related to the second node to the first node; and

receiving configuration information for a reference signal for channel state information from the first node, wherein the information related to the second node comprises information on a signal by the second node, and wherein time-frequency resources for the reference signal configured by the configuration information are based on time-frequency resources for the signal by the second node.

3. The method of claim 2, wherein time-frequency resources in the time-frequency resources for the reference signal which overlap the time-frequency resources for the signal by the second node are used for channel state information considering interference related to the second node,

wherein time-frequency resources in the time-frequency resources for the reference signal which do not overlap the time-frequency resources for the signal by the second node are used for channel state information which does not consider interference related to the second node, wherein the method comprises receiving scheduling information from the first node, the scheduling information received from the first node being based on the information related to the second node, and wherein time-frequency resources scheduled by the scheduling information received from the first node are scheduled not to overlap the time-frequency resources for the signal by the second node.

4. The method of claim 2, wherein the first node is based on a licensed band, and the second node is based on an unlicensed band,

wherein the signal by the first node comprises one or more of a periodic signal, a broadcast signal, and a semi-persistent signal by the first node, wherein the signal by the second node comprises one or more of a periodic signal, a broadcast signal, and a semi-persistent signal by the second node, wherein the information related to the first node further comprises one or more pieces of information on a bandwidth of the first node configured in the licensed band, identifier information of the first node, information related to a waveform of the first node, information on subcarrier spacing (SCS) of the first node, information on a bandwidth part of the first node configured in the licensed band, information on a transmission and reception point (TRP) of the first node, information related to discontinuous transmission (DTX) of the first node, information related to discontinuous transmission (DRX) of the first node, or information related to duplex of the first node, and wherein the information related to the second node further comprises one or more pieces of information on a bandwidth of the second node configured in the unlicensed band, identifier information of the second node, information related to a waveform of the second node, information on SCS of the second node, information on a bandwidth part of the second node configured in the unlicensed band, information on a TRP of the second node, information related to DTX of the second node, information related to DRX of the second node, or information related to duplex of the second node.

5. The method of claim 1, comprising, when the terminal reports a UE capability indicating that simultaneous reception based on a plurality of beams is possible, receiving a signal from the first node, based on a first beam among the plurality of beams and receiving a signal from the second node, based on a second beam among the plurality of beams while the signal is received based on the first beam, wherein the UE capability is reported to one or more of the first node or the second node.

6. A terminal in a communication system, the terminal comprising:

a transceiver; and
a processor connected to the transceiver,
wherein the processor is configured to:

receive information related to a first node from the first node;
transmit the information related to the first node to a second node; and
receive scheduling information from the second node, the scheduling information received from the second node being based on the information related to the first node,
wherein the information related to the first node comprises information on a signal by the first node, and
wherein time-frequency resources scheduled by the scheduling information received from the second node are scheduled not to overlap time-frequency resources for the signal by the first node.

7. The terminal of claim 6, wherein the processor is configured to:

receive information related to the second node from the second node;
transmit the information related to the second node to the first node; and
receive configuration information for a reference signal for channel state information from the first node,
wherein the information related to the second node comprises information on a signal by the second node, and
wherein time-frequency resources for the reference signal configured by the configuration information are based on time-frequency resources for the signal by the second node.

8. The terminal of claim 7, wherein time-frequency resources in the time-frequency resources for the reference signal which overlap the time-frequency resources for the signal by the second node are used for channel state information considering interference related to the second node,

wherein time-frequency resources in the time-frequency resources for the reference signal which do not overlap the time-frequency resources for the signal by the second node are used for channel state information which does not consider interference related to the second node,
wherein the processor is configured to receive scheduling information from the first node, the scheduling information received from the first node being based on the information related to the second node, and
wherein time-frequency resources scheduled by the scheduling information received from the first node are scheduled not to overlap the time-frequency resources for the signal by the second node.

9. The terminal of claim 7, wherein the first node is based on a licensed band, and the second node is based on an unlicensed band,

wherein the signal by the first node comprises one or more of a periodic signal, a broadcast signal, and a semi-persistent signal by the first node,
wherein the signal by the second node comprises one or more of a periodic signal, a broadcast signal, and a semi-persistent signal by the second node,
wherein the information related to the first node further comprises one or more pieces of information on a bandwidth of the first node configured in the licensed band, identifier information of the first node, information related to a waveform of the first node, information on subcarrier spacing (SCS) of the first node, information on a bandwidth part of the first node configured in the licensed band, information on a transmission and reception point (TRP) of the first node, information related to discontinuous transmission (DTX) of the first node, information related to discontinuous transmission (DRX) of the first node, or information related to duplex of the first node, and
wherein the information related to the second node further comprises one or more pieces of information on a bandwidth of the second node configured in the unlicensed band, identifier information of the second node, information related to a waveform of the second node, information on SCS of the second node, information on a bandwidth part of the second node configured in the unlicensed band, information on a TRP of the second node, information related to DTX of the second node, information related to DRX of the second node, or information related to duplex of the second node.

10. The terminal of claim 6, wherein the processor is configured to, when the terminal reports a UE capability indicating that simultaneous reception based on a plurality of beams is possible, receive a signal from the first node, based on a first beam among the plurality of beams and receive a signal from the second node, based on a second beam among the plurality of beams while the signal is received based on the first beam,
wherein the UE capability is reported to one or more of the first node or the second node.

11. A method performed by a first node in a communication system, the method comprising:

acquiring information related to the first node, the information related to the first node comprising information on a signal by the first node; and
transmitting the information related to the first node to a terminal,
wherein the information related to the first node is associated with scheduling information of a second node, and
wherein time-frequency resources scheduled by the scheduling information of the second node do not overlap time-frequency resources for the signal by the first node.

12. The method of claim 11, comprising:

receiving information related to the second node from the terminal;
acquiring configuration information for a reference signal for channel state information, based on the information related to the second node; and
transmitting the configuration information to the terminal.

13. The method of claim 12, wherein time-frequency resources in the time-frequency resources for the reference signal which overlap the time-frequency resources for the signal by the second node are configured for channel state information considering interference related to the second node,

wherein time-frequency resources in the time-frequency resources for the reference signal which do not overlap the time-frequency resources for the signal by the second node are configured for channel state information which does not consider interference related to the second node,
wherein the method comprises transmitting scheduling information to the terminal, the scheduling information transmitted by the first node being based on the information related to the second node, and
wherein time-frequency resources scheduled by the scheduling information transmitted by the first node are scheduled not to overlap the time-frequency resources for the signal by the second node.

14. A first node in a communication system, the first node comprising:

a transceiver; and
a processor connected to the transceiver,
wherein the processor is configured to:

acquire information related to the first node, the information related to the first node comprising information on a signal by the first node; and
transmit the information related to the first node to a terminal,
wherein the information related to the first node is associated with scheduling information of a second node, and
wherein time-frequency resources scheduled by the scheduling information of the second node do not overlap time-frequency resources for the signal by the first node.

15. The first node of claim 14, wherein the processor is configured to:

receive information related to the second node from the terminal;
acquire configuration information for a reference signal for channel state information, based on the information related to the second node; and
transmit the configuration information to the terminal.

FIG. 1

FIG. 2

FIG. 3

# FIG. 4

RECEIVE PDCCH INDICATING NEW UPLINK TRANSMISSION OR DOWNLINK TRANSMISSION (430)

405  (410)  405  (410)  405  (410)  405  (410)  405

time

Drx-onDurationTimer (415)

START OR RESTART drx-inactivityTimer (420)

(415)  (415)  (415)

drx-LongCycle (425)  (425)  (425)  (425)

ACTIVE TIME (405)

EP 4 694 469 A1

FIG. 5

SINGLE CELL LTE/NR (S00)

gNB
SDAP (S25) → PDCP (S30) → RLC (S35) → MAC (S40) → PHY (S45)

UE
PHY (S50) → MAC (S55) → RLC (S60) → PDCP (S65) → SDAP (S70)

CARRIER AGGREGATION (S10)

gNB
SDAP → PDCP → RLC → MAC → PHY ... PHY

UE
PHY ... PHY → MAC → RLC → PDCP → SDAP

DUAL CONNECTIVITY (S20)

SgNB
RLC → MAC → PHY
PHY → MAC → RLC

MgNB
SDAP → PDCP → RLC → MAC → PHY

UE
PHY → MAC → RLC → PDCP → SDAP

# FIG. 6

PERIOD
(605)

RATE MATCHING
RESOURCES
(602)

FREQUENCY-DOMAIN
ALLOCATION
(604)

TIME-DOMAIN
ALLOCATION
(603)

FREQUENCY

시간

SLOT#0

SLOT#1

SLOT#2

PDSCH
(601)

EP 4 694 469 A1

# FIG. 7

1. CELL-SPECIFIC SEMI-STATIC UL/DL CONFIGURATION (SIB) (710)

2. UE-SPECIFIC SEMI-STATIC UL/DL CONFIGURATION (DEDICATED RRC) (720)

3. UE-GROUP DYNAMIC UL/DL CONFIGURATION (DCI FORMAT 2_0) (730)

SLOT (701)

SYMBOL (702)

PERIODICITY (703)

NUMBER OF

NUMBER OF CONSECUTIVE DL SLOTS# (711)

NUMBER OF CONSECUTIVE DL SYMBOLS# (712)

NUMBER OF CONSECUTIVE UL SYMBOLS# (714)

NUMBER OF CONSECUTIVE UL SLOTS (713)

SLOT (721)

SLOT (722)

NUMBER OF CONSECUTIVE DL SYMBOLS# (723)

NUMBER OF CONSECUTIVE UL SYMBOLS# (724)

NUMBER OF CONSECUTIVE DL SYMBOLS# (725)

NUMBER OF CONSECUTIVE UL SYMBOLS# (726)

SLOT FORMAT INDICATOR (731)

SLOT FORMAT INDICATOR (732)

▨ : DOWNLINK RESOURCES (704)

▧ : FLEXIBLE RESOURCES (705)

▢ : UPLINK RESOURCES (706)

EP 4 694 469 A1

FIG. 8

TCI STATE #0
(800)

TCI STATE #1
(805)

TCI STATE #2
(810)

EP 4 694 469 A1

EP 4 694 469 A1

# FIG. 9

900

PDCCH
901

PDSCH
905

PUCCH
910

BAT
915

925 ⟵ 920 ⟶ 930

USE DCI FORMAT 1_1 OR 1_2 HAVING DL ALLOCATION

950

PDCCH
955

PUCCH
960

BAT
965

975 ⟵ 970 ⟶ 980

USE DCI FORMAT 1_1 OR 1_2 HAVING NO DL ALLOCATION

# FIG. 10

| | | | | | | | | |
|---|---|---|---|---|---|---|---|---|
| **R** | SERVING CELL ID | | | | | DL BWP ID | | OCTET 1 |
| R | R | R | R | R | R | UL BWP ID | | OCTET 2 |
| $P_1$ | $P_2$ | $P_3$ | $P_4$ | $P_5$ | $P_6$ | $P_7$ | $P_8$ | OCTET 3 |
| D/U | TCI STATE ID 1 | | | | | | | OCTET 4 |
| D/U | TCI STATE ID 2 | | | | | | | OCTET 5 |

. . .

| | | |
|---|---|---|
| D/U | TCI STATE ID N | OCTET N+3 |

# FIG. 11

(1100)

CSI-RS [1102]

SLOT 0 (1106)  SLOT 1 (1107)  SLOT 2 (1108)  SLOT 3 (1109)

[1101]

P D C C H

OFFSET (1103)

K2 (1104)

PUSCH (1105)

(1110)

CSI-RS [1112]

SLOT 0 (1116)  SLOT 1 (1117)  SLOT 2 (1118)  SLOT 3 (1119)

[1111]

P D C C H

OFFSET (1113)

K2 (1114)

PUSCH (1115)

FIG. 12

DURATION (1204)

FREQUENCY RESOURCES (1203)

UE BANDWIDTH (1210)

SLOT (1220)

CONTROL RESOURCE SET #1 (1201)

CONTROL RESOURCE SET #2 (1202)

FREQUENCY

TIME

FIG. 13

1 SYMBOL
(1301)

DMRS
(1305)

1 PRB
(1302)

CCE
(1304)

REG
(1303)

FIG. 14

FIG. 15

CONTROL INFORMATION FOR TRP #0 — DCI #0

CONTROL INFORMATION FOR TRP #1 — DCI #1

⋮           ⋮

CONTROL INFORMATION FOR TRP #(N-1) — DCI #(N-1)

CASE #1 (1500)

CONTROL INFORMATION FOR TRP #0 — DCI #0

CONTROL INFORMATION FOR TRP #1 — sDCI #0

⋮           ⋮

CONTROL INFORMATION FOR TRP #(N-1) — sDCI #(N-2)

CASE #2 (1505)

CONTROL INFORMATION FOR TRP #0 — DCI

CONTROL INFORMATION FOR TRP #1 — sDCI

⋮

CONTROL INFORMATION FOR TRP #(N-1)

CASE #3 (1510)

CONTROL INFORMATION FOR TRP #0

CONTROL INFORMATION FOR TRP #1 — Long DCI

⋮

CONTROL INFORMATION FOR TRP #(N-1)

CASE #4 (1515)

EP 4 694 469 A1

FIG. 16

# FIG. 17

```
┌─────────────────────────────────────┐
│   PERFORM INITIAL ACCESS TO EACH RAT │─── 1700
└─────────────────────────────────────┘
                  │
                  ▼
┌─────────────────────────────────────┐
│         REPORT UE CAPABILITY         │─── 1705
└─────────────────────────────────────┘
                  │
                  ▼
┌─────────────────────────────────────┐
│     RECEIVE HIGHER-LAYER SIGNALING   │─── 1710
└─────────────────────────────────────┘
                  │
                  ▼
┌─────────────────────────────────────┐
│   TRANSMIT AND RECEIVE INFORMATION FOR│─── 1715
│  COOPERATION BETWEEN RESPECTIVE RATS │
└─────────────────────────────────────┘
                  │
                  ▼
┌─────────────────────────────────────┐
│      PERFORM COMMUNICATION BASED ON  │─── 1720
│ COOPERATIVE SCHEME BETWEEN RESPECTIVE RATS│
└─────────────────────────────────────┘
```

# FIG. 18

```
┌─────────────────────────────────────┐
│     ALLOW UE ACCESS FOR EACH RAT     │⌐ 1800
└─────────────────────────────────────┘
                   │
                   ▼
┌─────────────────────────────────────┐
│         RECEIVE UE CAPABILITY        │⌐ 1805
└─────────────────────────────────────┘
                   │
                   ▼
┌─────────────────────────────────────┐
│      TRANSMIT HIGHER-LAYER SIGNALING │⌐ 1810
└─────────────────────────────────────┘
                   │
                   ▼
┌─────────────────────────────────────┐
│   TRANSMIT AND RECEIVE INFORMATION FOR │⌐ 1815
│  COOPERATION BETWEEN RESPECTIVE RATS  │
└─────────────────────────────────────┘
                   │
                   ▼
┌─────────────────────────────────────┐
│      PERFORM COMMUNICATION BASED ON   │⌐ 1820
│ COOPERATIVE SCHEME BETWEEN RESPECTIVE RATS │
└─────────────────────────────────────┘
```

FIG. 19

1905 〜 UE PROCESSOR

UE RECEIVER 〜 1900

UE TRANSMITTER 〜 1910

FIG. 20

2005 ~ BS PROCESSOR

BS RECEIVER ~ 2000

BS TRANSMITTER ~ 2010

**EP 4 694 469 A1**

## INTERNATIONAL SEARCH REPORT

| International application No. |
| --- |
| **PCT/KR2024/006011** |

**A. CLASSIFICATION OF SUBJECT MATTER**

**H04W 72/12**(2009.01)i; **H04W 72/23**(2023.01)i; **H04L 5/00**(2006.01)i; **H04W 8/24**(2009.01)i

According to International Patent Classification (IPC) or to both national classification and IPC

**B. FIELDS SEARCHED**

Minimum documentation searched (classification system followed by classification symbols)

H04W 72/12(2009.01); H04L 5/00(2006.01); H04W 72/04(2009.01); H04W 72/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: scheduling information, resource, non-overlapping, unlicensed band, licensed band

**C. DOCUMENTS CONSIDERED TO BE RELEVANT**

| Category* | Citation of document, with indication, where appropriate, of the relevant passages | Relevant to claim No. |
| --- | --- | --- |
| A | US 2023-0015378 A1 (QUALCOMM INCORPORATED) 19 January 2023 (2023-01-19)<br>See paragraphs [0233]-[0242]; and figures 17-18. | 1-15 |
| A | US 2021-0410140 A1 (QUALCOMM INCORPORATED) 30 December 2021 (2021-12-30)<br>See paragraphs [0233]-[0273]; and claim 1. | 1-15 |
| A | KR 10-2023-0021972 A (SAMSUNG ELECTRONICS CO., LTD.) 14 February 2023 (2023-02-14)<br>See paragraphs [0328]-[0339]; and figures 18-19. | 1-15 |
| A | US 2023-0093125 A1 (QUALCOMM INCORPORATED) 23 March 2023 (2023-03-23)<br>See paragraphs [0077]-[0079]; and figure 9. | 1-15 |
| A | SAMSUNG. Introduction of multi-carrier enhancements for NR. R1-2304196, 3GPP TSG RAN WG1 #112bis-e, e-Meeting. 27 April 2023.<br>See section 10.1. | 1-15 |

| ☐ Further documents are listed in the continuation of Box C. | ☑ See patent family annex. |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **05 August 2024** | **05 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/006011**

| Patent document cited in search report | | | Publication date (day/month/year) | Patent family member(s) | | | Publication date (day/month/year) |
|---|---|---|---|---|---|---|---|
| US | 2023-0015378 | A1 | 19 January 2023 | EP | 4367826 | A1 | 15 May 2024 |
| | | | | WO | 2023-283063 | A1 | 12 January 2023 |
| US | 2021-0410140 | A1 | 30 December 2021 | CN | 115836502 | A | 21 March 2023 |
| | | | | EP | 4173206 | A1 | 03 May 2023 |
| | | | | US | 11665680 | B2 | 30 May 2023 |
| | | | | WO | 2022-005565 | A1 | 06 January 2022 |
| KR | 10-2023-0021972 | A | 14 February 2023 | WO | 2023-014187 | A1 | 09 February 2023 |
| US | 2023-0093125 | A1 | 23 March 2023 | | None | | |

Form PCT/ISA/210 (patent family annex) (July 2022)